(19) Europäisches Patentamt
European Patent Office
Office européen des brevets

(11) **EP 3 854 914 A1**

(12) **EUROPEAN PATENT APPLICATION**
published in accordance with Art. 153(4) EPC

(43) Date of publication:
**28.07.2021  Bulletin 2021/30**

(21) Application number: **19863645.8**

(22) Date of filing: **12.09.2019**

(51) Int Cl.:
**C25B 15/02** (2021.01)          **C25B 9/08** (2006.01)
**C25B 13/02** (2006.01)

(86) International application number:
**PCT/JP2019/035847**

(87) International publication number:
**WO 2020/059623 (26.03.2020 Gazette 2020/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.09.2018  JP 2018177382**

(71) Applicant: **Asahi Kasei Kabushiki Kaisha**
**Tokyo 1000006 (JP)**

(72) Inventors:
• **FUNAKAWA, Akiyasu**
  **Tokyo 100-0006 (JP)**
• **MORIKAWA, Takuya**
  **Tokyo 100-0006 (JP)**
• **KADO, Yoshifumi**
  **Tokyo 100-0006 (JP)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **METHOD FOR MANUFACTURING ELECTROLYTIC CELL, LAMINATE, ELECTROLYTIC CELL, AND METHOD FOR OPERATING ELECTROLYTIC CELL**

(57)     A method for producing a new electrolyzer by incorporating a laminate having an electrode for electrolysis and a new membrane, or only a new membrane, into an existing electrolyzer having an anode, a cathode that is opposed to the anode, and a membrane arranged between the anode and the cathode, wherein
the new membrane used satisfies an As/Ai of more than 0.87 and less than 1.1,
wherein, with respect to an area of the new membrane corresponding to an area in frames of an anode side gasket and a cathode side gasket that are formed from frames opposite to each other in an electrolyzer,
Ai represents an area equalized by an equilibrium liquid in incorporation into an electrolyzer and As represents an area equalized by an aqueous solution after electrolyzer operation.

Fig.2

EP 3 854 914 A1

**Description**

Technical Field

The present invention relates to a method for producing an electrolyzer, a laminate, an electrolyzer, and a method for operating an electrolyzer.

Background Art

For electrolysis of an alkali metal chloride aqueous solution such as salt solution and electrolysis of water (hereinafter collectively referred to as "electrolysis"), methods by use of an electrolyzer including a membrane, more specifically an ion exchange membrane or microporous membrane have been employed.

This electrolyzer includes many electrolytic cells connected in series therein, in many cases. A membrane is interposed between each of electrolytic cell to perform electrolysis.

In an electrolytic cell, a cathode chamber including a cathode and an anode chamber including an anode are disposed back to back with a partition wall (back plate) interposed therebetween or via pressing by means of press pressure, bolt tightening, or the like.

Conventionally, the anode and the cathode for use in these electrolyzers are each fixed to the anode chamber or the cathode chamber of an electrolytic cell by a method such as welding and folding, and thereafter, stored or transported to customers.

Meanwhile, each membrane in a state of being singly wound around a vinyl chloride (VC) pipe is stored or transported to customers. Each customer arranges the electrolytic cell on the frame of an electrolyzer and interposes the membrane between electrolytic cells to assemble the electrolyzer. In this manner, electrolytic cells are produced, and an electrolyzer is assembled by each customer.

Patent Literatures 1 and 2 each disclose a structure formed by integrating a membrane and an electrode as a structure applicable to such an electrolyzer.

Citation List

Patent Literature

Patent Literature 1
Japanese Patent Laid-Open No. S58-048686
Patent Literature 2
Japanese Patent Laid-Open No. S55-148775

Summary of Invention

Technical Problem

When electrolysis operation is started and continued, each part deteriorates and electrolytic performance are lowered due to various factors, and each part is replaced at a certain time point.

The membrane can be relatively easily renewed by extracting from an electrolytic cell and inserting a new membrane.

In contrast, the anode and the cathode are fixed to the electrolytic cell, and thus, there is a problem of occurrence of an extremely complicated work on renewing the electrode, in which the electrolytic cell is removed from the electrolyzer and conveyed to a dedicated renewing plant, fixing such as welding is removed and the old electrode is striped off, then a new electrode is placed and fixed by a method such as welding, and the cell is conveyed to the electrolysis plant and placed back to the electrolyzer.

It is considered herein that the structure formed by integrating a membrane and an electrode via thermal compression described in Patent Literatures 1 and 2 is used for the renewing described above, but the structure, which can be produced at a laboratory level relatively easily, is not easily produced so as to be adapted to an electrolytic cell in an actual commercially-available size (e.g., 1.5 m in length, 3 m in width). Additionally, electrolytic performance (such as electrolytic voltage, current efficiency, common salt concentration in caustic soda) and durability are markedly poor.

In the case where the electrode and the membrane are wet and in contact with each other, a problem is that, for example, nickel is slightly eluted from a nickel substrate used in the cathode and such nickel eluted is deposited on the membrane to thereby deteriorate performance of the membrane.

The present inventors have focused on a state of a membrane in electrolyzer operation, and thus have found that the surface area of the membrane is varied in equalization by a predetermined liquid and a decrease in membrane performance due to deposition of nickel on the membrane can be prevented.

Patent Literatures 1 and 2 mention neither any variation in surface area of the membrane nor any change in membrane performance due to deposition of nickel on the membrane, and the techniques described in Patent Literatures 1 and 2 have the problems of risk in causing deterioration in durability due to an excessively large variation in surface area of the membrane and of risk in causing a decrease in membrane performance due to deposition of nickel on the membrane.

The present invention has been made in view of the above problems possessed by the conventional art and is intended to provide a method for producing an electrolyzer that can be improved in work efficiency during renewal of an electrode for electrolysis and a membrane in an electrolyzer and further can exhibit excellent electrolytic performance also after renewal.

Solution to Problem

As a result of the intensive studies to solve the above problems, the present inventors have found that an improvement in work efficiency of renewal of an electrode for electrolysis and a membrane is achieved and excellent electrolytic performance can be exhibited also after renewal, according to a method for producing a new electrolyzer by incorporating a laminate comprising an electrode for electrolysis and a new membrane, or a new membrane, into an existing electrolyzer comprising an anode, a cathode that is opposed to the anode, and a membrane arranged between the anode and the cathode, wherein the new membrane satisfies an As/Ai specified in a predetermined numerical range, wherein, with respect to an area of the new membrane corresponding to an area in frames of an anode side gasket and a cathode side gasket that are formed from frames opposite to each other in an electrolyzer, Ai represents an area equalized by an equilibrium liquid in incorporation into an electrolyzer and As represents an area equalized by an aqueous solution after electrolyzer operation, thereby having completed the present invention.

That is, the present invention is as follows.

[1] A method for producing a new electrolyzer by incorporating a laminate comprising an electrode for electrolysis and a new membrane, or only a new membrane, into an existing electrolyzer comprising an anode, a cathode that is opposed to the anode, and a membrane arranged between the anode and the cathode, wherein
the new membrane used satisfies an As/Ai of more than 0.87 and less than 1.1,
wherein, with respect to an area of the new membrane corresponding to an area in frames of an anode side gasket and a cathode side gasket that are formed from frames opposite to each other in an electrolyzer,
Ai represents an area equalized by an equilibrium liquid in incorporation into an electrolyzer and As represents an area equalized by an aqueous solution after electrolyzer operation.
[2] The method for producing the electrolyzer according to [1], comprising a step of forming a laminate comprising the electrode for electrolysis and the new membrane, wherein
the step of forming the laminate is performed outside the existing electrolyzer into which the laminate is to be incorporated, and
the laminate is integrally incorporated into the existing electrolyzer.
[3] The method for producing the electrolyzer according to [1] or [2], comprising a step of allowing the new membrane to be in an equilibrium state by the equilibrium liquid at a stage before incorporation of the laminate or new membrane into the existing electrolyzer, incorporating the laminate or new membrane into the existing electrolyzer, and bringing the resultant into contact with the laminate or new membrane by use of an aqueous solution different from the equilibrium liquid, after electrolyzer operation.
[4] The method for producing the electrolyzer according to any one of [1] to [3], wherein the equilibrium liquid is a 0.00001 to 25 mol/L NaOH aqueous solution.
[5] The method for producing the electrolyzer according to any one of [1] to [3], wherein the equilibrium liquid is a 0.04 to 1.5 mol/L $NaHCO_3$ aqueous solution.
[6] The method for producing the electrolyzer according to any one of [1] to [5], wherein the aqueous solution is pure water and a temperature of the pure water is 15 to 65°C.
[7] The method for producing the electrolyzer according to any one of [1] to [6], comprising a step of selecting the new membrane that satisfies an As/Ai of more than 0.87 and less than 1.1.
[8] A laminate for use in the method for producing an electrolyzer according to any one of [1] to [7], comprising an electrode for electrolysis and a new membrane, wherein
the new membrane satisfies an As/Ai of more than 0.87 and less than 1.1,
wherein, with respect to an area of the new membrane corresponding to an area in frames of an anode side gasket and a cathode side gasket that are formed from frames opposite to each other in an electrolyzer,
Ai represents an area equalized by an equilibrium liquid in incorporation into an electrolyzer and As represents an area equalized by an aqueous solution after electrolyzer operation.

[9] An electrolyzer comprising

an anode,

an anode frame that supports the anode,

an anode side gasket that is arranged on the anode frame,

a cathode that is opposed to the anode,

a cathode frame that supports the cathode,

a cathode side gasket that is arranged on the cathode frame and is opposed to the anode side gasket, and

a laminate comprising an electrode for electrolysis and a membrane, wherein

the membrane satisfies an As/Ai of more than 0.87 and less than 1.1,

wherein, with respect to an area of the membrane corresponding to an area in frames of the anode side and cathode side gaskets,

Ai represents an area equalized by an equilibrium liquid in incorporation of the laminate into an electrolyzer and As represents an area equalized by an aqueous solution after electrolyzer operation.

[10] A method for operating an electrolyzer comprising

an anode,

an anode frame that supports the anode,

an anode side gasket that is arranged on the anode frame,

a cathode that is opposed to the anode,

a cathode frame that supports the cathode,

a cathode side gasket that is arranged on the cathode frame and is opposed to the anode side gasket, and

a laminate comprising an electrode for electrolysis and a membrane, or a membrane arranged between the anode and the cathode, the method comprising

a step of allowing a membrane for renewal to be in an equilibrium state by an equilibrium liquid that is a 0.00001 to 25 mol/L NaOH aqueous solution or a 0.04 to 1.5 mol/L $NaHCO_3$ aqueous solution,

a step of incorporating the membrane or laminate that is allowed to be in an equilibrium state by the equilibrium liquid, into an electrolyzer and sandwiching and fixing the resultant between the anode side gasket and the cathode side gasket, and

a step of operating an electrolyzer and washing the membrane by an aqueous solution different from the equilibrium liquid, after electrolyzer operation, to provide an equilibrium state.

[11] A method for operating an electrolyzer comprising

an anode,

an anode frame that supports the anode,

an anode side gasket that is arranged on the anode frame,

a cathode that is opposed to the anode,

a cathode frame that supports the cathode,

a cathode side gasket that is arranged on the cathode frame and is opposed to the anode side gasket, and

a membrane arranged between the anode and the cathode, the method comprising

a step of allowing a membrane for renewal to be in an equilibrium state by an equilibrium liquid,

a step of incorporating the membrane or a laminate of the membrane and an electrode for electrolysis stacked, which is allowed in an equilibrium state by the equilibrium liquid, into an electrolyzer and sandwiching and fixing the resultant between the anode side gasket and the cathode side gasket, and

a step of operating an electrolyzer and allowing the membrane to be in an equilibrium state by an aqueous solution, after electrolyzer operation, wherein

As/Ai is more than 0.87 and less than 1.1,

wherein, with respect to an area of the membrane corresponding to an area in frames of the anode side and cathode side gaskets corresponding to each other in the electrolyzer,

Ai represents an area equalized by the equilibrium liquid in incorporation into the electrolyzer and

As represents an area equalized by the aqueous solution after electrolyzer operation.


Advantageous Effects of Invention


According to the method for producing an electrolyzer of the present invention, it is possible to enhance the work efficiency during renewal of an electrode for electrolysis and a membrane in an electrolyzer, and further to exhibit excellent electrolytic performance also after renewal.

Brief Description of Drawings

[Figure 1] Figure 1 illustrates a cross-sectional schematic view of an electrolytic cell.
[Figure 2] Figure 2 illustrates a cross-sectional schematic view showing a state of two electrolytic cells connected in series.
[Figure 3] Figure 3 illustrates a schematic view of an electrolyzer.
[Figure 4] Figure 4 illustrates a schematic perspective view showing a step of assembling the electrolyzer.
[Figure 5] Figure 5 illustrates a cross-sectional schematic view of a reverse current absorber that can be included in the electrolytic cell.
[Figure 6] Figure 6 illustrates a cross-sectional schematic view of an electrode for electrolysis in one embodiment of the present invention.
[Figure 7] Figure 7 illustrates a cross-sectional schematic view illustrating one embodiment of an ion exchange membrane.
[Figure 8] Figure 8 illustrates a schematic view for illustrating the aperture ratio of reinforcement core materials constituting the ion exchange membrane.
[Figure 9] Figure 9(A) illustrates a schematic view before continuous hole formation, for illustrating a method for forming the continuous hole of the ion exchange membrane.
Figure 9(B) illustrates a schematic view after continuous hole formation, for illustrating a method for forming the continuous hole on the ion exchange membrane.

Description of Embodiments

Hereinbelow, embodiments of the present invention (hereinbelow, may be referred to as the present embodiments) will be described in detail, with reference to drawings as required.
The embodiments below are illustration for explaining the present invention, and the present invention is not limited to the contents below.
The accompanying drawings illustrate one example of the embodiments, and embodiments should not be construed to be limited thereto.
The present invention may be appropriately modified and carried out within the spirit thereof. In the drawings, positional relations such as top, bottom, left, and right are based on the positional relations shown in the drawing unless otherwise noted. The dimensions and ratios in the drawings are not limited to those shown.

[Method for producing electrolyzer]

A method for producing an electrolyzer of the present embodiment is a method for producing a new electrolyzer by incorporating a laminate comprising an electrode for electrolysis and a new membrane, or only a new membrane, into an existing electrolyzer comprising an anode, a cathode that is opposed to the anode, and a membrane arranged between the anode and the cathode, wherein the new membrane used here satisfies an As/Ai of more than 0.87 and less than 1.1, wherein, with respect to an area of the new membrane corresponding to an area in frames of an anode side gasket and a cathode side gasket that are formed from frames opposite to each other in an electrolyzer, Ai represents an area equalized by an equilibrium liquid in incorporation into an electrolyzer and As represents an area equalized by an aqueous solution after electrolyzer operation.
The "in incorporation into an electrolyzer" has the same meaning as the "during incorporation of a membrane into an electrolyzer", and the "after electrolyzer operation" refers to a state after a membrane is incorporated into an electrolyzer, and includes all a step of filling an electrolyte solution, a step of allowing an electric current to pass, a step of stopping an electric current, and a step of replacing an electrolyte solution with a safe washing liquid for washing.
According to the method for producing an electrolyzer of the present embodiment, a member in an electrolyzer can be renewed by exchanging a laminate of an electrode for electrolysis and a membrane, or only a membrane, and thus, in particular, in the case of renewal by the laminate, the work efficiency during renewal of the member in an electrolyzer can be improved without complicated work including removal and conveyance of an electrolytic cell, removal of an old electrode, placement/fixing of a new electrode, and conveyance/placement on an electrolyzer, and further excellent electrolytic performance can be exhibited also after renewal.
Such renewal is made by a membrane which satisfies an As/Ai in a predetermined numerical range wherein Ai represents an area equalized by an equilibrium liquid in incorporation of the membrane into an electrolyzer and As represents an area equalized by an aqueous solution after electrolyzer operation, from the finding that a dimension, i.e., a surface area is changed depending on the type of a liquid that allows the membrane to be in an equilibrium state, and the temperature environment.

Thus, the difference in swelling or shrinkage state of the membrane due to each equilibrium operation can be reduced, the influence of swelling or shrinkage of the membrane on each member in the electrolyzer can be reduced, an enhancement in durability of the membrane by itself can also be achieved, and excellent electrolytic performance can be exhibited also after renewal.

In the present embodiment, the existing electrolyzer comprises an anode, a cathode that is opposed to the anode, and a membrane arranged between the anode and the cathode.

The existing electrolyzer is not particularly limited as long as it comprises the above constituent members, and known various configurations can be employed.

The anode in the existing electrolyzer substantially serves as a feed conductor when incorporates a laminate comprising an electrode for electrolysis and a new membrane and thus is in a state of being in contact with the electrode for electrolysis, and the anode by itself serves as an anode when is not in contact with any electrode for electrolysis.

Similarly, the cathode in the existing electrolyzer substantially serves as a feed conductor when incorporates a laminate comprising an electrode for electrolysis and a new membrane and thus is in a state of being in contact with the electrode for electrolysis, and the cathode by itself serves as a cathode when is not in contact with any electrode for electrolysis. Here, the feed conductor means a degraded electrode (i.e., existing electrode), an electrode having no catalyst coating, and the like.

In the present embodiment, the new electrolyzer further comprises, in addition to the member serving as the anode or the cathode in the existing electrolyzer, a laminate comprising an electrode for electrolysis and a new membrane, or a new membrane.

That is, the "electrode for electrolysis, constituting the laminate" arranged on production of a new electrolyzer serves as the anode or cathode and is separate from the cathode and anode in the existing electrolyzer.

In the present embodiment, even in the case where the electrolytic performance of the anode and/or cathode has deteriorated in association with operation of the existing electrolyzer, exchange with an electrode for electrolysis constituting a separate laminate enables the characteristics of the anode and/or cathode to be renewed.

Also in the case where a new membrane constituting a laminate, or a membrane is singly renewed, such a new membrane is arranged in combination, and thus, the characteristics of the membrane which has deteriorated in association with operation can be renewed simultaneously.

"Renewing the characteristics" referred to herein means to have characteristics comparable to the initial characteristics possessed by the existing electrolyzer before being operated or to have characteristics higher than the initial characteristics.

In the present embodiment, the existing electrolyzer is assumed to be an "electrolyzer that has been already operated", and the new electrolyzer is assumed to be an electrolyzer into which the "laminate or new membrane" in the present embodiment is incorporated.

That is, arrangement of the laminate or new membrane in the present embodiment in the existing electrolyzer provides a "new electrolyzer".

Hereinafter, a case of performing common salt electrolysis by using an ion exchange membrane as the membrane is taken as an example, and one embodiment of the electrolyzer will be described in detail.

The electrolyzer of the present embodiment is not limited to common salt electrolysis, and can be used in various applications of, for example, water electrolysis and fuel cells.

Herein, unless otherwise specified, "the electrolyzer in the present embodiment" is explained as incorporating both "the existing electrolyzer in the present embodiment" and "the new electrolyzer in the present embodiment".

The membrane in the existing electrolyzer and the new membrane can be similar to each other in terms of the materials, forms, physical properties, and the like.

Accordingly, unless otherwise specified, there is herein described under the assumption that "the electrode for electrolysis in the present embodiment" is explained as incorporating "the electrode for electrolysis renewed as the laminate", "the membrane in the present embodiment" is explained as incorporating "the new membrane renewed as the laminate or singly", and "the laminate in the present embodiment" is explained as incorporating "the laminate comprising the new membrane and the electrode for electrolysis".

[Electrolytic cell]

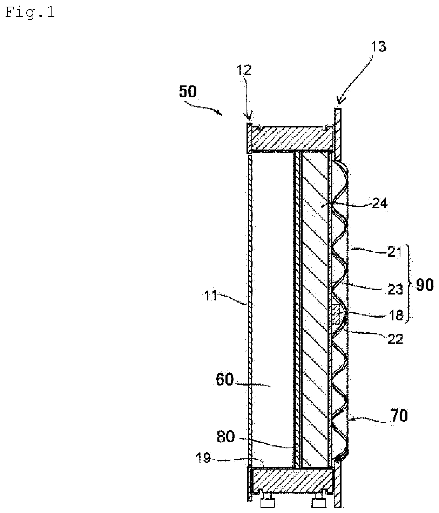

First, the electrolytic cell, which can be used as a constituent unit of the electrolyzer in the present embodiment, will be described. Figure 1 illustrates a cross-sectional view of an electrolytic cell 50.

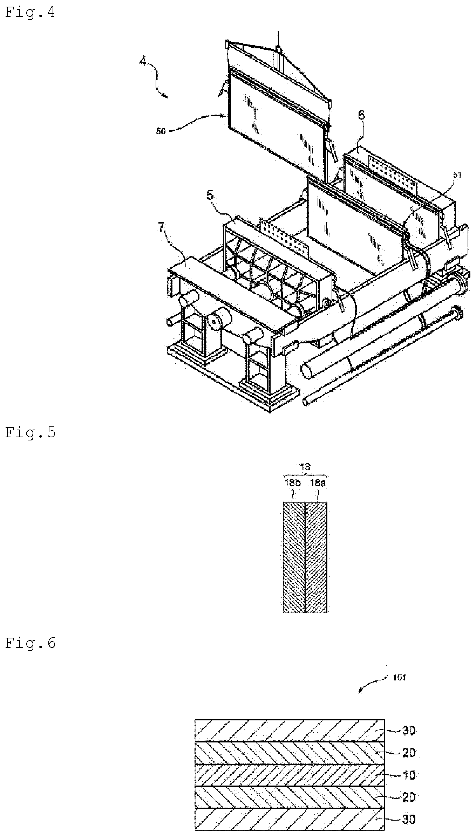

The electrolytic cell 50 comprises an anode chamber 60, a cathode chamber 70, a partition wall 80 placed between the anode chamber 60 and the cathode chamber 70, an anode 11 placed in the anode chamber 60, and a cathode 21 placed in the cathode chamber 70. As required, the electrolytic cell 50 has a substrate 18a and a reverse current absorbing layer 18b formed on the substrate 18a and may comprise a reverse current absorber 18 placed in the cathode chamber. The anode 11 and the cathode 21 belonging to the electrolytic cell 50 are electrically connected to each other. In other words, the electrolytic cell 50 comprises the following cathode structure. The cathode structure 90 comprises the cathode chamber 70, the cathode 21 placed in the cathode chamber 70, and the reverse current absorber 18 placed in the cathode chamber 70, the reverse current absorber 18 has the substrate 18a and the reverse current absorbing layer 18b formed on the substrate 18a, as shown in Figure 5, and the cathode 21 and the reverse current absorbing layer 18b are electrically connected. The cathode chamber 70 further has a collector 23, a support 24 supporting the collector, and a metal elastic body 22. The metal elastic body 22 is placed between the collector 23 and the cathode 21. The support 24 is placed between the collector 23 and the partition wall 80. The collector 23 is electrically connected to the cathode 21 via the metal elastic body 22. The partition wall 80 is electrically connected to the collector 23 via the support 24. Accordingly, the partition wall 80, the support 24, the collector 23, the metal elastic body 22, and the cathode 21 are electrically connected. The cathode 21 and the reverse current absorbing layer 18b are electrically connected. The cathode 21 and the reverse current absorbing layer may be directly connected or may be indirectly connected via the collector, the support, the metal elastic body, the partition wall, or the like. The entire surface of the cathode 21 is preferably covered with a catalyst layer for reduction reaction. The form of electrical connection may be a form in which the partition wall 80 and the support 24, the support 24 and the collector 23, and the collector 23 and the metal elastic body 22 are each directly attached and the cathode 21 is laminated on the metal elastic body 22. Examples of a method for directly attaching these constituent members to one another include welding and the like. Alternatively, the reverse current absorber 18, the cathode 21, and the collector 23 may be collectively referred to as a cathode structure 90.

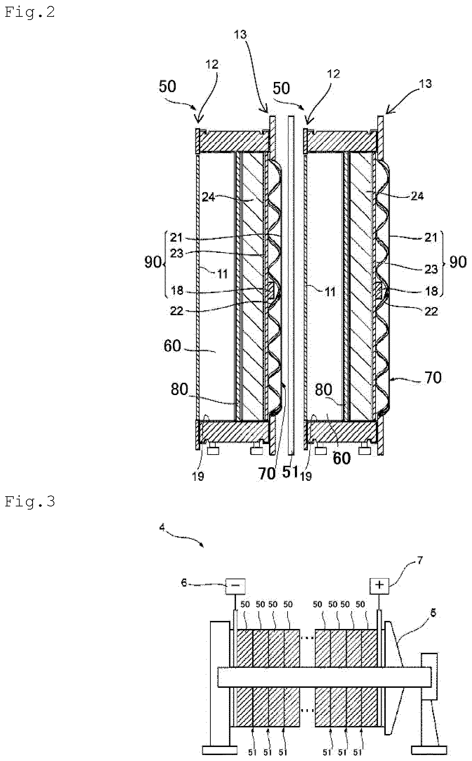

Figure 2 illustrates a cross-sectional view of two electrolytic cells 50 that are adjacent in an electrolyzer 4. Figure 3 shows an electrolyzer 4. Figure 4 shows a step of assembling an electrolyzer 4.

As shown in Figure 2, an electrolytic cell 50, a cation exchange membrane 51, and an electrolytic cell 50 are arranged in series in the order mentioned. The cation exchange membrane 51 is arranged between the anode chamber of one electrolytic cell 50 among the two electrolytic cells that are adjacent in the electrolyzer and the cathode chamber of the other electrolytic cell 50. That is, the anode chamber 60 of the electrolytic cell 50 and the cathode chamber 70 of the electrolytic cell 50 adjacent thereto is separated by the cation exchange membrane 51.

As shown in Figure 3, the electrolyzer 4 is composed of a plurality of electrolytic cells 50 connected in series via the cation exchange membrane 51. That is, the electrolyzer 4 is a bipolar electrolyzer comprising the plurality of electrolytic cells 50 arranged in series and cation exchange membranes 51 each arranged between adjacent electrolytic cells 50.

As shown in Figure 4, the electrolyzer 4 is assembled by arranging the plurality of electrolytic cells 50 in series via the ion exchange membrane 51 and coupling the cells by means of a press device 5.

The electrolyzer 4 has an anode terminal 7 and a cathode terminal 6 to be connected to a power supply. The anode 11 of the electrolytic cell 50 located at farthest end among the plurality of electrolytic cells 50 coupled in series in the electrolyzer 4 is electrically connected to the anode terminal 7. The cathode 21 of the electrolytic cell located at the end opposite to the anode terminal 7 among the plurality of electrolytic cells 50 coupled in series in the electrolyzer 4 is electrically connected to the cathode terminal 6. The electric current during electrolysis flows from the side of the anode terminal 7, through the anode and cathode of each electrolytic cell 50, toward the cathode terminal 6. At the both ends of the coupled electrolytic cells 50, an electrolytic cell having an anode chamber only (anode terminal cell) and an electrolytic cell having a cathode chamber only (cathode terminal cell) may be arranged. In this case, the anode terminal 7 is connected to the anode terminal cell arranged at the one end, and the cathode terminal 6 is connected to the cathode terminal cell arranged at the other end.

In the case of electrolyzing brine, brine is supplied to each anode chamber 60, and pure water or a low-concentration sodium hydroxide aqueous solution is supplied to each cathode chamber 70. Each liquid is supplied from an electrolyte solution supply pipe (not shown in Figure), through an electrolyte solution supply hose (not shown in Figure), to each electrolytic cell 50. The electrolyte solution and products from electrolysis are recovered from an electrolyte solution recovery pipe (not shown in Figure). During electrolysis, sodium ions in the brine migrate from the anode chamber 60 of the one electrolytic cell 50, through the ion exchange membrane 51, to the cathode chamber 70 of the adjacent electrolytic cell 50. Thus, the electric current during electrolysis flows in the direction in which the electrolytic cells 50 are coupled in series. That is, the electric current flows, through the cation exchange membrane 51, from the anode chamber 60 toward the cathode chamber 70. As the brine is electrolyzed, chlorine gas is generated on the side of the anode 11, and sodium hydroxide (solute) and hydrogen gas are generated on the side of the cathode 21.

(Anode chamber)

The anode chamber 60 has the anode 11 or anode feed conductor 11. The feed conductor herein referred to means a degraded electrode (i.e., existing electrode), an electrode having no catalyst coating, and the like. When the electrode for electrolysis in the present embodiment is inserted to the anode side, 11 serves as the anode feed conductor. When the electrode for electrolysis in the present embodiment is not inserted to the anode side, 11 serves as the anode.

The anode chamber 60 has an anode-side electrolyte solution supply unit that supplies an electrolyte solution to the anode chamber 60, a baffle plate that is arranged above the anode-side electrolyte solution supply unit so as to be substantially parallel or oblique to the partition wall 80, and an anode-side gas liquid separation unit arranged above the baffle plate to separate gas from the electrolyte solution including the gas mixed.

(Anode)

When the electrode for electrolysis in the present embodiment is not inserted into the anode side, the anode 11 is provided in the frame (i.e., anode frame) of the anode chamber 60. As the anode 11, a metal electrode such as so-called DSA(R) can be used. DSA is an electrode including a titanium substrate of which surface is covered with an oxide comprising ruthenium, iridium, and titanium as components.
As the form, any of a perforated metal, nonwoven fabric, foamed metal, expanded metal, metal porous foil formed by electroforming, so-called woven mesh produced by knitting metal lines, and the like can be used.

(Anode feed conductor)

When the electrode for electrolysis in the present embodiment is inserted to the anode side, the anode feed conductor 11 is provided in the frame of the anode chamber 60. As the anode feed conductor 11, a metal electrode such as so-called DSA(R) can be used, and titanium having no catalyst coating can be also used. Alternatively, DSA having a thinner catalyst coating can be also used. Further, a used anode can be also used.
As the form, any of a perforated metal, nonwoven fabric, foamed metal, expanded metal, metal porous foil formed by electroforming, so-called woven mesh produced by knitting metal lines, and the like can be used.

(Anode-side electrolyte solution supply unit)

The anode-side electrolyte solution supply unit, which supplies the electrolyte solution to the anode chamber 60, is connected to the electrolyte solution supply pipe. The anode-side electrolyte solution supply unit is preferably arranged below the anode chamber 60. As the anode-side electrolyte solution supply unit, for example, a pipe on the surface of which aperture portions are formed (dispersion pipe) and the like can be used. Such a pipe is more preferably arranged along the surface of the anode 11 and parallel to the bottom 19 of the electrolytic cell. This pipe is connected to an electrolyte solution supply pipe (liquid supply nozzle) that supplies the electrolyte solution into the electrolytic cell 50. The electrolyte solution supplied from the liquid supply nozzle is conveyed with a pipe into the electrolytic cell 50 and supplied from the aperture portions provided on the surface of the pipe to inside the anode chamber 60. Arranging the pipe along the surface of the anode 11 and parallel to the bottom 19 of the electrolytic cell is preferable because the electrolyte solution can be uniformly supplied to inside the anode chamber 60

(Anode-side gas liquid separation unit)

The anode-side gas liquid separation unit is preferably arranged above the baffle plate. The anode-side gas liquid separation unit has a function of separating produced gas such as chlorine gas from the electrolyte solution during electrolysis. Unless otherwise specified, above means the upper direction in the electrolytic cell 50 in Figure 1 and below means the lower direction in the electrolytic cell 50 in Figure 1.
During electrolysis, produced gas generated in the electrolytic cell 50 and the electrolyte solution form a mixed phase (gas-liquid mixed phase), which is then emitted out of the system. Subsequently, pressure fluctuations inside the electrolytic cell 50 cause vibration, which may result in physical damage of the ion exchange membrane. In order to prevent this event, the electrolytic cell 50 in the present embodiment is preferably provided with an anode-side gas liquid separation unit to separate the gas from the liquid. The anode-side gas liquid separation unit is preferably provided with a defoaming plate to eliminate bubbles. When the gas-liquid mixed phase flow passes through the defoaming plate, bubbles burst to thereby enable the electrolyte solution and the gas to be separated. As a result, vibration during electrolysis can be prevented.

(Baffle plate)

The baffle plate is preferably arranged above the anode-side electrolyte solution supply unit and arranged substantially in parallel with or obliquely to the partition wall 80. The baffle plate is a partition plate that controls the flow of the electrolyte solution in the anode chamber 60. When the baffle plate is provided, it is possible to cause the electrolyte solution (brine or the like) to circulate internally in the anode chamber 60 to thereby make the concentration uniform. In order to cause internal circulation, the baffle plate is preferably arranged so as to separate the space in proximity to the anode 11 from the space in proximity to the partition wall 80. From such a viewpoint, the baffle plate is preferably placed so as to be opposed to the surface of the anode 11 and to the surface of the partition wall 80. In the space in proximity to the anode partitioned by the baffle plate, as electrolysis proceeds, the electrolyte solution concentration (brine concentration) is lowered, and produced gas such as chlorine gas is generated. This results in a difference in the gas-liquid specific gravity between the space in proximity to anode 11 and the space in proximity to the partition wall 80 partitioned by the baffle plate. By use of the difference, it is possible to promote the internal circulation of the electrolyte solution in the anode chamber 60 to thereby make the concentration distribution of the electrolyte solution in the anode chamber 60 more uniform.

Although not shown in Figure 1, a collector may be additionally provided inside the anode chamber 60. The material and configuration of such a collector may be the same as those of the collector of the cathode chamber mentioned below. In the anode chamber 60, the anode 11 per se may also serve as the collector.

(Partition wall)

The partition wall 80 is arranged between the anode chamber 60 and the cathode chamber 70. The partition wall 80 may be referred to as a separator, and the anode chamber 60 and the cathode chamber 70 are partitioned by the partition wall 80. As the partition wall 80, one known as a separator for electrolysis can be used, and an example thereof includes a partition wall formed by welding a plate comprising nickel to the cathode side and a plate comprising titanium to the anode side.

(Cathode chamber)

In the cathode chamber 70, when the electrode for electrolysis in the present embodiment is inserted to the cathode side, 21 serves as a cathode feed conductor. When the electrode for electrolysis in the present embodiment is not inserted to the cathode side, 21 serves as a cathode. When a reverse current absorber 18 is included, the cathode or cathode feed conductor 21 is electrically connected to the reverse current absorber 18. The cathode chamber 70, similarly to the anode chamber 60, preferably has a cathode-side electrolyte solution supply unit and a cathode-side gas liquid separation unit. Among the components constituting the cathode chamber 70, components similar to those constituting the anode chamber 60 will be not described.

(Cathode)

When the electrode for electrolysis in the present embodiment is not inserted to the cathode side, a cathode 21 is provided in the frame (i.e., cathode frame) of the cathode chamber 70. The cathode 21 preferably has a nickel substrate and a catalyst layer that covers the nickel substrate. Examples of the components of the catalyst layer on the nickel substrate include metals such as Ru, C, Si, P, S, Al, Ti, V, Cr, Mn, Fe, Co, Ni, Cu, Zn, Y, Zr, Nb, Mo, Rh, Pd, Ag, Cd, In, Sn, Ta, W, Re, Os, Ir, Pt, Au, Hg, Pb, Bi, La, Ce, Pr, Nd, Pm, Sm, Eu, Gd, Tb, Dy, Ho, Er, Tm, Yb, and Lu, and oxides and hydroxides of the metals. Examples of the method for forming the catalyst layer include plating, alloy plating, dispersion/composite plating, CVD, PVD, pyrolysis, and spraying. These methods may be used in combination. The catalyst layer may have a plurality of layers and a plurality of elements, as required. The cathode 21 may be subjected to a reduction treatment, as required. As the substrate of the cathode 21, nickel, nickel alloys, and nickel-plated iron or stainless may be used.

As the form, any of a perforated metal, nonwoven fabric, foamed metal, expanded metal, metal porous foil formed by electroforming, so-called woven mesh produced by knitting metal lines, and the like can be used.

(Cathode feed conductor)

When the electrode for electrolysis in the present embodiment is inserted to the cathode side, a cathode feed conductor 21 is provided in the frame of the cathode chamber 70. The cathode feed conductor 21 may be covered with a catalytic component. The catalytic component may be a component that is originally used as the cathode and remains. Examples of the components of the catalyst layer include metals such as Ru, C, Si, P, S, Al, Ti, V, Cr, Mn, Fe, Co, Ni, Cu, Zn, Y, Zr, Nb, Mo, Rh, Pd, Ag, Cd, In, Sn, Ta, W, Re, Os, Ir, Pt, Au, Hg, Pb, Bi, La, Ce, Pr, Nd, Pm, Sm, Eu, Gd, Tb, Dy, Ho, Er, Tm, Yb, and Lu, and oxides and hydroxides of the metals. Examples of the method for forming the catalyst layer include plating, alloy plating, dispersion/composite plating, CVD, PVD, pyrolysis, and spraying. These methods may be used in combination. The catalyst layer may have a plurality of layers and a plurality of elements, as required. Nickel, nickel alloys, and nickel-plated iron or stainless, having no catalyst coating may be used. As the substrate of the cathode feed conductor 21, nickel, nickel alloys, and nickel-plated iron or stainless may be used.

As the form, any of a perforated metal, nonwoven fabric, foamed metal, expanded metal, metal porous foil formed by electroforming, so-called woven mesh produced by knitting metal lines, and the like can be used.

(Reverse current absorbing layer)

A material having a redox potential less noble than the redox potential of the element for the catalyst layer of the cathode mentioned above may be selected as a material for the reverse current absorbing layer 18b. Examples thereof include nickel and iron.

(Collector)

The cathode chamber 70 preferably comprises the collector 23. The collector 23 improves current collection efficiency. In the present embodiment, the collector 23 is a porous plate and is preferably arranged in substantially parallel to the surface of the cathode 21.
The collector 23 preferably comprises an electrically conductive metal such as nickel, iron, copper, silver, and titanium. The collector 23 may be a mixture, alloy, or composite oxide of these metals. The collector 23 may have any form as long as the form enables the function of the collector and may have a plate or net form.

(Metal elastic body)

Placing the metal elastic body 22 between the collector 23 and the cathode 21 presses each cathode 21 of the plurality of electrolytic cells 50 connected in series onto the cation exchange membrane 51 to reduce the distance between each anode 11 and each cathode 21.
Then, it is possible to lower the voltage to be applied entirely across the plurality of electrolytic cells 50 connected in series. Lowering of the voltage enables the power consumption to be reduced. With the metal elastic body 22 placed, the pressing pressure caused by the metal elastic body 22 enables the electrode for electrolysis to be stably maintained in place when the laminate including the electrode for electrolysis according to the present embodiment is placed in the electrolytic cell.
As the metal elastic body 22, spring members such as spiral springs and coils and cushioning mats may be used. As the metal elastic body 22, a suitable one may be appropriately employed, in consideration of a stress to press the ion exchange membrane and the like. The metal elastic body 22 may be provided on the surface of the collector 23 on the side of the cathode chamber 70 or may be provided on the surface of the partition wall on the side of the anode chamber 60. Both the chambers are usually partitioned such that the cathode chamber 70 becomes smaller than the anode chamber 60. Thus, from the viewpoint of the strength of the frame and the like, the metal elastic body 22 is preferably provided between the collector 23 and the cathode 21 in the cathode chamber 70. The metal elastic body 22 preferably comprises an electrically conductive metal such as nickel, iron, copper, silver, and titanium.

(Support)

The cathode chamber 70 preferably comprises the support 24 that electrically connects the collector 23 to the partition wall 80. This can achieve an efficient current flow.
The support 24 preferably comprises an electrically conductive metal such as nickel, iron, copper, silver, and titanium. The support 24 may have any shape as long as the support can support the collector 23 and may have a rod, plate, or net shape. The support 24 has a plate shape, for example. A plurality of supports 24 are arranged between the partition wall 80 and the collector 23. The plurality of supports 24 are aligned such that the surfaces thereof are in parallel to each other. The supports 24 are arranged substantially perpendicular to the partition wall 80 and the collector 23.

(Anode side gasket and cathode side gasket)

The anode side gasket 12 is preferably arranged on the frame surface constituting the anode chamber 60. The cathode side gasket 13 is preferably arranged on the frame surface constituting the cathode chamber 70. Electrolytic cells are connected to each other such that the anode side gasket 12 included in one electrolytic cell and the cathode side gasket 13 of an electrolytic cell adjacent to the cell sandwich the cation exchange membrane 51 (see Figure 2). These gaskets 12 and 13 can impart airtightness to connecting points when the plurality of electrolytic cells 50 is connected in series via the cation exchange membrane 51.
The gaskets form a seal between the ion exchange membrane and electrolytic cells. Specific examples of the gaskets include picture frame-like rubber sheets at the center of which an aperture portion is formed. The gaskets are required to have resistance against corrosive electrolyte solutions or produced gas and be usable for a long period. Thus, in respect of chemical resistance and hardness, vulcanized products and peroxide-crosslinked products of ethylene-propylene-diene rubber (EPDM rubber) and ethylene-propylene rubber (EPM rubber) are usually used as the gaskets. Alternatively, gaskets of which region to be in contact with liquid (liquid contact portion) is covered with a fluorine-containing resin such as polytetrafluoroethylene (PTFE) and tetrafluoroethylene-perfluoroalkyl vinyl ether copolymers (PFA) may be employed as required.

These gaskets 12 and 13 each may have an aperture portion so as not to inhibit the flow of the electrolyte solution, and the shape of the aperture portion is not particularly limited. For example, a picture frame-like gasket is attached with an adhesive or the like along the peripheral edge of each aperture portion of the anode chamber frame constituting the anode chamber 60 or the cathode chamber frame constituting the cathode chamber 70. Then, for example, in the case where the two electrolytic cells 50 are connected via the cation exchange membrane 51 (see Figure 2), each electrolytic cell 50 onto which each of the gaskets 12 and 13 is attached should be tightened via the cation exchange membrane 51. This tightening can prevent the electrolyte solution, alkali metal hydroxide, chlorine gas, hydrogen gas, and the like generated from electrolysis from leaking out of the electrolytic cells 50.

[Laminate]

The electrode for electrolysis in the present embodiment is used as a laminate of a membrane such as an ion exchange membrane or a microporous membrane.

That is, the laminate in the present embodiment comprises the electrode for electrolysis and a new membrane.

Specific examples of the electrode for electrolysis and such a membrane will be detailed below.

In the method for producing an electrolyzer of the present embodiment, the laminate comprising the electrode for electrolysis and a new membrane may be integrally incorporated into an existing electrolyzer, or only a new membrane may be incorporated into an existing electrolyzer and renewed.

When the laminate is integrally incorporated into an existing electrolyzer and renewed, the electrode for electrolysis and a new membrane may be laminated in advance outside the existing electrolyzer to produce the laminate.

The membrane for use during electrolysis operation in an electrolyzer is swollen or shrunk depending on the type of a liquid in contact therewith and/or the temperature of the liquid, and is thus varied in dimension.

A too large difference between the dimension of the membrane in incorporation into the existing electrolyzer and the dimension of the membrane after electrolyzer operation may cause damage of any electrode in the vicinity of the membrane and its peripheral member, and/or may cause breakage of the membrane by itself.

In the present embodiment, As/Ai is specified to be more than 0.87 and less than 1.1, wherein, with respect to an area of the new membrane corresponding to an area in frames of an anode side gasket and a cathode side gasket that constitutes an electrolyzer and that are formed from frames opposite to each other, Ai represents an area equalized by an equilibrium liquid in incorporation into an electrolyzer and As represents an area equalized by an aqueous solution after electrolyzer operation.

The "after electrolyzer operation" incorporates both "during electrolyzer operation" and "during washing after stopping of an electrolyzer".

An As/Ai of more than 0.87 enables excessive shrinkage of the membrane to be suppressed until electrolysis operation after incorporation of the membrane into an electrolyzer, and enables breakage of the membrane to be effectively prevented. An As/Ai of less than 1.1 enables excessive expansion of the membrane to be suppressed, and enables damage of any electrode and peripheral member constituting an electrolyzer to be effectively prevented.

Thus, not only an improvement in work efficiency of renewal is achieved, but also excellent electrolytic performance can be exhibited also after renewal and an electrolyzer can be operated stably for a long period.

As/Ai is preferably 0.90 or more and 1.09 or less, more preferably 0.909 or more and 1.086 or less, further still more preferably 0.915 or more and 1.05 or less, from the above viewpoints.

[Equilibrium liquid and aqueous solution]

In the present embodiment, a membrane for use in renewal during renewal of the laminate or membrane is allowed in advance to be in an equilibrium state by a predetermined equilibrium liquid before incorporation of the laminate or new membrane into the existing electrolyzer, and the membrane is in an equilibrium state by a predetermined equilibrium liquid in incorporation into the electrolyzer.

Thereafter, the laminate or membrane is incorporated into the existing electrolyzer, and a new electrolyzer is obtained.

After this electrolyzer operation, an aqueous solution different from the equilibrium liquid is used and brought into contact with the laminate or membrane.

The phrase "in incorporation into the electrolyzer" has the same meaning as the phrase "during incorporation of the membrane into the electrolyzer", and the phrase "after electrolyzer operation" refers to a state after the membrane is incorporated into the electrolyzer, and includes all a step of filling an electrolyte solution, a step of allowing an electric current to pass, a step of stopping an electric current, and a step of replacing an electrolyte solution with a safe washing liquid for washing.

The aqueous solution incorporates both an aqueous solution to be subjected to "electrolysis", i.e., an electrolyte solution, and an aqueous solution for use in washing after operation completion, i.e., a washing liquid.

In the present embodiment, the equilibrium liquid and the aqueous solution are preferably suitably selected so that As/Ai is in the desired numerical range.

The equilibrium liquid and the aqueous solution are suitably selected, and therefore an excessive difference between the dimension of the membrane in incorporation into the electrolyzer and the dimension of the membrane after electrolyzer operation can be prevented from occurring, damage of any electrode constituting the electrolyzer and any peripheral member and breakage of the membrane by itself can be effectively prevented until electrolysis operation after incorporation of the membrane into the electrolyzer, and the electrolyzer can be operated stably for a long period.

The "equilibrium liquid" for allowing the "new membrane for use in renewal" for incorporation into the existing electrolyzer to be in an equilibrium state means any liquid that allows the membrane to be in an equilibrium state under predetermined temperature/pressure conditions, and the equilibrium state means a state where the membrane dimension is not changed any more. The equilibrium state can be made by immersion for about 24 hours or more.

Examples of the equilibrium liquid include, but not limited to the following, a 0.00001 to 25 mol/L NaOH aqueous solution and a 0.04 to 1.5 mol/L NaHCO$_3$ aqueous solution.

The "aqueous solution" to be brought into contact with the membrane after electrolyzer operation includes an aqueous solution to be electrolyzed, i.e., not only an electrolyte solution, but also an aqueous solution for use in washing after the completion of electrolyzer operation, i.e., a washing liquid.

Examples of the "aqueous solution" include, but not limited to the following, a 0.5 to 5.2 N NaCl aqueous solution, a 0.00001 to 25 mol/L NaOH aqueous solution, pure water, and a 0.04 to 1.5 mol/L NaHCO$_3$ aqueous solution.

The temperature of pure water is preferably 15 to 65°C, more preferably 18 to 60°C, further preferably 20 to 55°C from the viewpoint that pure water used in a plant is used as it is without being warmed or cooled.

In the present embodiment, examples of the method for controlling As/Ai in the range of more than 0.87 and less than 1.1 include, but not limited to the following, a method for suitably selecting a new membrane material for renewal, a method for suitably selecting an "equilibrium liquid" that allows the membrane to be in an equilibrium state during incorporation into the electrolyzer, and a method for suitably selecting an "aqueous solution" to be brought into contact with the membrane or laminate after electrolyzer operation.

The membrane material here used is, for example, one where an ion exchange resin having an ion exchange capacity of 0.5 to 2.0 mg equivalent/g is used.

The equilibrium liquid here used is, for example, an aqueous solution having a solute concentration of 14 mol/L or less.

Examples of the "aqueous solution" to be brought into contact with the membrane or laminate after electrolyzer operation include a 0.5 to 5.2 N NaCl aqueous solution, 0.00001 to 25 mol/L NaOH aqueous solution, pure water, and a 0.04 to 1.5 mol/L NaHCO$_3$ aqueous solution, which are each used for actual electrolysis operation.

These may be used singly or in combinations.

[Electrode for electrolysis]

In the present embodiment, the electrode for electrolysis is not particularly limited as long as the electrode can constitute the laminate together with the membrane, as mentioned above, namely, the electrode is integratable with the membrane. The electrode for electrolysis may be an electrode that serves as the cathode in the electrolyzer or may be an electrode that serves as the anode in the electrolyzer. The material, form, physical properties, and the like of the electrode for electrolysis can be appropriately selected as those suited therefor.

Hereinbelow, preferable aspects of the electrode for electrolysis in the present embodiment will be described.

The force applied per unit mass·unit area of the electrode for electrolysis on the feed conductor in the membrane or electrolyzer is preferably 1.6 N/ (mg·cm$^2$) or less.

The laminate of the present embodiment, as configured as described above, can improve the work efficiency during electrode renewal in the electrolyzer, and further can exhibit excellent electrolytic performance also after renewal.

That is, according to the laminate of the present embodiment, on renewing the electrode, the electrode can be renewed by a work as simple as renewing the membrane, without a complicated work such as stripping off the electrode fixed on the electrolytic cell, and thus, the work efficiency is markedly improved.

Further, according to the laminate of the present invention, it is possible to maintain the electrolytic performance comparable to those of a new electrode or improve the electrolytic performance. Thus, the electrode fixed on a conventional new electrolytic cell and serving as an anode and/or a cathode is only required to serve as a feed conductor. Thus, it may be also possible to markedly reduce or eliminate catalyst coating.

The laminate of the present embodiment can be stored or transported to customers in a state where the laminate is wound around a vinyl chloride pipe or the like (in a rolled state or the like), making handling markedly easier.

As the feed conductor, various substrates mentioned below such as a degraded electrode (i.e., the existing electrode) and an electrode having no catalyst coating can be employed.

The laminate of the present embodiment may have partially a fixed portion as long as the laminate has the configuration described above. That is, in the case where the laminate of the present embodiment has a fixed portion, a portion not having the fixing is subjected to measurement, and the resulting force applied per unit mass·unit area of the electrode for electrolysis is preferably in the numerical range.

The electrode for electrolysis in the present embodiment has a force applied per unit mass·unit area of preferably 1.6 N/ (mg·cm$^2$) or less, more preferably less than 1.6 N/ (mg.cm$^2$), further preferably less than 1.5 N/ (mg.cm$^2$), even further preferably 1.2 N/ (mg·cm$^2$) or less, still more preferably 1.20 N/ (mg·cm$^2$) or less from the viewpoint of enabling good handling property to be obtained and having a good adhesive force to a membrane such as an ion exchange membrane and a microporous membrane, a feed conductor (a degraded electrode and an electrode having no catalyst coating), and the like. The force is even still more preferably 1.1 N/ (mg·cm$^2$) or less, further still more preferably 1.10 N/ (mg·cm$^2$) or less, particularly preferably 1.0 N/ (mg·cm$^2$) or less, especially preferably 1.00 N/ (mg·cm$^2$) or less.

From the viewpoint of further improving the electrolytic performance, the force is preferably more than 0.005 N/ (mg·cm$^2$) , more preferably 0.08 N/ (mg·cm$^2$) or more, further preferably 0.1 N/ (mg·cm$^2$) or more, even further more preferably 0.14 N/ (mg·cm$^2$) or more. The force is further more preferably 0.2 N/ (mg·cm$^2$) or more from the viewpoint of further facilitating handling in a large size (e.g., a size of 1.5 m $\times$ 2.5 m).

The force applied described above can be within the range described above by appropriately adjusting an opening ratio described below, thickness of the electrode for electrolysis, arithmetic average surface roughness, and the like, for example. More specifically, for example, a higher opening ratio tends to lead to a smaller force applied, and a lower opening ratio tends to lead to a larger force applied.

The mass per unit is preferably 48 mg/cm$^2$ or less, more preferably 30 mg/cm$^2$ or less, further preferably 20 mg/cm$^2$ or less from the viewpoint of enabling good handling property to be provided, having a good adhesive force to a membrane such as an ion exchange membrane and a microporous membrane, a degraded electrode, a feed conductor having no catalyst coating, and the like and of economy, and furthermore is preferably 15 mg/cm$^2$ or less from the comprehensive viewpoint including handling property, adhesion, and economy. The lower limit value is not particularly limited but is of the order of 1 mg/cm$^2$, for example.

The mass per unit area described above can be within the range described above by appropriately adjusting an opening ratio described below, thickness of the electrode, and the like, for example. More specifically, for example, when the thickness is constant, a higher opening ratio tends to lead to a smaller mass per unit area, and a lower opening ratio tends to lead to a larger mass per unit area.

The force applied can be measured by methods (i) or (ii) described below.

As for the force applied, the value obtained by the measurement of the method (i) (also referred to as "the force applied (1)") and the value obtained by the measurement of the method (ii) (also referred to as "the force applied (2)") may be the same or different, and either of the values is preferably less than 1.5 N/ (mg·cm$^2$) .

[Method (i)]

A nickel plate obtained by blast processing with alumina of grain-size number 320 (thickness 1.2 mm, 200 mm square), an ion exchange membrane which is obtained by applying inorganic material particles and a binder to both surfaces of a membrane of a perfluorocarbon polymer into which an ion exchange group is introduced (170 mm square, the detail of the ion exchange membrane referred to herein is as described in Examples), and a sample of electrode (130 mm square) are laminated in this order. After this laminate is sufficiently immersed in pure water, excess water deposited on the surface of the laminate is removed to obtain a sample for measurement.

The arithmetic average surface roughness (Ra) of the nickel plate after the blast treatment is 0.5 to 0.8 $\mu$m. The specific method for calculating the arithmetic average surface roughness (Ra) is as described in Examples.

Under conditions of a temperature of 23$\pm$2°C and a relative humidity of 30$\pm$5%, only the sample of electrode in this sample for measurement is raised in a vertical direction at 10 mm/minute using a tensile and compression testing machine, and the load when the sample of electrode is raised by 10 mm in a vertical direction is measured. This measurement is repeated three times, and the average value is calculated.

This average value is divided by the area of the overlapping portion of the sample of electrode and the ion exchange membrane and the mass of the portion overlapping the ion exchange membrane in the sample of electrode to calculate the force applied per unit mass·unit area (1) (N/ (mg·cm$^2$)) .

The force applied per unit mass·unit area (1) obtained by the method (i) is more preferably 1.6 N/ (mg·cm$^2$) or less, further preferably less than 1.6 N/ (mg.cm$^2$), further preferably less than 1.5 N/ (mg.cm$^2$), even further preferably 1.2 N/ (mg·cm$^2$) or less, still more preferably 1.20 N/ (mg·cm$^2$) or less from the viewpoint of enabling good handling property to be provided and having a good adhesive force to a membrane such as an ion exchange membrane and a microporous membrane, a degraded electrode, and a feed conductor having no catalyst coating. The force is even still more preferably 1.1 N/ (mg·cm$^2$) or less, further still more preferably 1.10 N/ (mg·cm$^2$) or less, particularly preferably 1.0 N/ (mg·cm$^2$) or less, especially preferably 1.00 N/ (mg·cm$^2$) or less. The force is preferably more than 0.005 N/ (mg.cm$^2$), more preferably 0.08 N/ (mg·cm$^2$) or more, further preferably 0.1 N/ (mg·cm$^2$) or more from the viewpoint of further improving the electrolytic performance, and furthermore, the force is even further preferably 0.14 N/ (mg.cm$^2$), still more preferably 0.2 N/ (mg·cm$^2$) or more from the viewpoint of further facilitating handling in a large size (e.g., a size of 1.5 m × 2.5 m).

[Method (ii)]

A nickel plate obtained by blast processing with alumina of grain-size number 320 (thickness 1.2 mm, 200 mm square, a nickel plate similar to that of the method (i) above) and a sample of electrode (130 mm square) are laminated in this order. After this laminate is sufficiently immersed in pure water, excess water deposited on the surface of the laminate is removed to obtain a sample for measurement.

Under conditions of a temperature of 23±2°C and a relative humidity of 30±5%, only the sample of electrode in this sample for measurement is raised in a vertical direction at 10 mm/minute using a tensile and compression testing machine, and the load when the sample of electrode is raised by 10 mm in a vertical direction is measured. This measurement is repeated three times, and the average value is calculated.

This average value is divided by the area of the overlapping portion of the sample of electrode and the nickel plate and the mass of the sample of electrode in the portion overlapping the nickel plate to calculate the adhesive force per unit mass·unit area (2) (N/ (mg·cm$^2$)).

The force applied per unit mass·unit area (2) obtained by the method (ii) is preferably 1.6 N/ (mg·cm$^2$) or less, more preferably less than 1.6 N/ (mg.cm$^2$), further preferably less than 1.5 N/ (mg.cm$^2$), even further preferably 1.2 N/ (mg·cm$^2$) or less, still more preferably 1.20 N/ (mg·cm$^2$) or less from the viewpoint of enabling good handling property to be provided and having a good adhesive force to a membrane such as an ion exchange membrane and a microporous membrane, a degraded electrode, and a feed conductor having no catalyst coating. The force is even still more preferably 1.1 N/ (mg·cm$^2$) or less, further still more preferably 1.10 N/ (mg·cm$^2$) or less, particularly preferably 1.0 N/ (mg·cm$^2$) or less, especially preferably 1.00 N/ (mg·cm$^2$) or less. Further, the force is preferably more than 0.005 N/ (mg·cm$^2$), more preferably 0.08 N/ (mg·cm$^2$) or more, further preferably 0.1 N/ (mg·cm$^2$) or more from the viewpoint of further improving the electrolytic performance, and even further preferably, the force is even further preferably 0.14 N/ (mg·cm$^2$) or more from the viewpoint of further facilitating handling in a large size (e.g., a size of 1.5 m × 2.5 m).

The electrode for electrolysis in the present embodiment preferably includes a substrate for electrode for electrolysis and a catalyst layer. The thickness of the substrate for electrode for electrolysis (gauge thickness) is not particularly limited, but is preferably 300 μm or less, more preferably 205 μm or less, further preferably 155 μm or less, further preferably 135 μm or less, further more preferably 125 μm or less, still more preferably 120 μm or less, even still more preferably 100 μm or less from the viewpoint of enabling a good handling property to be provided, having a good adhesive force to a membrane such as an ion exchange membrane and a microporous membrane, a degraded electrode (feed conductor), and an electrode (feed conductor) having no catalyst coating, being capable of being suitably rolled in a roll and satisfactorily folded, and facilitating handling in a large size (e.g., a size of 1.5 m × 2.5 m), and further still more preferably 50 μm or less from the viewpoint of a handling property and economy. The lower limit value is not particularly limited, but is 1 μm, for example, preferably 5 μm, more preferably 15 μm.

In the present embodiment, in order to integrate the membrane and the electrode for electrolysis, a liquid is preferably interposed therebetween.

As the liquid, any liquid, such as water and organic solvents, can be used as long as the liquid generates a surface tension. The larger the surface tension of the liquid, the larger the force applied between the membrane and the electrode for electrolysis. Thus, a liquid having a larger surface tension is preferred.

Examples of the liquid include the following (the numerical value in the parentheses is the surface tension of the liquid at 20°C) :

hexane (20.44 mN/m), acetone (23.30 mN/m), methanol (24.00 mN/m), ethanol (24.05 mN/m), ethylene glycol (50.21 mN/m), and water (72.76 mN/m).

A liquid having a large surface tension allows the membrane and the electrode for electrolysis to be easily integrated (to be a laminate), and renewal of the electrode tends to be easier. The liquid between the membrane and the electrode for electrolysis may be present in an amount such that the both adhere to each other by the surface tension. As a result, after the laminate is placed in an electrolytic cell, the liquid, if mixed into the electrolyte solution, does not affect electrolysis itself due to the small amount of the liquid.

From a practical viewpoint, a liquid having a surface tension of 24 mN/m to 80 mN/m, such as ethanol, ethylene glycol, and water, is preferably used as the liquid. Particularly preferred is water or an alkaline aqueous solution prepared by dissolving caustic soda, potassium hydroxide, lithium hydroxide, sodium hydrogen carbonate, potassium hydrogen carbonate, sodium carbonate, potassium carbonate, or the like in water. Alternatively, the surface tension can be adjusted by allowing these liquids to contain a surfactant. When a surfactant is contained, the adhesion between the membrane and the electrode for electrolysis varies to enable the handling property to be adjusted. The surfactant is not particularly limited, and both ionic surfactants and nonionic surfactants may be used.

The proportion measured by the following method (I) of the electrode for electrolysis in the present embodiment is not particularly limited, but is preferably 90% or more, more preferably 92% or more from the viewpoint of enabling a good handling property to be provided and having a good adhesive force to a membrane such as an ion exchange membrane and a microporous membrane, a degraded electrode (feed conductor), and an electrode (feed conductor) having no catalyst coating, and further preferably 95% or more from the viewpoint of further facilitating handling in a large size (e.g., a size of 1.5 m × 2.5 m). The upper limit value is 100%.

[Method (I)]

An ion exchange membrane (170 mm square) and a sample of electrode (130 mm square) are laminated in this order. The laminate is placed on a curved surface of a polyethylene pipe (outer diameter: 280 mm) such that the sample of electrode in this laminate is positioned outside under conditions of a temperature of 23±2°C and a relative humidity of 30±5%, the laminate and the pipe are sufficiently immersed in pure water, excess water deposited on a surface of the laminate and the pipe is removed, and one minute after this removal, then the proportion (%) of an area of a portion in which the ion exchange membrane (170 mm square) is in close contact with the sample of electrode is measured.

The proportion measured by the following method (II) of the electrode for electrolysis of the present embodiment is not particularly limited, but is preferably 75% or more, more preferably 80% or more from the viewpoint of enabling a good handling property to be provided, having a good adhesive force to a membrane such as an ion exchange membrane and a microporous membrane, a degraded electrode (feed conductor), and an electrode (feed conductor) having no catalyst coating, and being capable of being suitably rolled in a roll and satisfactorily folded, and is further preferably 90% or more from the viewpoint of further facilitating handling in a large size (e.g., a size of 1.5 m × 2.5 m). The upper limit value is 100%.

[Method (II)]

An ion exchange membrane (170 mm square) and a sample of electrode (130 mm square) are laminated in this order. The laminate is placed on a curved surface of a polyethylene pipe (outer diameter: 145 mm) such that the sample of electrode in this laminate is positioned outside under conditions of a temperature of 23±2°C and a relative humidity of 30±5%, the laminate and the pipe are sufficiently immersed in pure water, excess water deposited on a surface of the laminate and the pipe is removed, and one minute after this removal, then the proportion (%) of an area of a portion in which the ion exchange membrane (170 mm square) is in close contact with the sample of electrode is measured.

The electrode for electrolysis in the present embodiment preferably has, but is not particularly limited to, a porous structure and an opening ratio or void ratio of 5 to 90% or less from the viewpoint of enabling good handling property to be provided, having a good adhesive force to a membrane such as an ion exchange membrane and a microporous membrane, a degraded electrode (feed conductor), and an electrode having no catalyst coating (feed conductor), and preventing accumulation of gas to be generated during electrolysis. The opening ratio is more preferably 10 to 80% or less, further preferably 20 to 75%.

The opening ratio is a proportion of the opening portions per unit volume. The calculation method may differ depending on that opening portions in submicron size are considered or that only visible opening portions are considered.

In the present embodiment, a volume V can be calculated from the values of the gauge thickness, width, and length of the electrode, and further, a weight W can be measured to thereby calculate an opening ratio A by the following formula.

$$A = (1 - (W/(V \times \rho))) \times 100$$

$\rho$ is the density of the electrode material (g/cm$^3$). For example, $\rho$ of nickel is 8.908 g/cm$^3$, and $\rho$ of titanium is 4.506 g/cm$^3$. The opening ratio can be appropriately adjusted by changing the area of metal to be perforated per unit area in the case of perforated metal, changing the values of the SW (short diameter), LW (long diameter), and feed in the case of expanded metal, changing the line diameter of metal fiber and mesh number in the case of mesh, changing the pattern of a photoresist to be used in the case of electroforming, changing the metal fiber diameter and fiber density in the case of nonwoven fabric, changing the mold for forming voids in the case of foamed metal, or the like.

The value obtained by measurement by the following method (A) of the electrode for electrolysis in the present embodiment is preferably 40 mm or less, more preferably 29 mm or less, further preferably 10 mm or less, further more preferably 6.5 mm or less from the viewpoint of the handling property.

[Method (A)]

Under conditions of a temperature of $23\pm2°C$ and a relative humidity of $30\pm5\%$, a sample of laminate obtained by laminating the ion exchange membrane and the electrode for electrolysis is wound around and fixed onto a curved surface of a core material being made of polyvinyl chloride and having an outer diameter $\phi$ of 32 mm, and left to stand for 6 hours; thereafter, when the electrode for electrolysis is separated from the sample and placed on a flat plate, heights in a vertical direction at both edges of the electrode for electrolysis $L_1$ and $L_2$ are measured, and an average value thereof is used as a measurement value.

In the electrode for electrolysis in the present embodiment, the ventilation resistance is preferably 24 kPa·s/m or less when the electrode for electrolysis has a size of 50 mm × 50 mm, the ventilation resistance being measured under the conditions of the temperature of 24°C, the relative humidity of 32%, a piston speed of 0.2 cm/s, and a ventilation volume of 0.4 cc/cm$^2$/s (hereinbelow, also referred to as "measurement condition 1") (hereinbelow, also referred to as "ventilation resistance 1"). A larger ventilation resistance means that air is unlikely to flow and refers to a state of a high density. In this state, the product from electrolysis remains in the electrode and the reaction substrate is more unlikely to diffuse inside the electrode, and thus, the electrolytic performance (such as voltage) tends to deteriorate. The concentration on the membrane surface tends to increase. Specifically, the caustic concentration increases on the cathode surface, and the supply of brine tends to decrease on the anode surface. As a result, the product accumulates at a high concentration on the interface at which the membrane is in contact with the electrode for electrolysis. This accumulation leads to damage of the membrane and tends to also lead to increase in the voltage and damage of the membrane on the cathode surface and damage of the membrane on the anode surface.

In order to prevent these defects, the ventilation resistance 1 is preferably set at 24kPa·s/m or less.

From a similar viewpoint as above, the ventilation resistance is more preferably less than 0.19 kPa·s/m, further preferably 0.15 kPa·s/m or less, further more preferably 0.07 kPa·s/m or less.

When the ventilation resistance is larger than a certain value, NaOH generated in the electrode tends to accumulate on the interface between the electrode for electrolysis and the membrane to result in a high concentration in the case of the cathode, and the supply of brine tends to decrease to cause the brine concentration to be lower in the case of the anode. In order to prevent damage to the membrane that may be caused by such accumulation, the ventilation resistance is preferably less than 0.19 kPa·s/m, more preferably 0.15 kPa·s/m or less, further preferably 0.07 kPa·s/m or less.

In contrast, when the ventilation resistance is low, the area of the electrode for electrolysis is reduced and the electrolysis area is reduced. Thus, the electrolytic performance (such as voltage) tends to deteriorate. When the ventilation resistance is zero, the feed conductor functions as the electrode because no electrode for electrolysis is provided, and the electrolytic performance (such as voltage) tends to markedly deteriorate. From this viewpoint, a preferable lower limit value identified as the ventilation resistance 1 is not particularly limited, but is preferably more than 0 kPa·s/m, more preferably 0.0001 kPa·s/m or more, further preferably 0.001 kPa·s/m or more.

When the ventilation resistance 1 is 0.07 kPa·s/m or less, a sufficient measurement accuracy may not be achieved because of the measurement method therefor. From this viewpoint, it is also possible to evaluate an electrode for electrolysis having a ventilation resistance 1 of 0.07 kPa·s/m or less by means of a ventilation resistance (hereinbelow, also referred to as "ventilation resistance 2") obtained by the following measurement method (hereinbelow, also referred to as "measurement condition 2"). That is, the ventilation resistance 2 is a ventilation resistance measured, when the electrode for electrolysis has a size of 50 mm × 50 mm, under conditions of the temperature of 24°C, the relative humidity of 32%, a piston speed of 2 cm/s, and a ventilation volume of 4 cc/cm$^2$/s.

The ventilation resistances 1 and 2 can be within the range described above by appropriately adjusting an opening ratio, thickness of the electrode, and the like, for example. More specifically, for example, when the thickness is constant, a higher opening ratio tends to lead to smaller ventilation resistances 1 and 2, and a lower opening ratio tends to lead to larger ventilation resistances 1 and 2.

Hereinbelow, a more specific embodiment of the electrode for electrolysis in the present embodiment will be described.

The electrode for electrolysis in the present embodiment preferably includes a substrate for electrode for electrolysis and a catalyst layer. The catalyst layer may be composed of a plurality of layers as shown below or may be a single layer configuration.

As shown in Figure 6, an electrode for electrolysis 101 according to the present embodiment includes a substrate for electrode for electrolysis 10 and a pair of first layers 20 with which both the surfaces of the substrate for electrode for electrolysis 10 are covered. The entire substrate for electrode for electrolysis 10 is preferably covered with the first layers 20. This covering is likely to improve the catalyst activity and durability of the electrode for electrolysis. One first layer 20 may be laminated only on one surface of the substrate for electrode for electrolysis 10.

Also shown in Figure 6, the surfaces of the first layers 20 may be covered with second layers 30. The entire first layers 20 are preferably covered by the second layers 30. Alternatively, one second layer 30 may be laminated only one surface of the first layer 20.

(Substrate for electrode for electrolysis)

As the substrate for electrode for electrolysis 10, for example, nickel, nickel alloys, stainless steel, and further, valve metals including titanium can be used, although not limited thereto. At least one element selected from nickel (Ni) and titanium (Ti) is preferably included.

When stainless steel is used in an alkali aqueous solution of a high concentration, iron and chromium are eluted and the electrical conductivity of stainless steel is of the order of one-tenth of that of nickel. In consideration of the foregoing, a substrate containing nickel (Ni) is preferable as the substrate for electrode for electrolysis.

Alternatively, when the substrate for electrode for electrolysis 10 is used in a salt solution of a high concentration near the saturation under an atmosphere in which chlorine gas is generated, the material of the substrate for electrode 10 is also preferably titanium having high corrosion resistance.

The form of the substrate for electrode for electrolysis 10 is not particularly limited, and a form suitable for the purpose can be selected. As the form, any of a perforated metal, nonwoven fabric, foamed metal, expanded metal, metal porous foil formed by electroforming, so-called woven mesh produced by knitting metal lines, and the like can be used. Among these, a perforated metal or expanded metal is preferable. Electroforming is a technique for producing a metal thin film having a precise pattern by using photolithography and electroplating in combination. It is a method including forming a pattern on a substrate with a photoresist and electroplating the portion not protected by the resist to provide a metal foil.

As for the form of the substrate for electrode for electrolysis, a suitable specification depends on the distance between the anode and the cathode in the electrolyzer. In the case where the distance between the anode and the cathode is finite, an expanded metal or perforated metal form can be used, and in the case of a so-called zero-gap base electrolyzer, in which the ion exchange membrane is in contact with the electrode, a woven mesh produced by knitting thin lines, wire mesh, foamed metal, metal nonwoven fabric, expanded metal, perforated metal, metal porous foil, and the like can be used, although not limited thereto.

Examples of the substrate for electrode for electrolysis 10 include metal porous foil, a wire mesh, a metal nonwoven fabric, a perforated metal, an expanded metal, or a foamed metal.

As a plate material before processed into a perforated metal or expanded metal, rolled plate materials and electrolytic foils are preferable. An electrolytic foil is preferably further subjected to a plating treatment by use of the same element as the base material thereof, as the post treatment, to thereby form asperities on one or both of the surfaces.

The thickness of the substrate for electrode for electrolysis 10 is, as mentioned above, preferably 300 $\mu$m or less, more preferably 205 $\mu$m or less, further preferably 155 $\mu$m or less, further more preferably 135 $\mu$m or less, even further more preferably 125 $\mu$m or less, still more preferably 120 $\mu$m or less, even still more preferably 100 $\mu$m or less, and further still more preferably 50 $\mu$m or less from the viewpoint of a handling property and economy. The lower limit value is not particularly limited, but is 1 $\mu$m, for example, preferably 5 $\mu$m, more preferably 15 $\mu$m.

In the substrate for electrode for electrolysis, the residual stress during processing is preferably relaxed by annealing the substrate for electrode for electrolysis in an oxidizing atmosphere. It is preferable to form asperities using a steel grid, alumina powder, or the like on the surface of the substrate for electrode for electrolysis followed by an acid treatment to increase the surface area thereof, in order to improve the adhesion to a catalyst layer with which the surface is covered. Alternatively, it is preferable to give a plating treatment by use of the same element as the substrate for electrode for electrolysis to increase the surface area.

To bring the first layer 20 into close contact with the surface of the substrate for electrode for electrolysis 10, the substrate for electrode for electrolysis 10 is preferably subjected to a treatment of increasing the surface area. Examples of the treatment of increasing the surface area include a blast treatment using a cut wire, steel grid, alumina grid or the like, an acid treatment using sulfuric acid or hydrochloric acid, and a plating treatment using the same element to that of the substrate. The arithmetic average surface roughness (Ra) of the substrate surface is not particularly limited, but is preferably 0.05 $\mu$m to 50 $\mu$m, more preferably 0.1 to 10 $\mu$m, further preferably 0.1 to 8 $\mu$m.

Next, a case where the electrode for electrolysis in the present embodiment is used as an anode for common salt electrolysis will be described.

(First layer)

In Figure 6, a first layer 20 as a catalyst layer contains at least one of ruthenium oxides, iridium oxides, and titanium oxides. Examples of the ruthenium oxide include $RuO_2$. Examples of the iridium oxide include $IrO_2$. Examples of the titanium oxide include $TiO_2$. The first layer 20 preferably contains two oxides: a ruthenium oxide and a titanium oxide or three oxides: a ruthenium oxide, an iridium oxide, and a titanium oxide. This makes the first layer 20 more stable and additionally improves the adhesion with the second layer 30.

When the first layer 20 contains two oxides: a ruthenium oxide and a titanium oxide, the first layer 20 contains preferably 1 to 9 mol, more preferably 1 to 4 mol of the titanium oxide based on 1 mol of the ruthenium oxide contained in the first layer 20. With the composition ratio of the two oxides in this range, the electrode for electrolysis 101 exhibits excellent durability.

When the first layer 20 contains three oxides: a ruthenium oxide, an iridium oxide, and a titanium oxide, the first layer 20 contains preferably 0.2 to 3 mol, more preferably 0.3 to 2.5 mol of the iridium oxide based on 1 mol of the ruthenium oxide contained in the first layer

20. The first layer 20 contains preferably 0.3 to 8 mol, more preferably 1 to 7 mol of the titanium oxide based on 1 mol of the ruthenium oxide contained in the first layer 20. With the composition ratio of the three oxides in this range, the electrode for electrolysis 101 exhibits excellent durability.

When the first layer 20 contains at least two of a ruthenium oxide, an iridium oxide, and a titanium oxide, these oxides preferably form a solid solution. Formation of the oxide solid solution allows the electrode for electrolysis 101 to exhibit excellent durability.

In addition to the compositions described above, oxides of various compositions can be used as long as at least one oxide of a ruthenium oxide, an iridium oxide, and titanium oxide is contained. For example, an oxide coating called DSA(R), which contains ruthenium, iridium, tantalum, niobium, titanium, tin, cobalt, manganese, platinum, and the like, can be used as the first layer 20.

The first layer 20 need not be a single layer and may include a plurality of layers. For example, the first layer 20 may include a layer containing three oxides and a layer containing two oxides. The thickness of the first layer 20 is preferably 0.05 to 10 $\mu$m, more preferably 0.1 to 8 $\mu$m.

(Second layer)

The second layer 30 preferably contains ruthenium and titanium. This enables the chlorine overvoltage immediately after electrolysis to be further lowered.

The second layer 30 preferably contains a palladium oxide, a solid solution of a palladium oxide and platinum, or an alloy of palladium and platinum. This enables the chlorine overvoltage immediately after electrolysis to be further lowered.

A thicker second layer 30 can maintain the electrolytic performance for a longer period, but from the viewpoint of economy, the thickness is preferably 0.05 to 3 $\mu$m.

Next, a case where the electrode for electrolysis in the present embodiment is used as a cathode for common salt electrolysis will be described.

(First layer)

Examples of components of the first layer 20 as the catalyst layer include metals such as C, Si, P, S, Al, Ti, V, Cr, Mn, Fe, Co, Ni, Cu, Zn, Y, Zr, Nb, Mo, Ru, Rh, Pd, Ag, Cd, In, Sn, Ta, W, Re, Os, Ir, Pt, Au, Hg, Pb, Bi, La, Ce, Pr, Nd, Pm, Sm, Eu, Gd, Tb, Dy, Ho, Er, Tm, Yb, and Lu, and oxides and hydroxides of the metals.

The first layer 20 may or may not contain at least one of platinum group metals, platinum group metal oxides, platinum group metal hydroxides, and alloys containing a platinum group metal.

When the first layer 20 contains at least one of platinum group metals, platinum group metal oxides, platinum group metal hydroxides, and alloys containing a platinum group metal, the platinum group metals, platinum group metal oxides, platinum group metal hydroxides, and alloys containing a platinum group metal preferably contain at least one platinum group metal of platinum, palladium, rhodium, ruthenium, and iridium.

As the platinum group metal, platinum is preferably contained.

As the platinum group metal oxide, a ruthenium oxide is preferably contained.

As the platinum group metal hydroxide, a ruthenium hydroxide is preferably contained.

As the platinum group metal alloy, an alloy of platinum with nickel, iron, and cobalt is preferably contained.

Further, as required, an oxide or hydroxide of a lanthanoid element is preferably contained as a second component. This allows the electrode for electrolysis 101 to exhibit excellent durability.

As the oxide or hydroxide of a lanthanoid element, at least one selected from lanthanum, cerium, praseodymium, neodymium, promethium, samarium, europium, gadolinium, terbium, and dysprosium is preferably contained.

Further, as required, an oxide or hydroxide of a transition metal is preferably contained as a third component.

Addition of the third component enables the electrode for electrolysis 101 to exhibit more excellent durability and the electrolysis voltage to be lowered.

Examples of a preferable combination include ruthenium only, ruthenium + nickel, ruthenium + cerium, ruthenium + lanthanum, ruthenium + lanthanum + platinum, ruthenium + lanthanum + palladium, ruthenium + praseodymium, ruthenium + praseodymium + platinum, ruthenium + praseodymium + platinum + palladium, ruthenium + neodymium, ruthenium + neodymium + platinum, ruthenium + neodymium + manganese, ruthenium + neodymium + iron, ruthenium + neodymium + cobalt, ruthenium + neodymium + zinc, ruthenium + neodymium + gallium, ruthenium + neodymium + sulfur, ruthenium + neodymium + lead, ruthenium + neodymium + nickel, ruthenium + neodymium + copper, ruthenium + samarium, ruthenium + samarium + manganese, ruthenium + samarium + iron, ruthenium + samarium + cobalt, ruthenium + samarium + zinc, ruthenium + samarium + gallium, ruthenium + samarium + sulfur, ruthenium + samarium + lead, ruthenium + samarium + nickel, platinum + cerium, platinum + palladium + cerium, platinum + palladium + lanthanum + cerium, platinum + iridium, platinum + palladium, platinum + iridium + palladium, platinum + nickel + palladium, platinum + nickel + ruthenium, alloys of platinum and nickel, alloys of platinum and cobalt, and alloys of platinum and iron.

When platinum group metals, platinum group metal oxides, platinum group metal hydroxides, and alloys containing a platinum group metal are not contained, the main component of the catalyst is preferably nickel element.

At least one of nickel metal, oxides, and hydroxides is preferably contained.

As the second component, a transition metal may be added. As the second component to be added, at least one element of titanium, tin, molybdenum, cobalt, manganese, iron, sulfur, zinc, copper, and carbon is preferably contained.

Examples of a preferable combination include nickel + tin, nickel + titanium, nickel + molybdenum, and nickel + cobalt.

As required, an intermediate layer can be placed between the first layer 20 and the substrate for electrode for electrolysis 10. The durability of the electrode for electrolysis 101 can be improved by placing the intermediate layer.

As the intermediate layer, those having affinity to both the first layer 20 and the substrate for electrode for electrolysis 10 are preferable. As the intermediate layer, nickel oxides, platinum group metals, platinum group metal oxides, and platinum group metal hydroxides are preferable. The intermediate layer can be formed by applying and baking a solution containing a component that forms the intermediate layer. Alternatively, a surface oxide layer also can be formed by subjecting a substrate to a thermal treatment at a temperature of 300 to 600°C in an air atmosphere. Besides, the layer can be formed by a known method such as a thermal spraying method and ion plating method.

(Second layer)

Examples of components of the second layer 30 as the catalyst layer include metals such as C, Si, P, S, Al, Ti, V, Cr, Mn, Fe, Co, Ni, Cu, Zn, Y, Zr, Nb, Mo, Ru, Rh, Pd, Ag, Cd, In, Sn, Ta, W, Re, Os, Ir, Pt, Au, Hg, Pb, Bi, La, Ce, Pr, Nd, Pm, Sm, Eu, Gd, Tb, Dy, Ho, Er, Tm, Yb, and Lu, and oxides and hydroxides of the metals.

The second layer 30 may or may not contain at least one of platinum group metals, platinum group metal oxides, platinum group metal hydroxides, and alloys containing a platinum group metal. Examples of a preferable combination of elements contained in the second layer include the combinations enumerated for the first layer. The combination of the first layer and the second layer may be a combination in which the compositions are the same and the composition ratios are different or may be a combination of different compositions.

As the thickness of the catalyst layer, the total thickness of the catalyst layer formed and the intermediate layer is preferably 0.01 $\mu$m to 20 $\mu$m. With a thickness of 0.01 $\mu$m or more, the catalyst layer can sufficiently serve as the catalyst. With a thickness of 20 $\mu$m or less, it is possible to form a robust catalyst layer that is unlikely to fall off from the substrate. The thickness is more preferably 0.05 $\mu$m to 15 $\mu$m. The thickness is further preferably 0.1 $\mu$m to 10 $\mu$m. The thickness is further more preferably 0.2 $\mu$m to 8 $\mu$m.

The thickness of the electrode for electrolysis, that is, the total thickness of the substrate for electrode for electrolysis and the catalyst layer is preferably 315 $\mu$m or less, more preferably 220 $\mu$m or less, further preferably 170 $\mu$m or less, further more preferably 150 $\mu$m or less, particularly preferably 145 $\mu$m or less, still more preferably 140 $\mu$m or less, even still more preferably 138 $\mu$m or less, further still more preferably 135 $\mu$m or less from the viewpoint of the handling property of the electrode for electrolysis.

A thickness of 315 $\mu$m or less can provide a particularly good handling property. Further, from a similar viewpoint as above, the thickness is preferably 130 $\mu$m or less, more preferably less than 130 $\mu$m, further preferably 115 $\mu$m or less, further more preferably 65 $\mu$m or less. The lower limit value is not particularly limited, but is preferably 1 $\mu$m or more, more preferably 5 $\mu$m or more for practical reasons, more preferably 20 $\mu$m or more. The thickness of the electrode can be determined by measurement with a digimatic thickness gauge (Mitutoyo Corporation, minimum scale 0.001 mm). The thickness of the substrate for electrode for electrolysis can be measured in the same manner as in the case of the electrode for electrolysis. The thickness of the catalyst layer can be determined by subtracting the thickness of the substrate for electrode for electrolysis from the thickness of the electrode for electrolysis.

In the present embodiment, the electrode for electrolysis preferably contains at least one catalytic component selected from the group consisting of Ru, Rh, Pd, Ir, Pt, Au, Ti, V, Cr, Mn, Fe, Co, Ni, Cu, Zn, Y, Zr, Nb, Mo, Ag, Ta, W, Re, Os, Al, In, Sn, Sb, Ga, Ge, B, C, N, O, Si, P, S, La, Ce, Pr, Nd, Pm, Sm, Eu, Gd, Tb, and Dy from the viewpoint of achieving sufficient electrolytic performance.

In the electrode for electrolysis in the present embodiment, from the viewpoint that the electrode for electrolysis, if being an electrode having a broad elastic deformation region, can provide better handling property and has a better adhesive force to a membrane such as an ion exchange membrane and a microporous membrane, a degraded electrode, a feed conductor having no catalyst coating, and the like, the thickness of the electrode for electrolysis is preferably 315 $\mu$m or less, more preferably 220 $\mu$m or less, further preferably 170 $\mu$m or less, still more preferably 150 $\mu$m or less, particularly preferably 145 $\mu$m or less, still more preferably 140 $\mu$m or less, even still more preferably 138 $\mu$m or less, further still more preferably 135 $\mu$m or less. A thickness of 315 $\mu$m or less can provide particularly good handling property. Further, from a similar viewpoint as above, the thickness is preferably 130 $\mu$m or less, more preferably less than 130 $\mu$m, further preferably 115 $\mu$m or less, further more preferably 65 $\mu$m or less. The lower limit value is not particularly limited, but is preferably 1 $\mu$m or more, more preferably 5 $\mu$m or more for practical reasons, more preferably 20 $\mu$m or more. In the present embodiment, "having a broad elastic deformation region" means that, when an electrode for electrolysis is wound to form a wound body, warpage derived from winding is unlikely to occur after the wound state is released. The thickness of the electrode for electrolysis refers to, when a catalyst layer mentioned below is included, the total thickness of both the substrate for electrode for electrolysis and the catalyst layer.

(Method for producing electrode for electrolysis)

Next, one embodiment of the method for producing the electrode for electrolysis 101 will be described in detail.
In the present embodiment, the electrode for electrolysis 101 can be produced by forming the first layer 20, preferably the second layer 30, on the substrate for electrode for electrolysis by a method such as baking of a coating film under an oxygen atmosphere (pyrolysis), or ion plating, plating, or thermal spraying. The production method of the present embodiment as mentioned can achieve a high productivity of the electrode for electrolysis 101. Specifically, a catalyst layer is formed on the substrate for electrode for electrolysis by an application step of applying a coating liquid containing a catalyst, a drying step of drying the coating liquid, and a pyrolysis step of performing pyrolysis. Pyrolysis herein means that a metal salt which is to be a precursor is decomposed by heating into a metal or metal oxide and a gaseous substance. The decomposition product depends on the metal species to be used, type of the salt, and the atmosphere under which pyrolysis is performed, and many metals tend to form oxides in an oxidizing atmosphere. In an industrial process of producing an electrode, pyrolysis is usually performed in air, and a metal oxide or a metal hydroxide is formed in many cases.

(Formation of first layer of anode)

(Application step)

The first layer 20 is obtained by applying a solution in which at least one metal salt of ruthenium, iridium, and titanium is dissolved (first coating liquid) onto the substrate for electrode for electrolysis and then pyrolyzing (baking) the coating liquid in the presence of oxygen. The content of ruthenium, iridium, and titanium in the first coating liquid is substantially equivalent to that of the first layer 20.
The metal salts may be chlorides, nitrates, sulfates, metal alkoxides, and any other forms. The solvent of the first coating liquid can be selected depending on the type of the metal salt, and water and alcohols such as butanol can be used. As the solvent, water or a mixed solvent of water and an alcohol is preferable. The total metal concentration in the first coating liquid in which the metal salts are dissolved is not particularly limited, but is preferably in the range of 10 to 150 g/L in association with the thickness of the coating film to be formed by a single coating.
Examples of a method used as the method for applying the first coating liquid onto the substrate for electrode for electrolysis 10 include a dipping method of immersing the substrate for electrode for electrolysis 10 in the first coating liquid, a method of brushing the first coating liquid, a roll method using a sponge roll impregnated with the first coating liquid, and an electrostatic coating method in which the substrate for electrode for electrolysis 10 and the first coating liquid are oppositely charged and spraying is performed. Among these, preferable is the roll method or electrostatic coating method, which has an excellent industrial productivity.

(Drying step and pyrolysis step)

After being applied onto the substrate for electrode for electrolysis 10, the first coating liquid is dried at a temperature of 10 to 90°C and pyrolyzed in a baking furnace heated to 350 to 650°C. Between the drying and pyrolysis, preliminary baking at 100 to 350°C may be performed as required. The drying, preliminary baking, and pyrolysis temperature can be appropriately selected depending on the composition and the solvent type of the first coating liquid. A longer time period of pyrolysis per step is preferable, but from the viewpoint of the productivity of the electrode, 3 to 60 minutes is preferable, 5 to 20 minutes is more preferable.

The cycle of application, drying, and pyrolysis described above is repeated to form a covering (the first layer 20 of the anode) to a predetermined thickness. After the first layer 20 is formed and then further post-baked for a long period as required can further improve the stability of the first layer 20.

(Formation of second layer of anode)

The second layer 30, which is formed as required, is obtained, for example, by applying a solution containing a palladium compound and a platinum compound or a solution containing a ruthenium compound and a titanium compound (second coating liquid) onto the first layer 20 and then pyrolyzing the coating liquid in the presence of oxygen.

(Formation of first layer of cathode by pyrolysis method) (Application step)

The first layer 20 is obtained by applying a solution in which metal salts of various combinations are dissolved (first coating liquid) onto the substrate for electrode for electrolysis and then pyrolyzing (baking) the coating liquid in the presence of oxygen. The content of the metal in the first coating liquid is substantially equivalent to that in the first layer 20 after baking.

The metal salts may be chlorides, nitrates, sulfates, metal alkoxides, and any other forms. The solvent of the first coating liquid can be selected depending on the type of the metal salt, and water and alcohols such as butanol can be used. As the solvent, water or a mixed solvent of water and an alcohol is preferable. The total metal concentration in the first coating liquid in which the metal salts are dissolved is, but is not particularly limited to, preferably in the range of 10 to 150 g/L in association with the thickness of the coating film to be formed by a single coating.

Examples of a method used as the method for applying the first coating liquid onto the substrate for electrode for electrolysis 10 include a dipping method of immersing the substrate for electrode for electrolysis 10 in the first coating liquid, a method of brushing the first coating liquid, a roll method using a sponge roll impregnated with the first coating liquid, and an electrostatic coating method in which the substrate for electrode for electrolysis 10 and the first coating liquid are oppositely charged and spraying is performed. Among these, preferable is the roll method or electrostatic coating method, which has an excellent industrial productivity.

(Drying step and pyrolysis step)

After being applied onto the substrate for electrode for electrolysis 10, the first coating liquid is dried at a temperature of 10 to 90°C and pyrolyzed in a baking furnace heated to 350 to 650°C. Between the drying and pyrolysis, preliminary baking at 100 to 350°C may be performed as required. The drying, preliminary baking, and pyrolysis temperature can be appropriately selected depending on the composition and the solvent type of the first coating liquid. A longer time period of pyrolysis per step is preferable, but from the viewpoint of the productivity of the electrode, 3 to 60 minutes is preferable, 5 to 20 minutes is more preferable.

The cycle of application, drying, and pyrolysis described above is repeated to form a covering (the first layer 20) to a predetermined thickness. After the first layer 20 is formed and then further post-baked for a long period as required can further improve the stability of the first layer 20.

(Formation of intermediate layer)

The intermediate layer, which is formed as required, is obtained, for example, by applying a solution containing a palladium compound or platinum compound (second coating liquid) onto the substrate and then pyrolyzing the coating liquid in the presence of oxygen. Alternatively, a nickel oxide intermediate layer may be formed on the substrate surface only by heating the substrate, with no solution applied thereon.

(Formation of first layer of cathode by ion plating)

The first layer 20 can be formed also by ion plating.

An example includes a method in which the substrate is fixed in a chamber and the metal ruthenium target is irradiated with an electron beam. Evaporated metal ruthenium particles are positively charged in plasma in the chamber to deposit on the substrate negatively charged. The plasma atmosphere is argon and oxygen, and ruthenium deposits as ruthenium oxide on the substrate for electrode for electrolysis.

(Formation of first layer of cathode by plating)

The first layer 20 can be formed also by a plating method.

As an example, when the substrate is used as the cathode and subjected to electrolytic plating in an electrolyte solution containing nickel and tin, alloy plating of nickel and tin can be formed.

(Formation of first layer of cathode by thermal spraying)

The first layer 20 can be formed also by thermal spraying.

As an example, plasma spraying nickel oxide particles onto the substrate can form a catalyst layer in which metal nickel and nickel oxide are mixed.

(Formation of second layer of cathode)

The second layer 30, which is formed as required, is obtained, for example, by applying a solution containing an iridium compound, a palladium compound and a platinum compound or a solution containing a ruthenium compound onto the first layer 20 and then pyrolyzing such a solution in the presence of oxygen.

Examples of the membrane for use in the laminate of the present embodiment suitably include an ion exchange membrane.

Hereinafter, an ion exchange membrane will be described in detail.

[Ion exchange membrane]

The ion exchange membrane is not particularly limited as long as the membrane can be formed into a laminate with the electrode for electrolysis. Various ion exchange membranes may be employed. In the present embodiment, an ion exchange membrane is preferably used which has a membrane body containing a hydrocarbon polymer or fluorine-containing polymer having an ion exchange group and a coating layer provided on at least one surface of the membrane body. The coating layer contains inorganic material particles and a binder, and the specific surface area of the coating layer is preferably 0.1 to 10 $m^2/g$. In the ion exchange membrane having such a structure, the influence of gas generated during electrolysis on electrolytic performance is small, and stable electrolytic performance tends to be exhibited.

The membrane of a perfluorocarbon polymer into which an ion exchange group is introduced described above includes either one of a sulfonic acid layer having an ion exchange group derived from a sulfo group (a group represented by $-SO_3-$, hereinbelow also referred to as a "sulfonic acid group") or a carboxylic acid layer having an ion exchange group derived from a carboxyl group (a group represented by $-CO_2-$, hereinbelow also referred to as a "carboxylic acid group"). From the viewpoint of strength and dimensional stability, reinforcement core materials are preferably further included.

The inorganic material particles and binder will be described in detail in the section of description of the coating layer below.

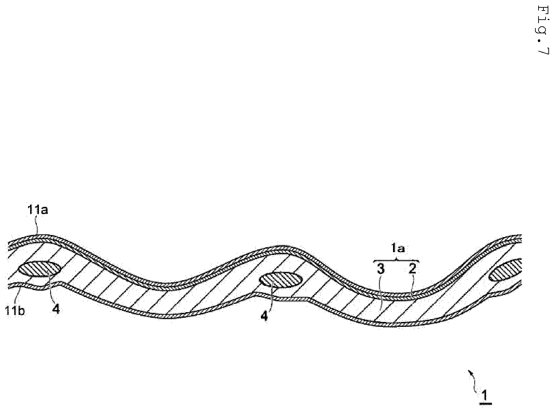

Figure 7 illustrates a cross-sectional schematic view showing one embodiment of an ion exchange membrane.

An ion exchange membrane 1 has a membrane body 1a containing a hydrocarbon polymer or fluorine-containing polymer having an ion exchange group and coating layers 11a and 11b formed on both the surfaces of the membrane body 1a.

In the ion exchange membrane 1, the membrane body 1a comprises a sulfonic acid layer 3 having an ion exchange group derived from a sulfo group (a group represented by $-SO_3-$, hereinbelow also referred to as a "sulfonic acid group") and a carboxylic acid layer 2 having an ion exchange group derived from a carboxyl group (a group represented by $-CO_2-$, hereinbelow also referred to as a "carboxylic acid group"), and the reinforcement core materials 4 enhance the strength and dimensional stability. The ion exchange membrane 1, as comprising the sulfonic acid layer 3 and the carboxylic acid layer 2, is suitably used as an anion exchange membrane.

The ion exchange membrane may include either one of the sulfonic acid layer and the carboxylic acid layer. The ion exchange membrane may not be necessarily reinforced by reinforcement core materials, and the arrangement of the reinforcement core materials is not limited to the example in Figure 7.

(Membrane body)

First, the membrane body 1a constituting the ion exchange membrane 1 will be described.

The membrane body 1a should be one that has a function of selectively allowing cations to permeate and comprises a hydrocarbon polymer or a fluorine-containing polymer having an ion exchange group. Its configuration and material are not particularly limited, and preferred ones can be appropriately selected.

The hydrocarbon polymer or fluorine-containing polymer having an ion exchange group in the membrane body 1a can be obtained from a hydrocarbon polymer or fluorine-containing polymer having an ion exchange group precursor capable of forming an ion exchange group by hydrolysis or the like. Specifically, after a polymer comprising a main chain of a fluorinated hydrocarbon, having, as a pendant side chain, a group convertible into an ion exchange group by hydrolysis or the like (ion exchange group precursor), and being melt-processable (hereinbelow, referred to as the "fluorine-containing polymer (a)" in some cases) is used to prepare a precursor of the membrane body 1a, the membrane body 1a can be obtained by converting the ion exchange group precursor into an ion exchange group.

The fluorine-containing polymer (a) can be produced, for example, by copolymerizing at least one monomer selected from the following first group and at least one monomer selected from the following second group and/or the following third group. The fluorine-containing polymer (a) can be also produced by homopolymerization of one monomer selected from any of the following first group, the following second group, and the following third group.

Examples of the monomers of the first group include vinyl fluoride compounds. Examples of the vinyl fluoride compounds include vinyl fluoride, tetrafluoroethylene, hexafluoropropylene, vinylidene fluoride, trifluoroethylene, chlorotrifluoroethylene, and perfluoro alkyl vinyl ethers. Particularly when the ion exchange membrane is used as a membrane for alkali electrolysis, the vinyl fluoride compound is preferably a perfluoro monomer, and a perfluoro monomer selected from the group consisting of tetrafluoroethylene, hexafluoropropylene, and perfluoro alkyl vinyl ethers is preferable.

Examples of the monomers of the second group include vinyl compounds having a functional group convertible into a carboxylic acid-type ion exchange group (carboxylic acid group). Examples of the vinyl compounds having a functional group convertible into a carboxylic acid group include monomers represented by $CF_2=CF(OCF_2CYF)_s-O(CZF)_t-COOR$, wherein s represents an integer of 0 to 2, t represents an integer of 1 to 12, Y and Z each independently represent F or $CF_3$, and R represents a lower alkyl group (a lower alkyl group is an alkyl group having 1 to 3 carbon atoms, for example).

Among these, compounds represented by $CF_2=CF(OCF_2CYF)_n-O(CF_2)_m-COOR$ are preferable. Wherein n represents an integer of 0 to 2, m represents an integer of 1 to 4, Y represents F or $CF_3$, and R represents $CH_3$, $C_2H_5$, or $C_3H_7$.

When the ion exchange membrane is used as a cation exchange membrane for alkali electrolysis, a perfluoro compound is preferably at least used as the monomer, but the alkyl group (see the above R) of the ester group is lost from the polymer at the time of hydrolysis, and therefore the alkyl group (R) need not be a perfluoroalkyl group in which all hydrogen atoms are replaced by fluorine atoms.

Of the above monomers, the monomers represented below are more preferable as the monomers of the second group:

$$CF_2=CFOCF_2-CF(CF_3)OCF_2COOCH_3$$

$$CF_2=CFOCF_2CF(CF_3)O(CF_2)_2COOCH_3$$

$$CF_2=CF[OCF_2-CF(CF_3)]_2O(CF_2)_2COOCH_3$$

$$CF_2=CFOCF_2CF(CF_3)O(CF_2)_3COOCH_3$$

$$CF_2=CFO(CF_2)_2COOCH_3$$

$$CF_2=CFO(CF_2)_3COOCH_3$$

Examples of the monomers of the third group include vinyl compounds having a functional group convertible into a sulfone-type ion exchange group (sulfonic acid group). As the vinyl compounds having a functional group convertible into a sulfonic acid group, for example, monomers represented by $CF_2=CFO-X-CF_2-SO_2F$ are preferable, wherein X represents a perfluoroalkylene group. Specific examples of these include the monomers represented below:

$$CF_2=CFOCF_2CF_2SO_2F$$

$$CF_2=CFOCF_2CF(CF_3)OCF_2CF_2SO_2F$$

$$CF_2=CFOCF_2CF(CF_3)OCF_2CF_2CF_2SO_2F$$

$$CF_2=CF(CF_2)_2SO_2F$$

$$CF_2=CFO[CF_2CF(CF_3)O]_2CF_2CF_2SO_2F$$

$$CF_2=CFOCF_2CF(CF_2OCF_3)OCF_2CF_2SO_2F$$

Among these, $CF_2=CFOCF_2CF(CF_3)OCF_2CF_2CF_2SO_2F$ and $CF_2=CFOCF_2CF(CF_3)OCF_2CF_2SO_2F$ are more preferable.

The copolymer obtained from these monomers can be produced by a polymerization method developed for homopolymerization and copolymerization of ethylene fluoride, particularly a general polymerization method used for tetrafluoroethylene. For example, in a nonaqueous method, a polymerization reaction can be performed in the presence of a radical polymerization initiator such as a perfluorocarbon peroxide or an azo compound under the conditions of a temperature of 0 to 200°C and a pressure of 0.1 to 20 MPa using an inert solvent such as a perfluorohydrocarbon or a chlorofluorocarbon.

In the above copolymerization, the type of combination of the above monomers and their proportion are not particularly limited and are selected and determined depending on the type and amount of the functional group desired to be imparted to the fluorine-containing polymer to be obtained. For example, when a fluorine-containing polymer containing only a carboxylic acid group is formed, at least one monomer should be selected from each of the first group and the second group described above and copolymerized. In addition, when a fluorine-containing polymer containing only a sulfonic acid group is formed, at least one monomer should be selected from each of the first group and the third group and copolymerized. Further, when a fluorine-containing polymer having a carboxylic acid group and a sulfonic acid group is formed, at least one monomer should be selected from each of the first group, the second group, and the third group described above and copolymerized. In this case, the target fluorine-containing polymer can be obtained also by separately preparing a copolymer comprising the monomers of the first group and the second group described above and a copolymer comprising the monomers of the first group and the third group described above, and then mixing the copolymers. The mixing proportion of the monomers is not particularly limited, and when the amount of the functional groups per unit polymer is increased, the proportion of the monomers selected from the second group and the third group described above should be increased.

The total ion exchange capacity of the fluorine-containing copolymer is not particularly limited, but is preferably 0.5 to 2.0 mg equivalent/g, more preferably 0.6 to 1.5 mg equivalent/g. The total ion exchange capacity herein refers to the equivalent of the exchange group per unit mass of the dry resin and can be measured by neutralization titration or the like.

In the membrane body 1a of the ion exchange membrane 1, a sulfonic acid layer 3 containing a fluorine-containing polymer having a sulfonic acid group and a carboxylic acid layer 2 containing a fluorine-containing polymer having a carboxylic acid group are laminated. By providing the membrane body 1a having such a layer configuration, selective permeability for cations such as sodium ions can be further improved.

The ion exchange membrane 1 is arranged in an electrolyzer such that, usually, the sulfonic acid layer 3 is located on the anode side of the electrolyzer and the carboxylic acid layer 2 is located on the cathode side of the electrolyzer.

The sulfonic acid layer 3 is preferably constituted by a material having low electrical resistance and has a membrane thickness larger than that of the carboxylic acid layer 2 from the viewpoint of membrane strength. The membrane thickness of the sulfonic acid layer 3 is preferably 2 to 25 times, more preferably 3 to 15 times that of the carboxylic acid layer 2.

The carboxylic acid layer 2 preferably has high anion exclusion properties even if it has a small membrane thickness. The anion exclusion properties here refer to the property of trying to hinder intrusion and permeation of anions into and through the ion exchange membrane 1. In order to raise the anion exclusion properties, it is effective to dispose a carboxylic acid layer having a small ion exchange capacity to the sulfonic acid layer.

As the fluorine-containing polymer for use in the sulfonic acid layer 3, preferable is a polymer obtained by using $CF_2=CFOCF_2CF(CF_3)OCF_2CF_2SO_2F$ as the monomer of the third group.

As the fluorine-containing polymer for use in the carboxylic acid layer 2, preferable is a polymer obtained by using $CF_2=CFOCF_2CF(CF_2)O(CF_2)_2COOCH_3$ as the monomer of the second group.

(Coating layer)

The ion exchange membrane preferably has a coating layer on at least one surface of the membrane body.

As shown in Figure 7, in the ion exchange membrane 1, coating layers 11a and 11b are formed on both the surfaces of the membrane body 1a.

The coating layers contain inorganic material particles and a binder.

The average particle size of the inorganic material particles is preferably 0.90 μm or more. When the average particle size of the inorganic material particles is 0.90 μm or more, durability to impurities is extremely improved, in addition to attachment of gas. That is, enlarging the average particle size of the inorganic material particles as well as satisfying the value of the specific surface area mentioned above can achieve a particularly marked effect. Irregular inorganic material particles are preferable because the average particle size and specific surface area as above are satisfied. Inorganic material particles obtained by melting and inorganic material particles obtained by grinding raw ore can be used. Inorganic material particles obtained by grinding raw ore can preferably be used.

The average particle size of the inorganic material particles can be 2 μm or less. When the average particle size of the inorganic material particles is 2 μm or less, it is possible to prevent damage of the membrane due to the inorganic material particles. The average particle size of the inorganic material particle is more preferably 0.90 to 1.2 μm.

Here, the average particle size can be measured by a particle size analyzer ("SALD2200", SHIMADZU CORPORATION).

The inorganic material particles preferably have irregular shapes. Such shapes improve resistance to impurities further. The inorganic material particles preferably have a broad particle size distribution.

The inorganic material particles preferably contain at least one inorganic material selected from the group consisting of oxides of Group IV elements in the Periodic Table, nitrides of Group IV elements in the Periodic Table, and carbides of Group IV elements in the Periodic Table. From the viewpoint of durability, zirconium oxide particle is more preferable.

The inorganic material particles are preferably inorganic material particles produced by grinding the raw ore of the inorganic material particles or inorganic material particles, as spherical particles having a uniform diameter, obtained by melt-purifying the raw ore of the inorganic material particles.

Examples of means for grinding raw ore include, but are not particularly limited to, ball mills, bead mills, colloid mills, conical mills, disc mills, edge mills, grain mills, hammer mills, pellet mills, VSI mills, Wiley mills, roller mills, and jet mills. After grinding, the particles are preferably washed. As the washing method, the particles are preferably treated with acid. This treatment can reduce impurities such as iron attached to the surface of the inorganic material particles.

The coating layer preferably contains a binder. The binder is a component that forms the coating layers by retaining the inorganic material particles on the surface of the ion exchange membrane. The binder preferably contains a fluorine-containing polymer from the viewpoint of durability to the electrolyte solution and products from electrolysis.

As the binder, a fluorine-containing polymer having a carboxylic acid group or sulfonic acid group is more preferable, from the viewpoint of durability to the electrolyte solution and products from electrolysis and adhesion to the surface of the ion exchange membrane. When a coating layer is provided on a layer containing a fluorine-containing polymer having a sulfonic acid group (sulfonic acid layer), a fluorine-containing polymer having a sulfonic acid group is further preferably used as the binder of the coating layer. Alternatively, when a coating layer is provided on a layer containing a fluorine-containing polymer having a carboxylic acid group (carboxylic acid layer), a fluorine-containing polymer having a carboxylic acid group is further preferably used as the binder of the coating layer.

In the coating layer, the content of the inorganic material particles is preferably 40 to 90% by mass, more preferably 50 to 90% by mass. The content of the binder is preferably 10 to 60% by mass, more preferably 10 to 50% by mass.

The distribution density of the coating layer in the ion exchange membrane is preferably 0.05 to 2 mg per 1 cm$^2$. When the ion exchange membrane has asperities on the surface thereof, the distribution density of the coating layer is preferably 0.5 to 2 mg per 1 cm$^2$.

As the method for forming the coating layer, which is not particularly limited, a known method can be used. An example is a method including applying by a spray or the like a coating liquid obtained by dispersing inorganic material particles in a solution containing a binder.

(Reinforcement core materials)

The ion exchange membrane preferably has reinforcement core materials arranged inside the membrane body.

The reinforcement core materials are members that enhance the strength and dimensional stability of the ion exchange membrane. By arranging the reinforcement core materials inside the membrane body, particularly expansion and contraction of the ion exchange membrane can be controlled in the desired range. Such an ion exchange membrane does not expand or contract more than necessary during electrolysis and the like and can maintain excellent dimensional stability for a long term.

The configuration of the reinforcement core materials is not particularly limited, and, for example, the reinforcement core materials may be formed by spinning yarns referred to as reinforcement yarns. The reinforcement yarns here refer to yarns that are members constituting the reinforcement core materials, can provide the desired dimensional stability and mechanical strength to the ion exchange membrane, and can be stably present in the ion exchange membrane. By using the reinforcement core materials obtained by spinning such reinforcement yarns, better dimensional stability and mechanical strength can be provided to the ion exchange membrane.

The material of the reinforcement core materials and the reinforcement yarns used for these is not particularly limited but is preferably a material resistant to acids, alkalis, etc., and a fiber comprising a fluorine-containing polymer is preferable because long-term heat resistance and chemical resistance are required.

Examples of the fluorine-containing polymer to be used in the reinforcement core materials include polytetrafluoroethylene (PTFE), tetrafluoroethylene-perfluoroalkyl vinyl ether copolymers (PFA), tetrafluoroethylene-ethylene copolymers (ETFE), tetrafluoroethylene-hexafluoropropylene copolymers, trifluorochloroethylene-ethylene copolymers, and vinylidene fluoride polymers (PVDF). Among these, fibers comprising polytetrafluoroethylene are preferably used from the viewpoint of heat resistance and chemical resistance.

The yarn diameter of the reinforcement yarns used for the reinforcement core materials is not particularly limited, but is preferably 20 to 300 deniers, more preferably 50 to 250 deniers. The weave density (fabric count per unit length) is preferably 5 to 50/inch. The form of the reinforcement core materials is not particularly limited, for example, a woven fabric, a nonwoven fabric, and a knitted fabric are used, but is preferably in the form of a woven fabric. The thickness of the woven fabric to be used is preferably 30 to 250 $\mu$m, more preferably 30 to 150 $\mu$m.

As the woven fabric or knitted fabric, monofilaments, multifilaments, or yarns thereof, a slit yarn, or the like can be used, and various types of weaving methods such as a plain weave, a leno weave, a knit weave, a cord weave, and a seersucker can be used.

The weave and arrangement of the reinforcement core materials in the membrane body are not particularly limited, and preferred arrangement can be appropriately provided considering the size and form of the ion exchange membrane, physical properties desired for the ion exchange membrane, the use environment, and the like.

For example, the reinforcement core materials may be arranged along one predetermined direction of the membrane body, but from the viewpoint of dimensional stability, it is preferred that the reinforcement core materials be arranged along a predetermined first direction, and other reinforcement core materials be arranged along a second direction substantially perpendicular to the first direction. By arranging the plurality of reinforcement core materials substantially orthogonally to the longitudinal direction inside the membrane body, it is possible to impart better dimensional stability and mechanical strength in many directions. For example, arrangement in which the reinforcement core materials arranged along the longitudinal direction (warp yarns) and the reinforcement core materials arranged along the transverse direction (weft yarns) are woven on the surface side of the membrane body is preferred. The arrangement is more preferably in the form of plain weave driven and woven by allowing warps and wefts to run over and under each other alternately, leno weave in which two warps are woven into wefts while twisted, basket weave driven and woven by inserting, into two or more parallelly-arranged warps, wefts of the same number, or the like, from the viewpoint of dimensional stability, mechanical strength and easy-production.

It is preferred that particularly, the reinforcement core materials be arranged along both directions, the MD (Machine Direction) and TD (Transverse Direction) of the ion exchange membrane. In other words, the reinforcement core materials are preferably plain-woven in the MD and TD.

Here, the MD refers to the direction in which the membrane body and various core materials (for example, the reinforcement core materials, reinforcement yarns, and sacrifice yarns described later) are conveyed in an ion exchange membrane production step described later (flow direction), and the TD refers to the direction substantially perpendicular to the MD. Yarns woven along the MD are referred to as MD yarns, and yarns woven along the TD are referred to as TD yarns. Usually, the ion exchange membrane used for electrolysis is rectangular, and in many cases, the longitudinal direction is the MD, and the width direction is the TD. By weaving the reinforcement core materials that are MD yarns and the reinforcement core materials that are TD yarns, it is possible to impart better dimensional stability and mechanical strength in many directions.

The arrangement interval of the reinforcement core materials is not particularly limited, and preferred arrangement can be appropriately provided considering physical properties desired for the ion exchange membrane, the use environment, and the like.

The aperture ratio for the reinforcement core materials is not particularly limited, but is preferably 30% or more, more preferably 50% or more and 90% or less. The aperture ratio is preferably 30% or more from the viewpoint of the electrochemical properties of the ion exchange membrane, and preferably 90% or less from the viewpoint of the mechanical strength of the ion exchange membrane.

The aperture ratio for the reinforcement core materials herein refers to a ratio of a total area of a surface through which substances such as ions (an electrolyte solution and cations contained therein (e.g., sodium ions)) can pass (B) to the area of either one surface of the membrane body (A) (B/A). The total area of the surface through which substances such as ions can pass (B) can refer to the total areas of regions in which in the ion exchange membrane, cations, an electrolytic solution, and the like are not blocked by the reinforcement core materials and the like contained in the ion exchange membrane.

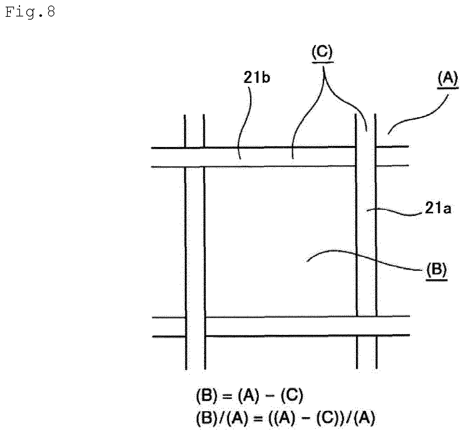

Figure 8 illustrates a schematic view for explaining the aperture ratio of reinforcement core materials constituting the ion exchange membrane.

Figure 8, in which a portion of the ion exchange membrane is enlarged, shows only the arrangement of the reinforcement core materials 21a and 21b in the regions, omitting illustration of the other members.

By subtracting the total area of the reinforcement core materials (C) from the area of the region surrounded by the reinforcement core materials 21a arranged along the longitudinal direction and the reinforcement core materials 21b arranged along the transverse direction, the region including the area of the reinforcement core materials (A), the total area of regions through which substances such as ions can pass (B) in the area of the above-described region (A) can be obtained. That is, the aperture ratio can be determined by the following formula (I) :

$$\texttt{Aperture ratio} = \texttt{(B)/(A)} = \texttt{((A)-(C))/(A)} \texttt{ ... (I)}$$

Among the reinforcement core materials, a particularly preferred form is tape yarns or highly oriented monofilaments comprising PTFE from the viewpoint of chemical resistance and heat resistance.
Specifically, reinforcement core materials forming a plain weave in which 50 to 300 denier tape yarns obtained by slitting a high strength porous sheet comprising PTFE into a tape form, or 50 to 300 denier highly oriented monofilaments comprising PTFE are used and which has a weave density of 10 to 50 yarns or monofilaments/inch and has a thickness in the range of 50 to 100 $\mu$m are more preferred. The aperture ratio of an ion exchange membrane comprising such reinforcement core materials is further preferably 60% or more.
Examples of the shape of the reinforcement yarns include round yarns and tape yarns.

(Continuous holes)

The ion exchange membrane preferably has continuous holes inside the membrane body.
The continuous holes refer to holes that can be flow paths for ions generated in electrolysis and an electrolyte solution. The continuous holes, which are tubular holes formed inside the membrane body, are formed by dissolution of sacrifice core materials (or sacrifice yarns) described below. The shape, diameter, or the like of the continuous holes can be controlled by selecting the shape or diameter of the sacrifice core materials (sacrifice yarns).
Forming the continuous holes inside the ion exchange membrane can ensure the mobility of an electrolyte solution on electrolysis. The shape of the continuous holes is not particularly limited, but may be the shape of sacrifice core materials to be used for formation of the continuous holes in accordance with the production method described below.
The continuous holes are preferably formed so as to alternately pass on the anode side (sulfonic acid layer side) and the cathode side (carboxylic acid layer side) of the reinforcement core materials. With such a structure, in a portion in which continuous holes are formed on the cathode side of the reinforcement core materials, ions (e.g., sodium ions) transported through the electrolyte solution with which the continuous holes are filled can flow also on the cathode side of the reinforcement core materials. As a result, the flow of cations is not interrupted, and thus, it is possible to further reduce the electrical resistance of the ion exchange membrane.
The continuous holes may be formed along only one predetermined direction of the membrane body constituting the ion exchange membrane, but are preferably formed in both the longitudinal direction and the transverse direction of the membrane body from the viewpoint of exhibiting more stable electrolytic performance.

[Method for producing ion exchange membrane]

A suitable example of a method for producing an ion exchange membrane includes a method including the following steps (1) to (6):

Step (1): the step of producing a fluorine-containing polymer having an ion exchange group or an ion exchange group precursor capable of forming an ion exchange group by hydrolysis,
Step (2): the step of weaving at least a plurality of reinforcement core materials, as required, and sacrifice yarns having a property of dissolving in an acid or an alkali, and forming continuous holes, to obtain a reinforcing material in which the sacrifice yarns are arranged between the reinforcement core materials adjacent to each other,
Step (3): the step of forming into a film the above fluorine-containing polymer having an ion exchange group or an ion exchange group precursor capable of forming an ion exchange group by hydrolysis,
Step (4): the step of embedding the above reinforcing materials, as required, in the above film to obtain a membrane body inside which the reinforcing materials are arranged,
Step (5): the step of hydrolyzing the membrane body obtained in the step (4) (hydrolysis step), and
Step (6): the step of providing a coating layer on the membrane body obtained in the step (5) (application step) .

Hereinafter, each of the steps will be described in detail.

Step (1): Step of producing fluorine-containing polymer

In the step (1), raw material monomers described in the first group to the third group above are used to produce a fluorine-containing polymer. In order to control the ion exchange capacity of the fluorine-containing polymer, the mixture ratio of the raw material monomers should be adjusted in the production of the fluorine-containing polymer forming the layers.

Step (2): Step of producing reinforcing materials

The reinforcing material is a woven fabric obtained by weaving reinforcement yarns or the like. The reinforcing material is embedded in the membrane to thereby form reinforcement core materials. When an ion exchange membrane having continuous holes is formed, sacrifice yarns are additionally woven into the reinforcing material. The amount of the sacrifice yarns contained in this case is preferably 10 to 80% by mass, more preferably 30 to 70% by mass based on the entire reinforcing material. Weaving the sacrifice yarns can also prevent yarn slippage of the reinforcement core materials.

As the sacrifice yarns, which have solubility in the membrane production step or under an electrolysis environment, rayon, polyethylene terephthalate (PET), cellulose, polyamide, and the like are used. Monofilaments or multifilaments having a thickness of 20 to 50 deniers and comprising polyvinyl alcohol and the like are also preferred.

In the step (2), the aperture ratio, arrangement of the continuous holes, and the like can be controlled by adjusting the arrangement of the reinforcement core materials and the sacrifice yarns.

Step (3): Step of film formation

In the step (3), the fluorine-containing polymer obtained in the step (1) is formed into a film by using an extruder. The film may be a single-layer configuration, a two-layer configuration of a sulfonic acid layer and a carboxylic acid layer as mentioned above, or a multilayer configuration of three layers or more.

Examples of the film forming method include the following:

a method in which a fluorine-containing polymer having a carboxylic acid group and a fluorine-containing polymer having a sulfonic acid group are separately formed into films; and
a method in which fluorine-containing polymer having a carboxylic acid group and a fluorine-containing polymer having a sulfonic acid group are coextruded into a composite film.

The number of each film may be more than one. Coextrusion of different films is preferred because of its contribution to an increase in the adhesive strength in the interface.

Step (4): Step of obtaining membrane body

In the step (4), the reinforcing material obtained in the step (2) is embedded in the film obtained in the step (3) to provide a membrane body including the reinforcing material therein.

Preferable examples of the method for forming a membrane body include (i) a method in which a fluorine-containing polymer having a carboxylic acid group precursor (e.g., carboxylate functional group) (hereinafter, a layer comprising the same is referred to as the first layer) located on the cathode side and a fluorine-containing polymer having a sulfonic acid group precursor (e.g., sulfonyl fluoride functional group) (hereinafter, a layer comprising the same is referred to as the second layer) are formed into a film by a coextrusion method, and, by using a heat source and a vacuum source as required, a reinforcing material and the second layer/first layer composite film are laminated in this order on breathable heat-resistant release paper on a flat plate or drum having many pores on the surface thereof and integrated at a temperature at which each polymer melts while air among each of the layers was evacuated by reduced pressure; and (ii) a method in which, in addition to the second layer/first layer composite film, a fluorine-containing polymer having a sulfonic acid group precursor is singly formed into a film (the third layer) in advance, and, by using a heat source and a vacuum source as required, the third layer film, the reinforcement core materials, and the composite film comprising the second layer/first layer are laminated in this order on breathable heat-resistant release paper on a flat plate or drum having many pores on the surface thereof and integrated at a temperature at which each polymer melts while air among each of the layers was evacuated by reduced pressure.

Coextrusion of the first layer and the second layer herein contributes to an increase in the adhesive strength at the interface.

The method including integration under a reduced pressure is characterized by making the third layer on the reinforcing material thicker than that of a pressure-application press method. Further, since the reinforcing material is fixed on the inner surface of the membrane body, the method has a property of sufficiently retaining the mechanical strength of the ion exchange membrane.

The variations of lamination described here are exemplary, and coextrusion can be performed after a preferred lamination pattern (for example, the combination of layers) is appropriately selected considering the desired layer configuration of the membrane body and physical properties, and the like.

For the purpose of further improving the electric properties of the ion exchange membrane, it is also possible to additionally interpose a fourth layer comprising a fluorine-containing polymer having both a carboxylic acid group precursor and a sulfonic acid group precursor between the first layer and the second layer or to use a fourth layer comprising a fluorine-containing polymer having both a carboxylic acid group precursor and a sulfonic acid group precursor instead of the second layer.

The method for forming the fourth layer may be a method in which a fluorine-containing polymer having a carboxylic acid group precursor and a fluorine-containing polymer having a sulfonic acid group precursor are separately produced and then mixed or may be a method in which a monomer having a carboxylic acid group precursor and a monomer having a sulfonic acid group precursor are copolymerized.

When the fourth layer is used as a component of the ion exchange membrane, a coextruded film of the first layer and the fourth layer is formed, in addition to this, the third layer and the second layer are separately formed into films, and lamination may be performed by the method mentioned above. Alternatively, the three layers of the first layer/fourth layer/second layer may be simultaneously formed into a film by coextrusion.

In this case, the direction in which the extruded film flows is the MD. As mentioned above, it is possible to form a membrane body containing a fluorine-containing polymer having an ion exchange group on a reinforcing material.

Additionally, the ion exchange membrane preferably has protruded portions composed of the fluorine-containing polymer having a sulfonic acid group, that is, projections, on the surface side composed of the sulfonic acid layer. As a method for forming such projections, which is not particularly limited, a known method also can be employed including forming projections on a resin surface. A specific example of the method is a method of embossing the surface of the membrane body. For example, the above projections can be formed by using release paper embossed in advance when the composite film mentioned above, reinforcing material, and the like are integrated. In the case where projections are formed by embossing, the height and arrangement density of the projections can be controlled by controlling the emboss shape to be transferred (shape of the release paper).

(5) Hydrolysis step

In the step (5), a step of hydrolyzing the membrane body obtained in the step (4) to convert the ion exchange group precursor into an ion exchange group (hydrolysis step) is performed.

In the step (5), it is also possible to form dissolution holes in the membrane body by dissolving and removing the sacrifice yarns included in the membrane body with acid or alkali. The sacrifice yarns may remain in the continuous holes without being completely dissolved and removed. The sacrifice yarns remaining in the continuous holes may be dissolved and removed by the electrolyte solution when the ion exchange membrane is subjected to electrolysis.

The sacrifice yarn has solubility in acid or alkali in the step of producing an ion exchange membrane or under an electrolysis environment. The sacrifice yarns are eluted out to thereby form continuous holes at corresponding sites.

The step (5) can be performed by immersing the membrane body obtained in the step (4) in a hydrolysis solution containing acid or alkali. An example of the hydrolysis solution that can be used is a mixed solution containing KOH and dimethyl sulfoxide (DMSO).

The mixed solution preferably contains KOH of 2.5 to 4.0 N and DMSO of 25 to 35% by mass.

The temperature for hydrolysis is preferably 70 to 100°C. The higher the temperature, the larger can be the apparent thickness. The temperature is more preferably 75 to 100°C.

The time for hydrolysis is preferably 10 to 120 minutes. The longer the time, the larger can be the apparent thickness. The time is more preferably 20 to 120 minutes.

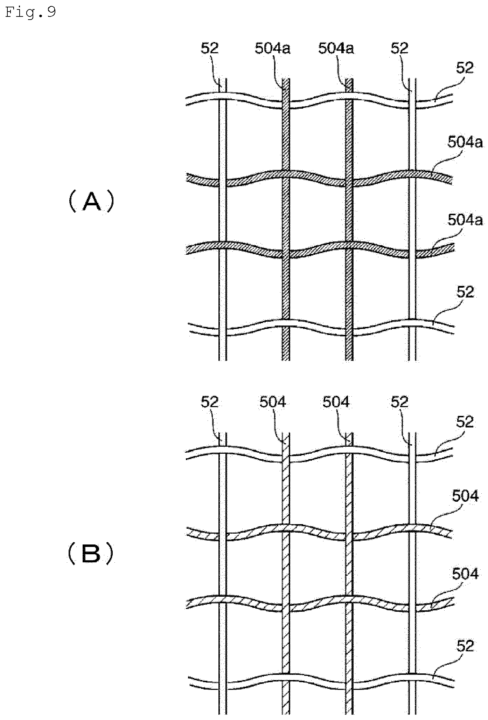

The step of forming continuous holes by eluting the sacrifice yarn will be now described in more detail. Figures 9(A) and 9(B) are schematic views for explaining a method for forming the continuous holes of the ion exchange membrane.

Figures 9(A) and 9(B) show reinforcement yarns 52, sacrifice yarns 504a, and continuous holes 504 formed by the sacrifice yarns 504a only, omitting illustration of the other members such as a membrane body.

First, the reinforcement yarns 52 that are to constitute reinforcement core materials in the ion exchange membrane and the sacrifice yarns 504a for forming the continuous holes 504 in the ion exchange membrane are used as interwoven reinforcing materials. Then, in the step (5), the sacrifice yarns 504a are eluted to form the continuous holes 504.

The above method is simple because the method for interweaving the reinforcement yarns 52 and the sacrifice yarns 504a may be adjusted depending on the arrangement of the reinforcement core materials and continuous holes in the membrane body of the ion exchange membrane.

Figure 9(A) exemplifies the plain-woven reinforcing material in which the reinforcement yarns 52 and sacrifice yarns 504a are interwoven along both the longitudinal direction and the lateral direction in the paper, and the arrangement of the reinforcement yarns 52 and the sacrifice yarns 504a in the reinforcing material may be varied as required.

(6) Application step

In the step (6), a coating layer can be formed by preparing a coating liquid containing inorganic material particles obtained by grinding raw ore or melting raw ore and a binder, applying the coating liquid onto the surface of the ion exchange membrane obtained in the step (5), and drying the coating liquid.

A preferable binder is a binder obtained by hydrolyzing a fluorine-containing polymer having an ion exchange group precursor with an aqueous solution containing dimethyl sulfoxide (DMSO) and potassium hydroxide (KOH) and then immersing the polymer in hydrochloric acid to replace the counterion of the ion exchange group by H+ (e.g., a fluorine-containing polymer having a carboxyl group or sulfo group). Thereby, the polymer is more likely to dissolve in water or ethanol mentioned below, which is preferable.

This binder is dissolved in a mixed solution of water and ethanol. The volume ratio between water and ethanol is preferably 10:1 to 1:10, more preferably 5:1 to 1:5, further preferably 2:1 to 1:2. The inorganic material particles are dispersed with a ball mill into the dissolution liquid thus obtained to thereby provide a coating liquid. In this case, it is also possible to adjust the average particle size and the like of the particles by adjusting the time and rotation speed during the dispersion. The preferable amount of the inorganic material particles and the binder to be blended is as mentioned above.

The concentration of the inorganic material particles and the binder in the coating liquid is not particularly limited, but a thin coating liquid is preferable. This enables uniform application onto the surface of the ion exchange membrane.

Additionally, a surfactant may be added to the dispersion when the inorganic material particles are dispersed. As the surfactant, nonionic surfactants are preferable, and examples thereof include HS-210, NS-210, P-210, and E-212 manufactured by NOF CORPORATION.

The coating liquid obtained is applied onto the surface of the ion exchange membrane by spray application or roll coating to thereby provide an ion exchange membrane.

Selection of raw materials of the membrane and a production step thereof are important for controlling As/Ai in the range of more than 0.87 and less than 1.1, and are suitably combined.

[Microporous membrane]

Suitable examples of the membrane constituting the laminate of the present embodiment also include a microporous membrane.

The microporous membrane is not particularly limited as long as the membrane can be formed into a laminate with the electrode for electrolysis, as mentioned above. Various microporous membranes may be employed.

The porosity of the microporous membrane of the present embodiment is not particularly limited, but can be 20 to 90, for example, and is preferably 30 to 85. The above porosity can be calculated by the following formula:

```
Porosity = (1 - (the weight of the membrane in a

dried state) / (the weight calculated from the volume calculated from the thickness, width, and length of the membrane and the density of the membrane material)) × 100
```

The average pore size of the microporous membrane of the present embodiment is not particularly limited, and can be 0.01 $\mu$m to 10 $\mu$m, for example, preferably 0.05 $\mu$m to 5 $\mu$m. With respect to the average pore size, for example, the membrane is cut vertically to the thickness direction, and the section is observed with an FE-SEM. The average pore size can be obtained by measuring the diameter of about 100 pores observed and averaging the measurements.

The thickness of the microporous membrane of the present embodiment is not particularly limited, and can be 10 $\mu$m to 1000 $\mu$m, for example, preferably 50 $\mu$m to 600 $\mu$m. The above thickness can be measured by using a micrometer (manufactured by Mitutoyo Corporation) or the like, for example.

Specific examples of the microporous membrane as mentioned above include Zirfon Perl UTP 500 manufactured by Agfa (also referred to as a Zirfon membrane in the present embodiment) and those described in International Publication No. WO 2013-183584 and International Publication No. WO 2016-203701.

In the present embodiment, the membrane preferably comprises a first ion exchange resin layer and a second ion exchange resin layer having an EW (ion exchange equivalent) different from that of the first ion exchange resin layer. Additionally, the membrane preferably comprises a first ion exchange resin layer and a second ion exchange resin layer having a functional group different from that of the first ion exchange resin layer. The ion exchange equivalent can be adjusted by the functional group to be introduced, and functional groups that may be introduced are as mentioned above.

(Water electrolysis)

The electrolyzer, as an electrolyzer in the case of electrolyzing water, has a configuration in which the ion exchange membrane in an electrolyzer for use in the case of electrolyzing common salt mentioned above is replaced by a microporous membrane. The raw material to be supplied, which is water, is different from that for the electrolyzer in the case of electrolyzing common salt mentioned above. As for the other components, components similar to that of the electrolyzer in the case of electrolyzing common salt can be employed also in the electrolyzer in the case of electrolyzing water. Since chlorine gas is generated in the anode chamber in the case of common salt electrolysis, titanium is used as the material of the anode chamber, but in the case of water electrolysis, only oxygen gas is generated in the anode chamber. Thus, a material identical to that of the cathode chamber can be used. An example thereof is nickel. For anode coating, catalyst coating for oxygen generation is suitable. Examples of the catalyst coating include metals, oxides, and hydroxides of the platinum group metals and transition metal group metals. For example, elements such as platinum, iridium, palladium, ruthenium, nickel, cobalt, and iron can be used.

[Wound body]

The laminate of the present embodiment may be in the form of a wound body. Downsizing the laminate by winding can further improve the handling property.

[Electrolyzer]

The new electrolyzer is obtained by incorporating the laminate of the present embodiment into the existing electrolyzer.

The electrolyzer of the present embodiment can be used in various applications of, for example, common salt electrolysis, water electrolysis and fuel cells.

The electrolyzer, i.e., the new electrolyzer of the present embodiment comprises an anode, an anode frame that supports the anode, an anode side gasket that is arranged on the anode frame, a cathode that is opposed to the anode, a cathode frame that supports the cathode, a cathode side gasket that is arranged on the cathode frame and is opposed to the anode side gasket, and a laminate comprising an electrode for electrolysis and a membrane, wherein the membrane satisfies an As/Ai of more than 0.87 and less than 1.1, wherein, with respect to an area of the membrane corresponding to an area in frames of the anode side and cathode side gaskets, Ai represents an area equalized by an equilibrium liquid in incorporation of the laminate into an electrolyzer and As represents an area equalized by an aqueous solution after electrolyzer operation.

In the present embodiment, in particular, As/Ai is more than 0.87 and less than 1.1, wherein, with respect to an area of the membrane corresponding to an area in frames of the anode side gasket and the cathode side gasket, Ai represents an area equalized by an equilibrium liquid in incorporation into an electrolyzer and As represents an area equalized by an aqueous solution after electrolyzer operation, i.e., during electrolyzer operation and in a washing step after stopping of operation.

The membrane satisfies any As/Ai in the range, and therefore damage of any electrode constituting the electrolyzer and any peripheral member and breakage of the membrane by itself can be effectively prevented, an improvement in work efficiency of renewal is achieved and also an improvement in durability of the electrolyzer is achieved, and excellent electrolytic performance also after renewal can be exhibited.

[Method for operating electrolyzer]

The method for operating an electrolyzer of the present embodiment relates to a method for operating an electrolyzer comprising
an anode,
an anode frame that supports the anode,
an anode side gasket that is arranged on the anode frame,
a cathode that is opposed to the anode,
a cathode frame that supports the cathode,

a cathode side gasket that is arranged on the cathode frame and is opposed to the anode side gasket, and a laminate comprising an electrode for electrolysis and a membrane, or a membrane arranged between the anode and the cathode.

First, a new membrane for renewal, or a laminate comprising an electrode for electrolysis and a new membrane is provided.

The new membrane for renewal is immersed in a predetermined equilibrium liquid during incorporation into an electrolyzer, and thus is allowed to be in an equilibrium state.

The new membrane for renewal, allowed to be in an equilibrium state by the equilibrium liquid, or the laminate obtained by stacking the new membrane for renewal and an electrode for electrolysis are incorporated into an electrolyzer, and sandwiched and fixed between the anode side gasket and the cathode side gasket.

The above operation allows the membrane to be in an equilibrium state by the equilibrium liquid in incorporation into the electrolyzer.

Next, operation of the electrolyzer is started to thereby allow the new membrane for renewal to be in an equilibrium state by the predetermined aqueous solution after electrolyzer operation, i.e., during electrolyzer operation or after stopping of operation.

That is, the membrane is in an equilibrium state by a predetermined aqueous solution, after the membrane is incorporated into the electrolyzer.

Specifically, the membrane is wetted by an aqueous solution for use in electrolysis, i.e., an electrolyte solution and thus is allowed to be in an equilibrium state during operation of the electrolyzer, and the membrane is wetted by an aqueous solution for use in washing of the electrolyzer, i.e., a washing liquid and thus is allowed to be in an equilibrium state after stopping of operation.

The membrane is swollen or shrunk and varied in dimension depending on the type of a liquid in contact therewith and/or the temperature of such a liquid. If the dimension difference between the dimension of the membrane in incorporation into an existing electrolyzer and the dimension of the membrane after electrolyzer operation, any electrode in the vicinity of the membrane and its peripheral member may be damaged and/or the membrane by itself may be broken.

In the method for operating an electrolyzer of the present embodiment, As/Ai is controlled to be more than 0.87 and less than 1.1, wherein, with respect to an area of the new membrane corresponding to an area in frames of the anode side gasket and the cathode side gasket that constitute an electrolyzer and that are formed from frames opposite to each other, Ai represents an area equalized by an equilibrium liquid in incorporation into an electrolyzer and As represents an area equalized by an aqueous solution after electrolyzer operation.

In the present embodiment, the types of the equilibrium liquid and aqueous solution, the temperature at which the membrane is allowed to be in an equilibrium state, the membrane material, and the like are suitably selected, and As/Ai is thus allowed to be more than 0.87 and less than 1.1, wherein, with respect to an area of the new membrane corresponding to an area in frames of the anode side gasket and the cathode side gasket, Ai represents an area of the membrane in a state equalized by the equilibrium liquid in incorporation of the laminate or membrane into an electrolyzer and As represents an area of the membrane in a state equalized by the aqueous solution after electrolyzer operation.

The equilibrium liquid for allowing the membrane to be in an equilibrium state during incorporation of the membrane into an electrolyzer can be, but not limited to the following, for example, a 0.00001 to 25 mol/L NaOH aqueous solution or a 0.04 to 1.5 mol/L NaHCO$_3$ aqueous solution.

The temperature of the "equilibrium liquid" is preferably 10 to 65°C from the viewpoint that pure water for use in a plant is used as it is without being warmed or cooled.

The "aqueous solution" here used as the electrolyte solution for electrolysis or the washing liquid for use in washing of the electrolyzer after stopping of operation is any aqueous solution different from the equilibrium liquid, and can be, but not limited to the following, for example, a 3.5 N NaCl aqueous solution, a 0.00001 to 25 mol/L NaOH aqueous solution, 0.04 to 1.5 mol/L NaHCO$_3$ aqueous solution, or pure water.

In detail, the aqueous solution as the electrolyte solution for electrolysis is preferably a NaCl aqueous solution, a KCl aqueous solution, a NaOH aqueous solution, or a KOH aqueous solution, and the aqueous solution as the washing liquid for washing is preferably pure water or a NaHCO$_3$ aqueous solution.

The temperature of the aqueous solution for electrolysis is preferably 10 to 95°C from the viewpoint that electrolytic performance is maintained in repeated stopping and re-starting.

The temperature of the aqueous solution for washing is preferably 10 to 65°C from the viewpoint that pure water for use in a plant is used as it is without being warmed or cooled and from the viewpoint that electrolytic performance is maintained in repeated stopping and re-starting.

Operation of an electrolyzer at an As/Ai of more than 0.87 enables excessive shrinkage of the membrane to be suppressed, and enables breakage of the membrane to be effectively prevented.

Operation of an electrolyzer at an As/Ai of less than 1.1 enables excessive shrinkage of the membrane to be suppressed, and enables damage of any electrode constituting the electrolyzer and any peripheral member to be effectively prevented.

According to the method for operating an electrolyzer of the present embodiment, As/Ai is controlled in the range, thereby enabling excessive expansion and shrinkage of the membrane to be suppressed during both electrolyzer operation and the step of washing the electrolyzer, enabling damage of any electrode constituting the electrolyzer, and its peripheral member, and breakage of the membrane by itself to be effectively prevented, enabling stable electrolyzer operation to be maintained for a long time, and enabling the electrolyzer to be used repeatedly many times.

As/Ai is preferably 0.90 or more and 1.09 or less, more preferably 0.909 or more and 1.086 or less, further still more preferably 0.915 or more and 1.05 or less, from the above viewpoints.

Examples

The present invention will be described in further detail with reference to Examples and Comparative Examples below, but the present invention is not limited to Examples below in any way.

(Membrane)

As the new membrane for use in renewal, an ion exchange membrane A produced as described below was used.

As a reinforcing material, 90 denier monofilaments made of polytetrafluoroethylene (PTFE) were used (hereinafter referred to as PTFE yarns). As sacrifice yarns, yarns obtained by twisting six 35 denier filaments of polyethylene terephthalate (PET) 200 times/m were used (hereinafter referred to as PET yarns). First, in each of the TD and the MD, the PTFE yarns and the sacrifice yarns were plain-woven with 24 PTFE yarns/inch so that two sacrifice yarns were arranged between adjacent PTFE yarns, to obtain a woven fabric. The resulting woven fabric was pressure-bonded by a roll to obtain a reinforcing material as a woven fabric having a thickness of 70 $\mu$m.

Next, a resin A of a dry resin that was a copolymer of $CF_2=CF_2$ and $CF_2=CFOCF_2CF(CF_3)OCF_2CF_2COOCH_3$ and had an ion exchange capacity of 0.85 mg equivalent/g, and a resin B of a dry resin that was a copolymer of $CF_2=CF_2$ and $CF_2=CFOCF_2CF(CF_3)OCF_2CF_2SO_2F$ and had an ion exchange capacity of 1.03 mg equivalent/g were provided.

Using these resin A and resin B, a two-layer film X in which the thickness of a resin A layer was 15 $\mu$m and the thickness of a resin B layer was 84 $\mu$m was obtained by a coextrusion T die method. Using only the resin B, a single-layer film Y having a thickness of 20 $\mu$m was obtained by a T die method.

Subsequently, release paper (embossed in a conical shape having a height of 50 $\mu$m), film Y, a reinforcing material, and the film X were laminated in this order on a hot plate having a heat source and a vacuum source inside and having micropores on its surface, heated and depressurized under the conditions of a hot plate surface temperature of 223°C and a degree of reduced pressure of 0.067 MPa for 2 minutes, and then the release paper was removed to obtain a composite membrane.

The film X was laminated with the resin B facing downward.

The resulting composite membrane was immersed in an aqueous solution at 80°C comprising 30% by mass of dimethyl sulfoxide (DMSO) and 15% by mass of potassium hydroxide (KOH) for 20 minutes for saponification. Then, the composite membrane was immersed in an aqueous solution at 50°C comprising 0.5 N sodium hydroxide (NaOH) for an hour to replace the counterion of the ion exchange group by Na, and then washed with water. Thereafter, the surface on the side of the resin B was polished with a relative speed between a polishing roll and the membrane set to 100 m/minute and a press amount of the polishing roll set to 2 mm to form opening portions. Then, the membrane was dried at 60°C.

Further, 20% by mass of zirconium oxide having a primary particle size of 1 $\mu$m was added to a 5% by mass ethanol solution of the acid-type resin of the resin B and dispersed to prepare a suspension, and the suspension was sprayed onto both the surfaces of the above composite membrane by a suspension spray method to form coatings of zirconium oxide on the surfaces of the composite membrane to obtain an ion exchange membrane A as the membrane.

The coating density of zirconium oxide measured by fluorescent X-ray measurement was 0.5 mg/cm$^2$. Here, the average particle size was measured by a particle size analyzer (manufactured by SHIMADZU CORPORATION, "SALD(R) 2200") .

(Electrode for electrolysis)

As the electrode for electrolysis, the following was used.

A nickel foil having a width of 280 mm, a length of 3000 mm, and a gauge thickness of 22 $\mu$m was provided.

One surface of the nickel foil was subjected to roughening treatment by means of nickel plating.

The arithmetic average roughness Ra of the roughened surface was 0.95 $\mu$m.

For surface roughness measurement, a probe type surface roughness measurement instrument SJ-310 (Mitutoyo Corporation) was used.

A measurement sample was placed on the surface plate parallel to the ground surface to measure the arithmetic average roughness Ra under measurement conditions as described below. The measurement was repeated 6 times, and the average value was listed.

<Probe shape> conical taper angle = 60°, tip radius = 2 $\mu$m, static measuring force = 0.75 mN
<Roughness standard> JIS2001
<Evaluation curve> R
<Filter> GAUSS
<Cutoff value $\lambda c$> 0.8 mm
<Cutoff value $\lambda s$> 2.5 $\mu$m
<Number of sections> 5
<Pre-running, post-running> available

A porous foil was formed by perforating this nickel foil with circular holes by punching. The opening ratio was 44%.

A coating liquid for use in forming an electrode catalyst was prepared by the following procedure.

A ruthenium nitrate solution having a ruthenium concentration of 100 g/L (FURUYA METAL Co., Ltd.) and cerium nitrate (KISHIDA CHEMICAL Co., Ltd.) were mixed such that the molar ratio between the ruthenium element and the cerium element was 1:0.25. This mixed solution was sufficiently stirred and used as a cathode coating liquid.

A vat containing the above coating liquid was placed at the lowermost portion of a roll coating apparatus. The vat was placed such that a coating roll formed by winding rubber made of closed-cell type foamed ethylenepropylene-diene rubber (EPDM) (INOAC CORPORATION, E-4088, thickness 10 mm) around a polyvinyl chloride (PVC) cylinder was always in contact with the coating liquid.
A coating roll around which the same EPDM had been wound was placed at the upper portion thereof, and a PVC roller was further placed thereabove.

The coating liquid was applied by allowing the substrate for electrode for electrolysis to pass between the second coating roll and the PVC roller at the uppermost portion (roll coating method). Then, after drying at 50°C for 10 minutes, preliminary baking at 150°C for 3 minutes was performed, and baking at 350°C for 10 minutes was performed. A series of these coating, drying, preliminary baking, and baking operations was repeated until a predetermined amount of coating was achieved.

The thickness of the electrode for electrolysis produced was 29 $\mu$m.

The thickness of the catalytic layer containing ruthenium oxide and cerium oxide, which was determined by subtracting the thickness of the substrate for electrode for electrolysis from the thickness of the electrode for electrolysis, was 7 $\mu$m.

The coating was formed also on the surface not roughened in the course of the roll coating method.

[Example 1]

The ion exchange membrane A produced as mentioned above was immersed in 2%NaHCO$_3$, and thus equalized.

The area of the ion exchange membrane A was here defined as Ai.

The area Ai corresponded to an area in frames of anode side and cathode side gaskets in incorporation of the ion exchange membrane into an electrolyzer.

Thereafter, the resultant was immersed in 10.8 mol/L NaOH and thus equalized, and it was confirmed that the ion exchange membrane A was shrunk.

The area of the ion exchange membrane A was here defined as As.

The area As corresponded to the area Ai, and corresponded to an area in frames of anode side and cathode side gaskets in incorporation of the ion exchange membrane into an electrolyzer.

The area of the ion exchange membrane A satisfied As/Ai = 0.917 under the assumption that Ai = 1 was satisfied in equilibration made by immersion in 2%NaHCO$_3$.

The evaluation results are shown in Table 1 below.

In fact, a laminate was formed by integrating the ion exchange membrane A and the electrode by the surface tension of the aqueous solution, as mentioned above, fitted to an electrolytic cell, and then incorporated into an electrolyzer, and the electrolyzer was operated. Therefore, the ion exchange membrane A was in a state where four sides thereof were fixed by the anode side gasket and the cathode side gasket that were formed from frames opposite to each other. Thus, the shrinkage stress corresponding to the above variation in dimension was in a state of being applied to the ion exchange membrane A.

In the present Example, it was confirmed that the ion exchange membrane A was not split even when assumed to be retained in a state of being fixed to the gaskets.

The ion exchange membrane A having a width of 1250 mm and a length of 2440 mm, which was immersed in

2%NaHCO$_3$ and equalized, and the above four electrodes (each size was adjusted so as to have a width of 1120 mm and a length of 2400 mm) were integrated with an electrolyzer in a commercially-available size, by the surface tension of the aqueous solution retained in the ion exchange membrane A, to thereby form a laminate, and the laminate was fitted.

Here, electrolyzer operation was regarded as started.

Thereafter, i.e., after electrolyzer operation, a 10.8 mol/L NaOH aqueous solution was stored in an anode chamber and a cathode chamber to thereby perform filling of the aqueous solution, and the ion exchange membrane A was brought into contact therewith. Thereafter, the solution was drained and an electrolytic frame was removed. The ion exchange membrane A was observed, and neither cracking nor splitting was observed.

Even in the case where the electrolytic cell was disassembled, no occurrence of any damages such as bending and wrinkle was confirmed in the electrode for electrolysis, the mattress, and the feed conductor which were stacked.

[Example 2]

The ion exchange membrane A produced as mentioned above was immersed in 2%NaHCO$_3$, and thus equalized.

The area of the ion exchange membrane A was here defined as Ai.

The area Ai corresponded to an area in frames of anode side and cathode side gaskets in incorporation of the ion exchange membrane into an electrolyzer.

Thereafter, the resultant was immersed in pure water at 50°C and thus equalized, and it was confirmed that the ion exchange membrane A was swollen.

The area of the ion exchange membrane A was here defined as As.

The area As corresponded to the area Ai, and corresponded to an area in frames of anode side and cathode side gaskets in incorporation of the ion exchange membrane into an electrolyzer.

The area of the ion exchange membrane A satisfied As/Ai = 1.010 under the assumption that Ai = 1 was satisfied in equilibration made by immersion in 2%NaHCO$_3$.

The evaluation results are shown in Table 1 below.

In fact, a laminate was formed by integrating the ion exchange membrane A and the electrode by the surface tension of the aqueous solution, as mentioned above, fitted to an electrolytic cell, and then incorporated into an electrolyzer, and the electrolyzer was operated. Therefore, the ion exchange membrane A was in a state where four sides thereof were fixed by the anode side gasket and the cathode side gasket that were formed from frames opposite to each other. Thus, the swelling stress corresponding to the above variation in dimension was in a state of being applied to the ion exchange membrane A, the electrode for electrolysis, the mattress, and the feed conductor.

The ion exchange membrane A having a width of 1250 mm and a length of 2440 mm, which was immersed in 2%NaHCO$_3$ and equalized, and the above four electrodes (each size was adjusted so as to have a width of 1120 mm and a length of 2400 mm) were integrated with an electrolyzer in a commercially-available size, by the surface tension of the aqueous solution retained in the ion exchange membrane A, to thereby form a laminate, and the laminate was fitted.

Here, electrolyzer operation was regarded as started.

Thereafter, i.e., after electrolyzer operation, a 10.8 mol/L NaOH aqueous solution was filled to a cathode chamber and a 3.5 mol/L NaCl aqueous solution was filled to an anode chamber, and common salt electrolysis was performed at 90°C. After the electrolysis was stopped, the anode chamber and the cathode chamber were washed with pure water at 50°C. The ion exchange membrane A washed with pure water was in a state of being equalized by pure water. The solution was drained and an electrolytic frame was removed in the state. The ion exchange membrane A was observed, and neither cracking nor splitting was observed.

Even in the case where the electrolytic cell was disassembled, no occurrence of any damages such as bending and wrinkle was confirmed in the electrode for electrolysis, the mattress, and the feed conductor which were stacked.

It was confirmed by consideration with the results of Example 1, and Example 3 described below, that neither the ion exchange membrane A nor the electrode for electrolysis, the mattress and the feed conductor which were stacked were damaged even when brought into contact with pure water at 50°C.

[Example 3]

The ion exchange membrane A produced as mentioned above was immersed in 2%NaHCO$_3$, and thus equalized.

The area of the ion exchange membrane A was here defined as Ai.

The area Ai corresponded to an area in frames of anode side and cathode side gaskets in incorporation of the ion exchange membrane into an electrolyzer.

Thereafter, the resultant was immersed in 3.5 mol/L NaCl aqueous solution and thus equalized, and it was confirmed that the ion exchange membrane A was shrunk.

The area of the ion exchange membrane A was here defined as As.

The area As corresponded to the area Ai, and corresponded to an area in frames of anode side and cathode side gaskets in incorporation of the ion exchange membrane into an electrolyzer.

The area of the ion exchange membrane A satisfied As/Ai = 0.973 under the assumption that Ai = 1 was satisfied in equilibration made by immersion in 2%NaHCO$_3$.

The evaluation results are shown in Table 1 below.

In fact, a laminate was formed by integrating the ion exchange membrane A and the electrode by the surface tension of the aqueous solution, as mentioned above, fitted to an electrolytic cell, and then incorporated into an electrolyzer, and the electrolyzer was operated. Therefore, the ion exchange membrane A was in a state where four sides thereof were fixed by the anode side gasket and the cathode side gasket that were formed from frames opposite to each other. Thus, the shrinkage stress corresponding to the above variation in dimension was in a state of being applied to the ion exchange membrane A.

In the present Example, it was confirmed that the ion exchange membrane A was not split even when assumed to be retained in a state of being fixed to the gaskets.

The ion exchange membrane A having a width of 1250 mm and a length of 2440 mm, which was immersed in 2%NaHCO$_3$ and equalized, and the above four electrodes (each size was adjusted so as to have a width of 1120 mm and a length of 2400 mm) were integrated with an electrolyzer in a commercially-available size, by the surface tension of the aqueous solution retained in the ion exchange membrane A, to thereby form a laminate, and the laminate was fitted.

Here, electrolyzer operation was regarded as started.

Thereafter, i.e., after electrolyzer operation, a 3.5 mol/L NaCl aqueous solution was stored in an anode chamber and a cathode chamber to thereby perform filling of the aqueous solution, and the ion exchange membrane A was brought into contact therewith. Thereafter, the solution was drained and an electrolytic frame was removed. The ion exchange membrane A was observed, and neither cracking nor splitting was observed.

Even in the case where the electrolytic cell was disassembled, no occurrence of any damages such as bending and wrinkle was confirmed in the electrode for electrolysis, the mattress, and the feed conductor which were stacked.

[Example 4]

The ion exchange membrane A produced as mentioned above was immersed in a 0.00001 mol/L NaOH aqueous solution, and thus equalized.

The area of the ion exchange membrane A was here defined as Ai.

The area Ai corresponded to an area in frames of anode side and cathode side gaskets in incorporation of the ion exchange membrane into an electrolyzer.

Thereafter, the resultant was immersed in 10.8 mol/L NaOH aqueous solution and thus equalized, and it was confirmed that the ion exchange membrane A was shrunk.

The area of the ion exchange membrane A was here defined as As.

The area As corresponded to the area Ai, and corresponded to an area in frames of anode side and cathode side gaskets in incorporation of the ion exchange membrane into an electrolyzer.

The area of the ion exchange membrane A satisfied As/Ai = 0.917 under the assumption that Ai = 1 was satisfied in equilibration made by immersion in a 0.00001 mol/L NaOH aqueous solution.

The evaluation results are shown in Table 1 below.

In fact, a laminate was formed by integrating the ion exchange membrane A and the electrode by the surface tension of the aqueous solution, as mentioned above, fitted to an electrolytic cell, and then incorporated into an electrolyzer, and the electrolyzer was operated. Therefore, the ion exchange membrane A was in a state where four sides thereof were fixed by the anode side gasket and the cathode side gasket that were formed from frames opposite to each other. Thus, the shrinkage stress corresponding to the above variation in dimension was in a state of being applied to the ion exchange membrane A.

In the present Example, it was confirmed that the ion exchange membrane A was not split even when assumed to be retained in a state of being fixed to the gaskets.

The ion exchange membrane A having a width of 1250 mm and a length of 2440 mm, which was immersed in a 0.00001 mol/L NaOH aqueous solution and equalized, and the above four electrodes (each size was adjusted so as to have a width of 1120 mm and a length of 2400 mm) were integrated with an electrolyzer in a commercially-available size, by the surface tension of the aqueous solution retained in the ion exchange membrane A, to thereby form a laminate, and the laminate was fitted.

Here, electrolyzer operation was regarded as started.

Thereafter, i.e., after electrolyzer operation, a 10.8 mol/L NaOH aqueous solution was stored in an anode chamber and a cathode chamber to thereby perform filling of the aqueous solution, and the ion exchange membrane A was brought into contact therewith. Thereafter, the solution was drained and an electrolytic frame was removed. The ion exchange membrane A was observed, and neither cracking nor splitting was observed.

Even in the case where the electrolytic cell was disassembled, no occurrence of any damages such as bending and wrinkle was confirmed in the electrode for electrolysis, the mattress, and the feed conductor which were stacked.

[Example 5]

The ion exchange membrane A produced as mentioned above was immersed in a 0.00001 mol/L NaOH aqueous solution, and thus equalized.

The area of the ion exchange membrane A was here defined as Ai.

The area Ai corresponded to an area in frames of anode side and cathode side gaskets in incorporation of the ion exchange membrane into an electrolyzer.

Thereafter, the resultant was immersed in pure water at 50°C and thus equalized, and it was confirmed that the ion exchange membrane A was shrunk.

The area of the ion exchange membrane A was here defined as As.

The area As corresponded to the area Ai, and corresponded to an area in frames of anode side and cathode side gaskets in incorporation of the ion exchange membrane into an electrolyzer.

The area of the ion exchange membrane A satisfied As/Ai = 1.008 under the assumption that Ai = 1 was satisfied in equilibration made by immersion in a 0.00001 mol/L NaOH aqueous solution.

The evaluation results are shown in Table 1 below.

In fact, a laminate was formed by integrating the ion exchange membrane A and the electrode by the surface tension of the aqueous solution, as mentioned above, fitted to an electrolytic cell, and then incorporated into an electrolyzer, and the electrolyzer was operated. Therefore, the ion exchange membrane A was in a state where four sides thereof were fixed by the anode side gasket and the cathode side gasket that were formed from frames opposite to each other. Thus, the swelling stress corresponding to the above variation in dimension was in a state of being applied to the ion exchange membrane A, the electrode for electrolysis, the mattress, and the feed conductor.

The ion exchange membrane A having a width of 1250 mm and a length of 2440 mm, which was immersed in a 0.00001 mol/L NaOH aqueous solution and equalized, and the above four electrodes (each size was adjusted so as to have a width of 1120 mm and a length of 2400 mm) were integrated with an electrolyzer in a commercially-available size, by the surface tension of the aqueous solution retained in the ion exchange membrane A, to thereby form a laminate, and the laminate was fitted.

Here, electrolyzer operation was regarded as started.

Thereafter, i.e., after electrolyzer operation, a 10.8 mol/L NaOH aqueous solution was filled to a cathode chamber and a 3.5 mol/L NaCl aqueous solution was filled to an anode chamber, and common salt electrolysis was performed at 90°C. After the electrolysis was stopped, the anode chamber and the cathode chamber were washed with pure water at 50°C. The ion exchange membrane A washed with pure water was in a state of being equalized by pure water. The solution was drained and an electrolytic frame was removed in the state. The ion exchange membrane A was observed, and neither cracking nor splitting was observed.

Even in the case where the electrolytic cell was disassembled, no occurrence of any damages such as bending and wrinkle was confirmed in the electrode for electrolysis, the mattress, and the feed conductor which were stacked.

It was confirmed by consideration with the results of Example 4, and Example 6 described below, that neither the ion exchange membrane A nor the electrode for electrolysis, the mattress and the feed conductor which were stacked were damaged even when brought into contact with pure water at 50°C.

[Example 6]

The ion exchange membrane A produced as mentioned above was immersed in a 0.00001 mol/L NaOH aqueous solution, and thus equalized.

The area of the ion exchange membrane A was here defined as Ai.

The area Ai corresponded to an area in frames of anode side and cathode side gaskets in incorporation of the ion exchange membrane into an electrolyzer.

Thereafter, the resultant was immersed in 3.5 mol/L NaCl aqueous solution and thus equalized, and it was confirmed that the ion exchange membrane A was shrunk.

The area of the ion exchange membrane A was here defined as As.

The area As corresponded to the area Ai, and corresponded to an area in frames of anode side and cathode side gaskets in incorporation of the ion exchange membrane into an electrolyzer.

The area of the ion exchange membrane A satisfied As/Ai = 0.972 under the assumption that Ai = 1 was satisfied in equilibration made by immersion in a 0.00001 mol/L NaOH aqueous solution.

The evaluation results are shown in Table 1 below.

In fact, a laminate was formed by integrating the ion exchange membrane A and the electrode by the surface tension of the aqueous solution, as mentioned above, fitted to an electrolytic cell, and then incorporated into an electrolyzer, and the electrolyzer was operated. Therefore, the ion exchange membrane A was in a state where four sides thereof were fixed by the anode side gasket and the cathode side gasket that were formed from frames opposite to each other. Thus, the shrinkage stress corresponding to the above variation in dimension was in a state of being applied to the ion exchange membrane A.

In the present Example, it was confirmed that the ion exchange membrane A was not split even when assumed to be retained in a state of being fixed to the gaskets.

The ion exchange membrane A having a width of 1250 mm and a length of 2440 mm, which was immersed in a 0.00001 mol/L NaOH aqueous solution and equalized, and the above four electrodes (each size was adjusted so as to have a width of 1120 mm and a length of 2400 mm) were integrated with an electrolyzer in a commercially-available size, by the surface tension of the aqueous solution retained in the ion exchange membrane A, to thereby form a laminate, and the laminate was fitted.

Here, electrolyzer operation was regarded as started.

Thereafter, i.e., after electrolyzer operation, a 3.5 mol/L NaCl aqueous solution was stored in an anode chamber and a cathode chamber to thereby perform filling of the aqueous solution, and the ion exchange membrane A was brought into contact therewith. Thereafter, the solution was drained and an electrolytic frame was removed. The ion exchange membrane A was observed, and neither cracking nor splitting was observed.

Even in the case where the electrolytic cell was disassembled, no occurrence of any damages such as bending and wrinkle was confirmed in the electrode for electrolysis, the mattress, and the feed conductor which were stacked.

[Example 7]

The ion exchange membrane A produced as mentioned above was immersed in a 0.0001 mol/L NaOH aqueous solution, and thus equalized.

The area of the ion exchange membrane A was here defined as Ai.

The area Ai corresponded to an area in frames of anode side and cathode side gaskets in incorporation of the ion exchange membrane into an electrolyzer.

Thereafter, the resultant was immersed in 10.8 mol/L NaOH aqueous solution and thus equalized, and it was confirmed that the ion exchange membrane A was shrunk.

The area of the ion exchange membrane A was here defined as As.

The area As corresponded to the area Ai, and corresponded to an area in frames of anode side and cathode side gaskets in incorporation of the ion exchange membrane into an electrolyzer.

The area of the ion exchange membrane A satisfied As/Ai = 0.915 under the assumption that Ai = 1 was satisfied in equilibration made by immersion in a 0.0001 mol/L NaOH aqueous solution.

The evaluation results are shown in Table 1 below.

In fact, a laminate was formed by integrating the ion exchange membrane A and the electrode by the surface tension of the aqueous solution, as mentioned above, fitted to an electrolytic cell, and then incorporated into an electrolyzer, and the electrolyzer was operated. Therefore, the ion exchange membrane A was in a state where four sides thereof were fixed by the anode side gasket and the cathode side gasket that were formed from frames opposite to each other. Thus, the shrinkage stress corresponding to the above variation in dimension was in a state of being applied to the ion exchange membrane A.

In the present Example, it was confirmed that the ion exchange membrane A was not split even when assumed to be retained in a state of being fixed to the gaskets.

The ion exchange membrane A having a width of 1250 mm and a length of 2440 mm, which was immersed in a 0.0001 mol/L NaOH aqueous solution and equalized, and the above four electrodes (each size was adjusted so as to have a width of 1120 mm and a length of 2400 mm) were integrated with an electrolyzer in a commercially-available size, by the surface tension of the aqueous solution retained in the ion exchange membrane A, to thereby form a laminate, and the laminate was fitted.

Here, electrolyzer operation was regarded as started.

Thereafter, i.e., after electrolyzer operation, a 10.8 mol/L NaOH aqueous solution was stored in an anode chamber and a cathode chamber to thereby perform filling of the aqueous solution, and the ion exchange membrane A was brought into contact therewith. Thereafter, the solution was drained and an electrolytic frame was removed. The ion exchange membrane A was observed, and neither cracking nor splitting was observed.

Even in the case where the electrolytic cell was disassembled, no occurrence of any damages such as bending and wrinkle was confirmed in the electrode for electrolysis, the mattress, and the feed conductor which were stacked.

[Example 8]

The ion exchange membrane A produced as mentioned above was immersed in a 0.0001 mol/L NaOH aqueous solution, and thus equalized.

The area of the ion exchange membrane A was here defined as Ai.

The area Ai corresponded to an area in frames of anode side and cathode side gaskets in incorporation of the ion exchange membrane into an electrolyzer.

Thereafter, the resultant was immersed in pure water at 50°C and thus equalized, and it was confirmed that the ion exchange membrane A was shrunk.

The area of the ion exchange membrane A was here defined as As.

The area As corresponded to the area Ai, and corresponded to an area in frames of anode side and cathode side gaskets in incorporation of the ion exchange membrane into an electrolyzer.

The area of the ion exchange membrane A satisfied As/Ai = 1.008 under the assumption that Ai = 1 was satisfied in equilibration made by immersion in a 0.0001 mol/L NaOH aqueous solution.

The evaluation results are shown in Table 1 below.

In fact, a laminate was formed by integrating the ion exchange membrane A and the electrode by the surface tension of the aqueous solution, as mentioned above, fitted to an electrolytic cell, and then incorporated into an electrolyzer, and the electrolyzer was operated. Therefore, the ion exchange membrane A was in a state where four sides thereof were fixed by the anode side gasket and the cathode side gasket that were formed from frames opposite to each other. Thus, the swelling stress corresponding to the above variation in dimension was in a state of being applied to the ion exchange membrane A, the electrode for electrolysis, the mattress, and the feed conductor.

The ion exchange membrane A having a width of 1250 mm and a length of 2440 mm, which was immersed in a 0.0001 mol/L NaOH aqueous solution and equalized, and the above four electrodes (each size was adjusted so as to have a width of 1120 mm and a length of 2400 mm) were integrated with an electrolyzer in a commercially-available size, by the surface tension of the aqueous solution retained in the ion exchange membrane A, to thereby form a laminate, and the laminate was fitted.

Here, electrolyzer operation was regarded as started.

Thereafter, i.e., after electrolyzer operation, a 10.8 mol/L NaOH aqueous solution was filled to a cathode chamber and a 3.5 mol/L NaCl aqueous solution was filled to an anode chamber, and common salt electrolysis was performed at 90°C. After the electrolysis was stopped, the anode chamber and the cathode chamber were washed with pure water at 50°C. The ion exchange membrane A washed with pure water was in a state of being equalized by pure water. The solution was drained and an electrolytic frame was removed in the state. The ion exchange membrane A was observed, and neither cracking nor splitting was observed.

Even in the case where the electrolytic cell was disassembled, no occurrence of any damages such as bending and wrinkle was confirmed in the electrode for electrolysis, the mattress, and the feed conductor which were stacked.

It was confirmed by consideration with the results of Example 7, and Example 9 described below, that neither the ion exchange membrane A nor the electrode for electrolysis, the mattress and the feed conductor which were stacked were damaged even when brought into contact with pure water at 50°C.

[Example 9]

The ion exchange membrane A produced as mentioned above was immersed in a 0.0001 mol/L NaOH aqueous solution, and thus equalized.

The area of the ion exchange membrane A was here defined as Ai.

The area Ai corresponded to an area in frames of anode side and cathode side gaskets in incorporation of the ion exchange membrane into an electrolyzer.

Thereafter, the resultant was immersed in 3.5 mol/L NaCl aqueous solution and thus equalized, and it was confirmed that the ion exchange membrane A was shrunk.

The area of the ion exchange membrane A was here defined as As.

The area As corresponded to the area Ai, and corresponded to an area in frames of anode side and cathode side gaskets in incorporation of the ion exchange membrane into an electrolyzer.

The area of the ion exchange membrane A satisfied As/Ai = 0.915 under the assumption that Ai = 1 was satisfied in equilibration made by immersion in a 0.0001 mol/L NaOH aqueous solution.

The evaluation results are shown in Table 1 below.

In fact, a laminate was formed by integrating the ion exchange membrane A and the electrode by the surface tension of the aqueous solution, as mentioned above, fitted to an electrolytic cell, and then incorporated into an electrolyzer, and the electrolyzer was operated. Therefore, the ion exchange membrane A was in a state where four sides thereof were fixed by the anode side gasket and the cathode side gasket that were formed from frames opposite to each other. Thus, the shrinkage stress corresponding to the above variation in dimension was in a state of being applied to the ion exchange membrane A.

In the present Example, it was confirmed that the ion exchange membrane A was not split even when assumed to be retained in a state of being fixed to the gaskets.

The ion exchange membrane A having a width of 1250 mm and a length of 2440 mm, which was immersed in a 0.0001 mol/L NaOH aqueous solution and equalized, and the above four electrodes (each size was adjusted so as to have a width of 1120 mm and a length of 2400 mm) were integrated with an electrolyzer in a commercially-available size, by the surface tension of the aqueous solution retained in the ion exchange membrane A, to thereby form a laminate, and the laminate was fitted.

Here, electrolyzer operation was regarded as started.

Thereafter, i.e., after electrolyzer operation, a 3.5 mol/L NaCl aqueous solution was stored in an anode chamber and a cathode chamber to thereby perform filling of the aqueous solution, and the ion exchange membrane A was brought into contact therewith. Thereafter, the solution was drained and an electrolytic frame was removed. The ion exchange membrane A was observed, and neither cracking nor splitting was observed.

Even in the case where the electrolytic cell was disassembled, no occurrence of any damages such as bending and wrinkle was confirmed in the electrode for electrolysis, the mattress, and the feed conductor which were stacked.

[Example 10]

The ion exchange membrane A produced as mentioned above was immersed in a 0.001 mol/L NaOH aqueous solution, and thus equalized.

The area of the ion exchange membrane A was here defined as Ai.

The area Ai corresponded to an area in frames of anode side and cathode side gaskets in incorporation of the ion exchange membrane into an electrolyzer.

Thereafter, the resultant was immersed in 10.8 mol/L NaOH aqueous solution and thus equalized, and it was confirmed that the ion exchange membrane A was shrunk.

The area of the ion exchange membrane A was here defined as As.

The area As corresponded to the area Ai, and corresponded to an area in frames of anode side and cathode side gaskets in incorporation of the ion exchange membrane into an electrolyzer.

The area of the ion exchange membrane A satisfied As/Ai = 0.917 under the assumption that Ai = 1 was satisfied in equilibration made by immersion in a 0.001 mol/L NaOH aqueous solution.

The evaluation results are shown in Table 1 below.

In fact, a laminate was formed by integrating the ion exchange membrane A and the electrode by the surface tension of the aqueous solution, as mentioned above, fitted to an electrolytic cell, and then incorporated into an electrolyzer, and the electrolyzer was operated. Therefore, the ion exchange membrane A was in a state where four sides thereof were fixed by the anode side gasket and the cathode side gasket that were formed from frames opposite to each other. Thus, the shrinkage stress corresponding to the above variation in dimension was in a state of being applied to the ion exchange membrane A.

In the present Example, it was confirmed that the ion exchange membrane A was not split even when assumed to be retained in a state of being fixed to the gaskets.

The ion exchange membrane A having a width of 1250 mm and a length of 2440 mm, which was immersed in a 0.001 mol/L NaOH aqueous solution and equalized, and the above four electrodes (each size was adjusted so as to have a width of 1120 mm and a length of 2400 mm) were integrated with an electrolyzer in a commercially-available size, by the surface tension of the aqueous solution retained in the ion exchange membrane A, to thereby form a laminate, and the laminate was fitted.

Here, electrolyzer operation was regarded as started.

Thereafter, i.e., after electrolyzer operation, a 10.8 mol/L NaOH aqueous solution was stored in an anode chamber and a cathode chamber to thereby perform filling of the aqueous solution, and the ion exchange membrane A was brought into contact therewith. Thereafter, the solution was drained and an electrolytic frame was removed. The ion exchange membrane A was observed, and neither cracking nor splitting was observed.

Even in the case where the electrolytic cell was disassembled, no occurrence of any damages such as bending and wrinkle was confirmed in the electrode for electrolysis, the mattress, and the feed conductor which were stacked.

[Example 11]

The ion exchange membrane A produced as mentioned above was immersed in a 0.001 mol/L NaOH aqueous solution, and thus equalized.

The area of the ion exchange membrane A was here defined as Ai.

The area Ai corresponded to an area in frames of anode side and cathode side gaskets in incorporation of the ion exchange membrane into an electrolyzer.

Thereafter, the resultant was immersed in pure water at 50°C and thus equalized, and it was confirmed that the ion exchange membrane A was shrunk.

The area of the ion exchange membrane A was here defined as As.

The area As corresponded to the area Ai, and corresponded to an area in frames of anode side and cathode side gaskets in incorporation of the ion exchange membrane into an electrolyzer.

The area of the ion exchange membrane A satisfied As/Ai = 1.007 under the assumption that Ai = 1 was satisfied in equilibration made by immersion in a 0.001 mol/L NaOH aqueous solution.

The evaluation results are shown in Table 1 below.

In fact, a laminate was formed by integrating the ion exchange membrane A and the electrode by the surface tension of the aqueous solution, as mentioned above, fitted to an electrolytic cell, and then incorporated into an electrolyzer, and the electrolyzer was operated. Therefore, the ion exchange membrane A was in a state where four sides thereof were fixed by the anode side gasket and the cathode side gasket that were formed from frames opposite to each other. Thus, the swelling stress corresponding to the above variation in dimension was in a state of being applied to the ion exchange membrane A, the electrode for electrolysis, the mattress, and the feed conductor.

The ion exchange membrane A having a width of 1250 mm and a length of 2440 mm, which was immersed in a 0.001 mol/L NaOH aqueous solution and equalized, and the above four electrodes (each size was adjusted so as to have a width of 1120 mm and a length of 2400 mm) were integrated with an electrolyzer in a commercially-available size, by the surface tension of the aqueous solution retained in the ion exchange membrane A, to thereby form a laminate, and the laminate was fitted.

Here, electrolyzer operation was regarded as started.

Thereafter, i.e., after electrolyzer operation, a 10.8 mol/L NaOH aqueous solution was filled to a cathode chamber and a 3.5 mol/L NaCl aqueous solution was filled to an anode chamber, and common salt electrolysis was performed at 90°C. After the electrolysis was stopped, the anode chamber and the cathode chamber were washed with pure water at 50°C. The ion exchange membrane A washed with pure water was in a state of being equalized by pure water. The solution was drained and an electrolytic frame was removed in the state. The ion exchange membrane A was observed, and neither cracking nor splitting was observed.

Even in the case where the electrolytic cell was disassembled, no occurrence of any damages such as bending and wrinkle was confirmed in the electrode for electrolysis, the mattress, and the feed conductor which were stacked.

It was confirmed by consideration with the results of Example 10, and Example 11 described below, that neither the ion exchange membrane A nor the electrode for electrolysis, the mattress and the feed conductor which were stacked were damaged even when brought into contact with pure water at 50°C.

[Example 12]

The ion exchange membrane A produced as mentioned above was immersed in a 0.001 mol/L NaOH aqueous solution, and thus equalized.

The area of the ion exchange membrane A was here defined as Ai.

The area Ai corresponded to an area in frames of anode side and cathode side gaskets in incorporation of the ion exchange membrane into an electrolyzer.

Thereafter, the resultant was immersed in 3.5 mol/L NaCl aqueous solution and thus equalized, and it was confirmed that the ion exchange membrane A was shrunk.

The area of the ion exchange membrane A was here defined as As.

The area As corresponded to the area Ai, and corresponded to an area in frames of anode side and cathode side gaskets in incorporation of the ion exchange membrane into an electrolyzer.

The area of the ion exchange membrane A satisfied As/Ai = 0.967 under the assumption that Ai = 1 was satisfied in equilibration made by immersion in a 0.001 mol/L NaOH aqueous solution.

The evaluation results are shown in Table 1 below.

In fact, a laminate was formed by integrating the ion exchange membrane A and the electrode by the surface tension of the aqueous solution, as mentioned above, fitted to an electrolytic cell, and then incorporated into an electrolyzer, and the electrolyzer was operated. Therefore, the ion exchange membrane A was in a state where four sides thereof were fixed by the anode side gasket and the cathode side gasket that were formed from frames opposite to each other. Thus, the shrinkage stress corresponding to the above variation in dimension was in a state of being applied to the ion exchange membrane A.

In the present Example, it was confirmed that the ion exchange membrane A was not split even when assumed to be retained in a state of being fixed to the gaskets.

The ion exchange membrane A having a width of 1250 mm and a length of 2440 mm, which was immersed in a 0.001 mol/L NaOH aqueous solution and equalized, and the above four electrodes (each size was adjusted so as to have a width of 1120 mm and a length of 2400 mm) were integrated with an electrolyzer in a commercially-available size, by the surface tension of the aqueous solution retained in the ion exchange membrane A, to thereby form a laminate, and the laminate was fitted.

Here, electrolyzer operation was regarded as started.

Thereafter, i.e., after electrolyzer operation, a 3.5 mol/L NaCl aqueous solution was stored in an anode chamber and a cathode chamber to thereby perform filling of the aqueous solution, and the ion exchange membrane A was brought into contact therewith. Thereafter, the solution was drained and an electrolytic frame was removed. The ion exchange membrane A was observed, and neither cracking nor splitting was observed.

Even in the case where the electrolytic cell was disassembled, no occurrence of any damages such as bending and wrinkle was confirmed in the electrode for electrolysis, the mattress, and the feed conductor which were stacked.


[Example 13]


The ion exchange membrane A produced as mentioned above was immersed in a 0.01 mol/L NaOH aqueous solution, and thus equalized.

The area of the ion exchange membrane A was here defined as Ai.

The area Ai corresponded to an area in frames of anode side and cathode side gaskets in incorporation of the ion exchange membrane into an electrolyzer.

Thereafter, the resultant was immersed in 10.8 mol/L NaOH aqueous solution and thus equalized, and it was confirmed that the ion exchange membrane A was shrunk.

The area of the ion exchange membrane A was here defined as As.

The area As corresponded to the area Ai, and corresponded to an area in frames of anode side and cathode side gaskets in incorporation of the ion exchange membrane into an electrolyzer.

The area of the ion exchange membrane A satisfied As/Ai = 0.918 under the assumption that Ai = 1 was satisfied in equilibration made by immersion in a 0.01 mol/L NaOH aqueous solution.

The evaluation results are shown in Table 1 below.

In fact, a laminate was formed by integrating the ion exchange membrane A and the electrode by the surface tension of the aqueous solution, as mentioned above, fitted to an electrolytic cell, and then incorporated into an electrolyzer, and the electrolyzer was operated. Therefore, the ion exchange membrane A was in a state where four sides thereof were fixed by the anode side gasket and the cathode side gasket that were formed from frames opposite to each other. Thus, the shrinkage stress corresponding to the above variation in dimension was in a state of being applied to the ion exchange membrane A.

In the present Example, it was confirmed that the ion exchange membrane A was not split even when assumed to be retained in a state of being fixed to the gaskets.

The ion exchange membrane A having a width of 1250 mm and a length of 2440 mm, which was immersed in a 0.01 mol/L NaOH aqueous solution and equalized, and the above four electrodes (each size was adjusted so as to have a width of 1120 mm and a length of 2400 mm) were integrated with an electrolyzer in a commercially-available size, by the surface tension of the aqueous solution retained in the ion exchange membrane A, to thereby form a laminate, and the laminate was fitted.

Here, electrolyzer operation was regarded as started.

Thereafter, i.e., after electrolyzer operation, a 10.8 mol/L NaOH aqueous solution was stored in an anode chamber and a cathode chamber to thereby perform filling of the aqueous solution, and the ion exchange membrane A was brought into contact therewith. Thereafter, the solution was drained and an electrolytic frame was removed. The ion exchange membrane A was observed, and neither cracking nor splitting was observed.

Even in the case where the electrolytic cell was disassembled, no occurrence of any damages such as bending and wrinkle was confirmed in the electrode for electrolysis, the mattress, and the feed conductor which were stacked.


[Example 14]


The ion exchange membrane A produced as mentioned above was immersed in a 0.01 mol/L NaOH aqueous solution, and thus equalized.

The area of the ion exchange membrane A was here defined as Ai.

The area Ai corresponded to an area in frames of anode side and cathode side gaskets in incorporation of the ion exchange membrane into an electrolyzer.

Thereafter, the resultant was immersed in pure water at 50°C and thus equalized, and it was confirmed that the ion exchange membrane A was shrunk.

The area of the ion exchange membrane A was here defined as As.

The area As corresponded to the area Ai, and corresponded to an area in frames of anode side and cathode side gaskets in incorporation of the ion exchange membrane into an electrolyzer.

The area of the ion exchange membrane A satisfied As/Ai = 1.010 under the assumption that Ai = 1 was satisfied in equilibration made by immersion in a 0.01 mol/L NaOH aqueous solution.

The evaluation results are shown in Table 1 below.

In fact, a laminate was formed by integrating the ion exchange membrane A and the electrode by the surface tension of the aqueous solution, as mentioned above, fitted to an electrolytic cell, and then incorporated into an electrolyzer, and the electrolyzer was operated. Therefore, the ion exchange membrane A was in a state where four sides thereof were fixed by the anode side gasket and the cathode side gasket that were formed from frames opposite to each other. Thus, the swelling stress corresponding to the above variation in dimension was in a state of being applied to the ion exchange membrane A, the electrode for electrolysis, the mattress, and the feed conductor.

The ion exchange membrane A having a width of 1250 mm and a length of 2440 mm, which was immersed in a 0.01 mol/L NaOH aqueous solution and equalized, and the above four electrodes (each size was adjusted so as to have a width of 1120 mm and a length of 2400 mm) were integrated with an electrolyzer in a commercially-available size, by the surface tension of the aqueous solution retained in the ion exchange membrane A, to thereby form a laminate, and the laminate was fitted.

Here, electrolyzer operation was regarded as started.

Thereafter, i.e., after electrolyzer operation, a 10.8 mol/L NaOH aqueous solution was filled to a cathode chamber and a 3.5 mol/L NaCl aqueous solution was filled to an anode chamber, and common salt electrolysis was performed at 90°C. After the electrolysis was stopped, the anode chamber and the cathode chamber were washed with pure water at 50°C. The ion exchange membrane A washed with pure water was in a state of being equalized by pure water. The solution was drained and an electrolytic frame was removed in the state. The ion exchange membrane A was observed, and neither cracking nor splitting was observed.

Even in the case where the electrolytic cell was disassembled, no occurrence of any damages such as bending and wrinkle was confirmed in the electrode for electrolysis, the mattress, and the feed conductor which were stacked.

It was confirmed by consideration with the results of Example 13, and Example 15 described below, that neither the ion exchange membrane A nor the electrode for electrolysis, the mattress and the feed conductor which were stacked were damaged even when brought into contact with pure water at 50°C.

[Example 15]

The ion exchange membrane A produced as mentioned above was immersed in a 0.01 mol/L NaOH aqueous solution, and thus equalized.

The area of the ion exchange membrane A was here defined as Ai.

The area Ai corresponded to an area in frames of anode side and cathode side gaskets in incorporation of the ion exchange membrane into an electrolyzer.

Thereafter, the resultant was immersed in 3.5 mol/L NaCl aqueous solution and thus equalized, and it was confirmed that the ion exchange membrane A was shrunk.

The area of the ion exchange membrane A was here defined as As.

The area As corresponded to the area Ai, and corresponded to an area in frames of anode side and cathode side gaskets in incorporation of the ion exchange membrane into an electrolyzer.

The area of the ion exchange membrane A satisfied As/Ai = 0.970 under the assumption that Ai = 1 was satisfied in equilibration made by immersion in a 0.01 mol/L NaOH aqueous solution.

The evaluation results are shown in Table 1 below.

In fact, a laminate was formed by integrating the ion exchange membrane A and the electrode by the surface tension of the aqueous solution, as mentioned above, fitted to an electrolytic cell, and then incorporated into an electrolyzer, and the electrolyzer was operated. Therefore, the ion exchange membrane A was in a state where four sides thereof were fixed by the anode side gasket and the cathode side gasket that were formed from frames opposite to each other. Thus, the shrinkage stress corresponding to the above variation in dimension was in a state of being applied to the ion exchange membrane A.

In the present Example, it was confirmed that the ion exchange membrane A was not split even when assumed to be retained in a state of being fixed to the gaskets.

The ion exchange membrane A having a width of 1250 mm and a length of 2440 mm, which was immersed in a 0.01 mol/L NaOH aqueous solution and equalized, and the above four electrodes (each size was adjusted so as to have a width of 1120 mm and a length of 2400 mm) were integrated with an electrolyzer in a commercially-available size, by the surface tension of the aqueous solution retained in the ion exchange membrane A, to thereby form a laminate, and the laminate was fitted.

Here, electrolyzer operation was regarded as started.

Thereafter, i.e., after electrolyzer operation, a 3.5 mol/L NaCl aqueous solution was stored in an anode chamber and a cathode chamber to thereby perform filling of the aqueous solution, and the ion exchange membrane A was brought into contact therewith. Thereafter, the solution was drained and an electrolytic frame was removed. The ion exchange membrane A was observed, and neither cracking nor splitting was observed.

Even in the case where the electrolytic cell was disassembled, no occurrence of any damages such as bending and wrinkle was confirmed in the electrode for electrolysis, the mattress, and the feed conductor which were stacked.

[Example 16]

The ion exchange membrane A produced as mentioned above was immersed in a 0.1 mol/L NaOH aqueous solution, and thus equalized.

The area of the ion exchange membrane A was here defined as Ai.

The area Ai corresponded to an area in frames of anode side and cathode side gaskets in incorporation of the ion exchange membrane into an electrolyzer.

Thereafter, the resultant was immersed in 10.8 mol/L NaOH aqueous solution and thus equalized, and it was confirmed that the ion exchange membrane A was shrunk.

The area of the ion exchange membrane A was here defined as As.

The area As corresponded to the area Ai, and corresponded to an area in frames of anode side and cathode side gaskets in incorporation of the ion exchange membrane into an electrolyzer.

The area of the ion exchange membrane A satisfied As/Ai = 0.918 under the assumption that Ai = 1 was satisfied in equilibration made by immersion in a 0.1 mol/L NaOH aqueous solution.

The evaluation results are shown in Table 2 below.

In fact, a laminate was formed by integrating the ion exchange membrane A and the electrode by the surface tension of the aqueous solution, as mentioned above, fitted to an electrolytic cell, and then incorporated into an electrolyzer, and the electrolyzer was operated. Therefore, the ion exchange membrane A was in a state where four sides thereof were fixed by the anode side gasket and the cathode side gasket that were formed from frames opposite to each other. Thus, the shrinkage stress corresponding to the above variation in dimension was in a state of being applied to the ion exchange membrane A.

In the present Example, it was confirmed that the ion exchange membrane A was not split even when assumed to be retained in a state of being fixed to the gaskets.

The ion exchange membrane A having a width of 1250 mm and a length of 2440 mm, which was immersed in a 0.1 mol/L NaOH aqueous solution and equalized, and the above four electrodes (each size was adjusted so as to have a width of 1120 mm and a length of 2400 mm) were integrated with an electrolyzer in a commercially-available size, by the surface tension of the aqueous solution retained in the ion exchange membrane A, to thereby form a laminate, and the laminate was fitted.

Here, electrolyzer operation was regarded as started.

Thereafter, i.e., after electrolyzer operation, a 10.8 mol/L NaOH aqueous solution was stored in an anode chamber and a cathode chamber to thereby perform filling of the aqueous solution, and the ion exchange membrane A was brought into contact therewith. Thereafter, the solution was drained and an electrolytic frame was removed. The ion exchange membrane A was observed, and neither cracking nor splitting was observed.

Even in the case where the electrolytic cell was disassembled, no occurrence of any damages such as bending and wrinkle was confirmed in the electrode for electrolysis, the mattress, and the feed conductor which were stacked.

[Example 17]

The ion exchange membrane A produced as mentioned above was immersed in a 0.1 mol/L NaOH aqueous solution, and thus equalized.

The area of the ion exchange membrane A was here defined as Ai.

The area Ai corresponded to an area in frames of anode side and cathode side gaskets in incorporation of the ion exchange membrane into an electrolyzer.

Thereafter, the resultant was immersed in pure water at 50°C and thus equalized, and it was confirmed that the ion exchange membrane A was shrunk.

The area of the ion exchange membrane A was here defined as As.

The area As corresponded to the area Ai, and corresponded to an area in frames of anode side and cathode side gaskets in incorporation of the ion exchange membrane into an electrolyzer.

The area of the ion exchange membrane A satisfied As/Ai = 1.013 under the assumption that Ai = 1 was satisfied in equilibration made by immersion in a 0.1 mol/L NaOH aqueous solution.

The evaluation results are shown in Table 2 below.

In fact, a laminate was formed by integrating the ion exchange membrane A and the electrode by the surface tension of the aqueous solution, as mentioned above, fitted to an electrolytic cell, and then incorporated into an electrolyzer, and the electrolyzer was operated. Therefore, the ion exchange membrane A was in a state where four sides thereof were fixed by the anode side gasket and the cathode side gasket that were formed from frames opposite to each other. Thus, the swelling stress corresponding to the above variation in dimension was in a state of being applied to the ion exchange membrane A, the electrode for electrolysis, the mattress, and the feed conductor.

The ion exchange membrane A having a width of 1250 mm and a length of 2440 mm, which was immersed in a 0.1 mol/L NaOH aqueous solution and equalized, and the above four electrodes (each size was adjusted so as to have a width of 1120 mm and a length of 2400 mm) were integrated with an electrolyzer in a commercially-available size, by the surface tension of the aqueous solution retained in the ion exchange membrane A, to thereby form a laminate, and the laminate was fitted.

Here, electrolyzer operation was regarded as started.

Thereafter, i.e., after electrolyzer operation, a 10.8 mol/L NaOH aqueous solution was filled to a cathode chamber and a 3.5 mol/L NaCl aqueous solution was filled to an anode chamber, and common salt electrolysis was performed at 90°C. After the electrolysis was stopped, the anode chamber and the cathode chamber were washed with pure water at 50°C. The ion exchange membrane A washed with pure water was in a state of being equalized by pure water. The solution was drained and an electrolytic frame was removed in the state. The ion exchange membrane A was observed, and neither cracking nor splitting was observed.

Even in the case where the electrolytic cell was disassembled, no occurrence of any damages such as bending and wrinkle was confirmed in the electrode for electrolysis, the mattress, and the feed conductor which were stacked.

It was confirmed by consideration with the results of Example 16, and Example 18 described below, that neither the ion exchange membrane A nor the electrode for electrolysis, the mattress and the feed conductor which were stacked were damaged even when brought into contact with pure water at 50°C.

[Example 18]

The ion exchange membrane A produced as mentioned above was immersed in a 0.1 mol/L NaOH aqueous solution, and thus equalized.

The area of the ion exchange membrane A was here defined as Ai.

The area Ai corresponded to an area in frames of anode side and cathode side gaskets in incorporation of the ion exchange membrane into an electrolyzer.

Thereafter, the resultant was immersed in 3.5 mol/L NaCl aqueous solution and thus equalized, and it was confirmed that the ion exchange membrane A was shrunk.

The area of the ion exchange membrane A was here defined as As.

The area As corresponded to the area Ai, and corresponded to an area in frames of anode side and cathode side gaskets in incorporation of the ion exchange membrane into an electrolyzer.

The area of the ion exchange membrane A satisfied As/Ai = 0.973 under the assumption that Ai = 1 was satisfied in equilibration made by immersion in a 0.1 mol/L NaOH aqueous solution.

The evaluation results are shown in Table 2 below.

In fact, a laminate was formed by integrating the ion exchange membrane A and the electrode by the surface tension of the aqueous solution, as mentioned above, fitted to an electrolytic cell, and then incorporated into an electrolyzer, and the electrolyzer was operated. Therefore, the ion exchange membrane A was in a state where four sides thereof were fixed by the anode side gasket and the cathode side gasket that were formed from frames opposite to each other. Thus, the shrinkage stress corresponding to the above variation in dimension was in a state of being applied to the ion exchange membrane A.

In the present Example, it was confirmed that the ion exchange membrane A was not split even when assumed to be retained in a state of being fixed to the gaskets.

The ion exchange membrane A having a width of 1250 mm and a length of 2440 mm, which was immersed in a 0.1 mol/L NaOH aqueous solution and equalized, and the above four electrodes (each size was adjusted so as to have a width of 1120 mm and a length of 2400 mm) were integrated with an electrolyzer in a commercially-available size, by the surface tension of the aqueous solution retained in the ion exchange membrane A, to thereby form a laminate, and the laminate was fitted.

Here, electrolyzer operation was regarded as started.

Thereafter, i.e., after electrolyzer operation, a 3.5 mol/L NaCl aqueous solution was stored in an anode chamber and a cathode chamber to thereby perform filling of the aqueous solution, and the ion exchange membrane A was brought into contact therewith. Thereafter, the solution was drained and an electrolytic frame was removed. The ion exchange membrane A was observed, and neither cracking nor splitting was observed.

Even in the case where the electrolytic cell was disassembled, no occurrence of any damages such as bending and wrinkle was confirmed in the electrode for electrolysis, the mattress, and the feed conductor which were stacked.

[Example 19]

The ion exchange membrane A produced as mentioned above was immersed in a 1 mol/L NaOH aqueous solution, and thus equalized.
The area of the ion exchange membrane A was here defined as Ai.
The area Ai corresponded to an area in frames of anode side and cathode side gaskets in incorporation of the ion exchange membrane into an electrolyzer.
Thereafter, the resultant was immersed in 10.8 mol/L NaOH aqueous solution and thus equalized, and it was confirmed that the ion exchange membrane A was shrunk.
The area of the ion exchange membrane A was here defined as As.
The area As corresponded to the area Ai, and corresponded to an area in frames of anode side and cathode side gaskets in incorporation of the ion exchange membrane into an electrolyzer.
The area of the ion exchange membrane A satisfied As/Ai = 0.923 under the assumption that Ai = 1 was satisfied in equilibration made by immersion in a 1 mol/L NaOH aqueous solution.
The evaluation results are shown in Table 2 below.
In fact, a laminate was formed by integrating the ion exchange membrane A and the electrode by the surface tension of the aqueous solution, as mentioned above, fitted to an electrolytic cell, and then incorporated into an electrolyzer, and the electrolyzer was operated. Therefore, the ion exchange membrane A was in a state where four sides thereof were fixed by the anode side gasket and the cathode side gasket that were formed from frames opposite to each other. Thus, the shrinkage stress corresponding to the above variation in dimension was in a state of being applied to the ion exchange membrane A.
In the present Example, it was confirmed that the ion exchange membrane A was not split even when assumed to be retained in a state of being fixed to the gaskets.
The ion exchange membrane A having a width of 1250 mm and a length of 2440 mm, which was immersed in a 1 mol/L NaOH aqueous solution and equalized, and the above four electrodes (each size was adjusted so as to have a width of 1120 mm and a length of 2400 mm) were integrated with an electrolyzer in a commercially-available size, by the surface tension of the aqueous solution retained in the ion exchange membrane A, to thereby form a laminate, and the laminate was fitted.
Here, electrolyzer operation was regarded as started.
Thereafter, i.e., after electrolyzer operation, a 10.8 mol/L NaOH aqueous solution was stored in an anode chamber and a cathode chamber to thereby perform filling of the aqueous solution, and the ion exchange membrane A was brought into contact therewith. Thereafter, the solution was drained and an electrolytic frame was removed. The ion exchange membrane A was observed, and neither cracking nor splitting was observed.
Even in the case where the electrolytic cell was disassembled, no occurrence of any damages such as bending and wrinkle was confirmed in the electrode for electrolysis, the mattress, and the feed conductor which were stacked.

[Example 20]

The ion exchange membrane A produced as mentioned above was immersed in a 1 mol/L NaOH aqueous solution, and thus equalized.
The area of the ion exchange membrane A was here defined as Ai.
The area Ai corresponded to an area in frames of anode side and cathode side gaskets in incorporation of the ion exchange membrane into an electrolyzer.
Thereafter, the resultant was immersed in pure water at 50°C and thus equalized, and it was confirmed that the ion exchange membrane A was shrunk.
The area of the ion exchange membrane A was here defined as As.
The area As corresponded to the area Ai, and corresponded to an area in frames of anode side and cathode side gaskets in incorporation of the ion exchange membrane into an electrolyzer.
The area of the ion exchange membrane A satisfied As/Ai = 1.021 under the assumption that Ai = 1 was satisfied in equilibration made by immersion in a 1 mol/L NaOH aqueous solution.
The evaluation results are shown in Table 2 below.
In fact, a laminate was formed by integrating the ion exchange membrane A and the electrode by the surface tension of the aqueous solution, as mentioned above, fitted to an electrolytic cell, and then incorporated into an electrolyzer, and the electrolyzer was operated. Therefore, the ion exchange membrane A was in a state where four sides thereof were fixed by the anode side gasket and the cathode side gasket that were formed from frames opposite to each other. Thus, the swelling stress corresponding to the above variation in dimension was in a state of being applied to the ion exchange membrane A, the electrode for electrolysis, the mattress, and the feed conductor.

The ion exchange membrane A having a width of 1250 mm and a length of 2440 mm, which was immersed in a 1 mol/L NaOH aqueous solution and equalized, and the above four electrodes (each size was adjusted so as to have a width of 1120 mm and a length of 2400 mm) were integrated with an electrolyzer in a commercially-available size, by the surface tension of the aqueous solution retained in the ion exchange membrane A, to thereby form a laminate, and the laminate was fitted.

Here, electrolyzer operation was regarded as started.

Thereafter, i.e., after electrolyzer operation, a 10.8 mol/L NaOH aqueous solution was filled to a cathode chamber and a 3.5 mol/L NaCl aqueous solution was filled to an anode chamber, and common salt electrolysis was performed at 90°C. After the electrolysis was stopped, the anode chamber and the cathode chamber were washed with pure water at 50°C. The ion exchange membrane A washed with pure water was in a state of being equalized by pure water. The solution was drained and an electrolytic frame was removed in the state. The ion exchange membrane A was observed, and neither cracking nor splitting was observed.

Even in the case where the electrolytic cell was disassembled, no occurrence of any damages such as bending and wrinkle was confirmed in the electrode for electrolysis, the mattress, and the feed conductor which were stacked.

It was confirmed by consideration with the results of Example 19, and Example 21 described below, that neither the ion exchange membrane A nor the electrode for electrolysis, the mattress and the feed conductor which were stacked were damaged even when brought into contact with pure water at 50°C.

[Example 21]

The ion exchange membrane A produced as mentioned above was immersed in a 1 mol/L NaOH aqueous solution, and thus equalized.

The area of the ion exchange membrane A was here defined as Ai.

The area Ai corresponded to an area in frames of anode side and cathode side gaskets in incorporation of the ion exchange membrane into an electrolyzer.

Thereafter, the resultant was immersed in 3.5 mol/L NaCl aqueous solution and thus equalized, and it was confirmed that the ion exchange membrane A was shrunk.

The area of the ion exchange membrane A was here defined as As.

The area As corresponded to the area Ai, and corresponded to an area in frames of anode side and cathode side gaskets in incorporation of the ion exchange membrane into an electrolyzer.

The area of the ion exchange membrane A satisfied As/Ai = 0.978 under the assumption that Ai = 1 was satisfied in equilibration made by immersion in a 1 mol/L NaOH aqueous solution.

The evaluation results are shown in Table 2 below.

In fact, a laminate was formed by integrating the ion exchange membrane A and the electrode by the surface tension of the aqueous solution, as mentioned above, fitted to an electrolytic cell, and then incorporated into an electrolyzer, and the electrolyzer was operated. Therefore, the ion exchange membrane A was in a state where four sides thereof were fixed by the anode side gasket and the cathode side gasket that were formed from frames opposite to each other. Thus, the shrinkage stress corresponding to the above variation in dimension was in a state of being applied to the ion exchange membrane A.

In the present Example, it was confirmed that the ion exchange membrane A was not split even when assumed to be retained in a state of being fixed to the gaskets.

The ion exchange membrane A having a width of 1250 mm and a length of 2440 mm, which was immersed in a 1 mol/L NaOH aqueous solution and equalized, and the above four electrodes (each size was adjusted so as to have a width of 1120 mm and a length of 2400 mm) were integrated with an electrolyzer in a commercially-available size, by the surface tension of the aqueous solution retained in the ion exchange membrane A, to thereby form a laminate, and the laminate was fitted.

Here, electrolyzer operation was regarded as started.

Thereafter, i.e., after electrolyzer operation, a 3.5 mol/L NaCl aqueous solution was stored in an anode chamber and a cathode chamber to thereby perform filling of the aqueous solution, and the ion exchange membrane A was brought into contact therewith. Thereafter, the solution was drained and an electrolytic frame was removed. The ion exchange membrane A was observed, and neither cracking nor splitting was observed.

Even in the case where the electrolytic cell was disassembled, no occurrence of any damages such as bending and wrinkle was confirmed in the electrode for electrolysis, the mattress, and the feed conductor which were stacked.

[Example 22]

The ion exchange membrane A produced as mentioned above was immersed in a 5 mol/L NaOH aqueous solution, and thus equalized.

The area of the ion exchange membrane A was here defined as Ai.

The area Ai corresponded to an area in frames of anode side and cathode side gaskets in incorporation of the ion exchange membrane into an electrolyzer.

Thereafter, the resultant was immersed in 10.8 mol/L NaOH aqueous solution and thus equalized, and it was confirmed that the ion exchange membrane A was shrunk.

The area of the ion exchange membrane A was here defined as As.

The area As corresponded to the area Ai, and corresponded to an area in frames of anode side and cathode side gaskets in incorporation of the ion exchange membrane into an electrolyzer.

The area of the ion exchange membrane A satisfied As/Ai = 0.983 under the assumption that Ai = 1 was satisfied in equilibration made by immersion in a 5 mol/L NaOH aqueous solution.

The evaluation results are shown in Table 2 below.

In fact, a laminate was formed by integrating the ion exchange membrane A and the electrode by the surface tension of the aqueous solution, as mentioned above, fitted to an electrolytic cell, and then incorporated into an electrolyzer, and the electrolyzer was operated. Therefore, the ion exchange membrane A was in a state where four sides thereof were fixed by the anode side gasket and the cathode side gasket that were formed from frames opposite to each other. Thus, the shrinkage stress corresponding to the above variation in dimension was in a state of being applied to the ion exchange membrane A.

In the present Example, it was confirmed that the ion exchange membrane A was not split even when assumed to be retained in a state of being fixed to the gaskets.

The ion exchange membrane A having a width of 1250 mm and a length of 2440 mm, which was immersed in a 5 mol/L NaOH aqueous solution and equalized, and the above four electrodes (each size was adjusted so as to have a width of 1120 mm and a length of 2400 mm) were integrated with an electrolyzer in a commercially-available size, by the surface tension of the aqueous solution retained in the ion exchange membrane A, to thereby form a laminate, and the laminate was fitted.

Here, electrolyzer operation was regarded as started.

Thereafter, i.e., after electrolyzer operation, a 10.8 mol/L NaOH aqueous solution was stored in an anode chamber and a cathode chamber to thereby perform filling of the aqueous solution, and the ion exchange membrane A was brought into contact therewith. Thereafter, the solution was drained and an electrolytic frame was removed. The ion exchange membrane A was observed, and neither cracking nor splitting was observed.

Even in the case where the electrolytic cell was disassembled, no occurrence of any damages such as bending and wrinkle was confirmed in the electrode for electrolysis, the mattress, and the feed conductor which were stacked.

[Example 23]

The ion exchange membrane A produced as mentioned above was immersed in a 5 mol/L NaOH aqueous solution, and thus equalized.

The area of the ion exchange membrane A was here defined as Ai.

The area Ai corresponded to an area in frames of anode side and cathode side gaskets in incorporation of the ion exchange membrane into an electrolyzer.

Thereafter, the resultant was immersed in pure water at 50°C and thus equalized, and it was confirmed that the ion exchange membrane A was shrunk.

The area of the ion exchange membrane A was here defined as As.

The area As corresponded to the area Ai, and corresponded to an area in frames of anode side and cathode side gaskets in incorporation of the ion exchange membrane into an electrolyzer.

The area of the ion exchange membrane A satisfied As/Ai = 1.086 under the assumption that Ai = 1 was satisfied in equilibration made by immersion in a 5 mol/L NaOH aqueous solution.

The evaluation results are shown in Table 2 below.

In fact, a laminate was formed by integrating the ion exchange membrane A and the electrode by the surface tension of the aqueous solution, as mentioned above, fitted to an electrolytic cell, and then incorporated into an electrolyzer, and the electrolyzer was operated. Therefore, the ion exchange membrane A was in a state where four sides thereof were fixed by the anode side gasket and the cathode side gasket that were formed from frames opposite to each other. Thus, the swelling stress corresponding to the above variation in dimension was in a state of being applied to the ion exchange membrane A, the electrode for electrolysis, the mattress, and the feed conductor.

The ion exchange membrane A having a width of 1250 mm and a length of 2440 mm, which was immersed in a 5 mol/L NaOH aqueous solution and equalized, and the above four electrodes (each size was adjusted so as to have a width of 1120 mm and a length of 2400 mm) were integrated with an electrolyzer in a commercially-available size, by the surface tension of the aqueous solution retained in the ion exchange membrane A, to thereby form a laminate, and the laminate was fitted.

Here, electrolyzer operation was regarded as started.

Thereafter, i.e., after electrolyzer operation, a 10.8 mol/L NaOH aqueous solution was filled to a cathode chamber and a 3.5 mol/L NaCl aqueous solution was filled to an anode chamber, and common salt electrolysis was performed at 90°C. After the electrolysis was stopped, the anode chamber and the cathode chamber were washed with pure water at 50°C. The ion exchange membrane A washed with pure water was in a state of being equalized by pure water. The solution was drained and an electrolytic frame was removed in the state. The ion exchange membrane A was observed, and neither cracking nor splitting was observed.

In the case where the electrolytic cell was disassembled, the electrode for electrolysis, the mattress, and the feed conductor which were stacked were slightly bent, and were wrinkled.

It was confirmed by consideration with the results of Example 22, and Example 24 described below, that neither the ion exchange membrane A nor the electrode for electrolysis, the mattress, and the feed conductor which were stacked were damaged even when brought into contact with pure water at 50°C.

[Example 24]

The ion exchange membrane A produced as mentioned above was immersed in a 5 mol/L NaOH aqueous solution, and thus equalized.

The area of the ion exchange membrane A was here defined as Ai.

The area Ai corresponded to an area in frames of anode side and cathode side gaskets in incorporation of the ion exchange membrane into an electrolyzer.

Thereafter, the resultant was immersed in a 3.5 mol/L NaCl aqueous solution and thus equalized, and it was confirmed that the ion exchange membrane A was shrunk.

The area of the ion exchange membrane A was here defined as As.

The area As corresponded to the area Ai, and corresponded to an area in frames of anode side and cathode side gaskets in incorporation of the ion exchange membrane into an electrolyzer.

The area of the ion exchange membrane A satisfied As/Ai = 1.043 under the assumption that Ai = 1 was satisfied in equilibration made by immersion in a 5 mol/L NaOH aqueous solution.

The evaluation results are shown in Table 2 below.

In fact, a laminate was formed by integrating the ion exchange membrane A and the electrode by the surface tension of the aqueous solution, as mentioned above, fitted to an electrolytic cell, and then incorporated into an electrolyzer, and the electrolyzer was operated. Therefore, the ion exchange membrane A was in a state where four sides thereof were fixed by the anode side gasket and the cathode side gasket that were formed from frames opposite to each other. Thus, the swelling stress corresponding to the above variation in dimension was in a state of being applied to the ion exchange membrane A, the electrode for electrolysis, the mattress, and the feed conductor.

In the present Example, it was confirmed that the ion exchange membrane A was not split even when assumed to be retained in a state of being fixed to the gaskets.

The ion exchange membrane A having a width of 1250 mm and a length of 2440 mm, which was immersed in a 5 mol/L NaOH aqueous solution and equalized, and the above four electrodes (each size was adjusted so as to have a width of 1120 mm and a length of 2400 mm) were integrated with an electrolyzer in a commercially-available size, by the surface tension of the aqueous solution retained in the ion exchange membrane A, to thereby form a laminate, and the laminate was fitted.

Here, electrolyzer operation was regarded as started.

Thereafter, i.e., after electrolyzer operation, a 3.5 mol/L NaCl aqueous solution was stored in an anode chamber and a cathode chamber to thereby perform filling of the aqueous solution, and the ion exchange membrane A was brought into contact therewith. Thereafter, the solution was drained and an electrolytic frame was removed. The ion exchange membrane A was observed, and neither cracking nor splitting was observed.

Even in the case where the electrolytic cell was disassembled, no occurrence of any damages such as bending and wrinkle was confirmed in the electrode for electrolysis, the mattress, and the feed conductor which were stacked.

[Example 25]

The ion exchange membrane A produced as mentioned above was immersed in pure water, and thus equalized.

The area of the ion exchange membrane A was here defined as Ai.

The area Ai corresponded to an area in frames of anode side and cathode side gaskets in incorporation of the ion exchange membrane into an electrolyzer.

Thereafter, the resultant was immersed in 10.8 mol/L NaOH aqueous solution and thus equalized, and it was confirmed that the ion exchange membrane A was shrunk.

The area of the ion exchange membrane A was here defined as As.

The area As corresponded to the area Ai, and corresponded to an area in frames of anode side and cathode side gaskets in incorporation of the ion exchange membrane into an electrolyzer.

The area of the ion exchange membrane A satisfied As/Ai = 0.909 under the assumption that Ai = 1 was satisfied in equilibration made by immersion in pure water.

The evaluation results are shown in Table 2 below.

In fact, a laminate was formed by integrating the ion exchange membrane A and the electrode by the surface tension of the aqueous solution, as mentioned above, fitted to an electrolytic cell, and then incorporated into an electrolyzer, and the electrolyzer was operated. Therefore, the ion exchange membrane A was in a state where four sides thereof were fixed by the anode side gasket and the cathode side gasket that were formed from frames opposite to each other. Thus, the shrinkage stress corresponding to the above variation in dimension was in a state of being applied to the ion exchange membrane A.

In the present Example, it was concerned that the ion exchange membrane A was partially cracked finely at a level not causing splitting when assumed to be retained in a state of being fixed to the gaskets.

The ion exchange membrane A having a width of 1250 mm and a length of 2440 mm, which was immersed in pure water and equalized, and the above four electrodes (each size was adjusted so as to have a width of 1120 mm and a length of 2400 mm) were integrated with an electrolyzer in a commercially-available size, by the surface tension of the aqueous solution retained in the ion exchange membrane A, to thereby form a laminate, and the laminate was fitted.

Here, electrolyzer operation was regarded as started.

Thereafter, i.e., after electrolyzer operation, a 10.8 mol/L NaOH aqueous solution was stored in an anode chamber and a cathode chamber to thereby perform filling of the aqueous solution, and the ion exchange membrane A was brought into contact therewith. Thereafter, the solution was drained and an electrolytic frame was removed. The ion exchange membrane A was observed, and neither cracking nor splitting was observed.

Even in the case where the electrolytic cell was disassembled, no occurrence of any damages such as bending and wrinkle was confirmed in the electrode for electrolysis, the mattress, and the feed conductor which were stacked.

[Example 26]

The ion exchange membrane A produced as mentioned above was immersed in pure water at 25°C, and thus equalized.

The area of the ion exchange membrane A was here defined as Ai.

The area Ai corresponded to an area in frames of anode side and cathode side gaskets in incorporation of the ion exchange membrane into an electrolyzer.

Thereafter, the resultant was immersed in pure water at 50°C and thus equalized, and it was confirmed that the ion exchange membrane A was shrunk.

The area of the ion exchange membrane A was here defined as As.

The area As corresponded to the area Ai, and corresponded to an area in frames of anode side and cathode side gaskets in incorporation of the ion exchange membrane into an electrolyzer.

The area of the ion exchange membrane A satisfied As/Ai = 1.007 under the assumption that Ai = 1 was satisfied in equilibration made by immersion in pure water.

The evaluation results are shown in Table 2 below.

In fact, a laminate was formed by integrating the ion exchange membrane A and the electrode by the surface tension of the aqueous solution, as mentioned above, fitted to an electrolytic cell, and then incorporated into an electrolyzer, and the electrolyzer was operated. Therefore, the ion exchange membrane A was in a state where four sides thereof were fixed by the anode side gasket and the cathode side gasket that were formed from frames opposite to each other. Thus, the swelling stress corresponding to the above variation in dimension was in a state of being applied to the ion exchange membrane A, the electrode for electrolysis, the mattress, and the feed conductor.

The ion exchange membrane A having a width of 1250 mm and a length of 2440 mm, which was immersed in pure water and equalized, and the above four electrodes (each size was adjusted so as to have a width of 1120 mm and a length of 2400 mm) were integrated with an electrolyzer in a commercially-available size, by the surface tension of the aqueous solution retained in the ion exchange membrane A, to thereby form a laminate, and the laminate was fitted.

Here, electrolyzer operation was regarded as started.

Thereafter, i.e., after electrolyzer operation, a 10.8 mol/L NaOH aqueous solution was filled to a cathode chamber and a 3.5 mol/L NaCl aqueous solution was filled to an anode chamber, and common salt electrolysis was performed at 90°C. After the electrolysis was stopped, the anode chamber and the cathode chamber were washed with pure water at 50°C. The ion exchange membrane A washed with pure water was in a state of being equalized by pure water. The solution was drained and an electrolytic frame was removed in the state. The ion exchange membrane A was observed, and neither cracking nor splitting was observed.

The current efficiency was reduced by about 0.5% as compared with those in Examples 2, 5, 8, 11, 14, 17, 20, and 23. The reason for such a reduction in current efficiency was considered because the ion exchange membrane A in an equilibrium state by pure water and the cathode were in contact with each other before electrolysis and thus nickel was eluted from the cathode and deposited on the ion exchange membrane A.

Even in the case where the electrolytic cell was disassembled, no occurrence of any damages such as bending and wrinkle was confirmed in the electrode for electrolysis, the mattress, and the feed conductor which were stacked.

It was confirmed by consideration with the results of Example 25, and Example 27 described below, that neither physical damages of the ion exchange membrane A, such as cracking and splitting, nor damages of the electrode for electrolysis, the mattress, and the feed conductor which were stacked were caused even by contact with pure water at 50°C.

[Example 27]

The ion exchange membrane A produced as mentioned above was immersed in pure water, and thus equalized.

The area of the ion exchange membrane A was here defined as Ai.

The area Ai corresponded to an area in frames of anode side and cathode side gaskets in incorporation of the ion exchange membrane into an electrolyzer.

Thereafter, the resultant was immersed in a 3.5 mol/L NaCl aqueous solution and thus equalized, and it was confirmed that the ion exchange membrane A was shrunk.

The area of the ion exchange membrane A was here defined as As.

The area As corresponded to the area Ai, and corresponded to an area in frames of anode side and cathode side gaskets in incorporation of the ion exchange membrane into an electrolyzer.

The area of the ion exchange membrane A satisfied As/Ai = 0.972 under the assumption that Ai = 1 was satisfied in equilibration made by immersion in pure water.

The evaluation results are shown in Table 2 below.

In fact, a laminate was formed by integrating the ion exchange membrane A and the electrode by the surface tension of the aqueous solution, as mentioned above, fitted to an electrolytic cell, and then incorporated into an electrolyzer, and the electrolyzer was operated. Therefore, the ion exchange membrane A was in a state where four sides thereof were fixed by the anode side gasket and the cathode side gasket that were formed from frames opposite to each other. Thus, the shrinkage stress corresponding to the above variation in dimension was in a state of being applied to the ion exchange membrane A.

The ion exchange membrane A having a width of 1250 mm and a length of 2440 mm, which was immersed in pure water and equalized, and the above four electrodes (each size was adjusted so as to have a width of 1120 mm and a length of 2400 mm) were integrated with an electrolyzer in a commercially-available size, by the surface tension of the aqueous solution retained in the ion exchange membrane A, to thereby form a laminate, and the laminate was fitted.

Here, electrolyzer operation was regarded as started.

Thereafter, i.e., after electrolyzer operation, a 3.5 mol/L NaCl aqueous solution was stored in an anode chamber and a cathode chamber to thereby perform filling of the aqueous solution, and the ion exchange membrane A was brought into contact therewith. Thereafter, the solution was drained and an electrolytic frame was removed. The ion exchange membrane A was observed, and neither cracking nor splitting was observed.

Even in the case where the electrolytic cell was disassembled, no occurrence of any damages such as bending and wrinkle was confirmed in the electrode for electrolysis, the mattress, and the feed conductor which were stacked.

[Example 28 (laminate)]

A laminate was formed by superposing the electrode for electrolysis on the ion exchange membrane A produced as mentioned above.

The laminate was immersed in a 2%NaHCO$_3$ aqueous solution, and thus equalized. The area of the ion exchange membrane A was here defined as Ai.

The area Ai corresponded to an area in frames of anode side and cathode side gaskets in incorporation of the ion exchange membrane into an electrolyzer.

Thereafter, the resultant was immersed in a 10.8 mol/L NaCl aqueous solution and thus equalized, and it was confirmed that only the ion exchange membrane A was shrunk.

The area of the ion exchange membrane A was here defined as As.

The area As corresponded to the area Ai, and corresponded to an area in frames of anode side and cathode side gaskets in incorporation of the ion exchange membrane into an electrolyzer.

The area of the ion exchange membrane A satisfied As/Ai = 0.918 under the assumption that Ai = 1 was satisfied in equilibration made by immersion in a 2%NaHCO$_3$ aqueous solution.

The evaluation results are shown in Table 2 below.

In fact, the laminate was fitted to an electrolytic cell as mentioned above, and then incorporated into an electrolyzer, and the electrolyzer was operated. Therefore, the laminate was in a state where four sides thereof were fixed by the anode side gasket and the cathode side gasket that were formed from frames opposite to each other. Thus, the shrinkage stress corresponding to the above variation in dimension was in a state of being applied to the ion exchange membrane A.

In the present Example, it was confirmed that the laminate was not split even when assumed to be retained in a state of being fixed to the gaskets.

The ion exchange membrane A having a width of 1250 mm and a length of 2440 mm, which was immersed in a 2%NaHCO$_3$ aqueous solution and equalized, and the above four electrodes (each size was adjusted so as to have a width of 1120 mm and a length of 2400 mm) were integrated with an electrolyzer in a commercially-available size, by the surface tension of the aqueous solution retained in the ion exchange membrane A, to thereby form a laminate, and the laminate was fitted.

Here, electrolyzer operation was regarded as started.

Thereafter, i.e., after electrolyzer operation, a 10.8 mol/L NaOH aqueous solution was stored in an anode chamber and a cathode chamber to thereby perform filling of the aqueous solution, and the ion exchange membrane A was brought into contact therewith. Thereafter, the solution was drained and an electrolytic frame was removed. The ion exchange membrane A was observed, and neither cracking nor splitting was observed.

Even in the case where the electrolytic cell was disassembled, no occurrence of any damages such as bending and wrinkle was confirmed in the laminate, the mattress, and the feed conductor.

[Example 29 (laminate)]

A laminate was formed by superposing the electrode for electrolysis on the ion exchange membrane A produced as mentioned above.

The laminate was immersed in a 0.1 mol/L NaOH aqueous solution, and thus equalized. The area of the ion exchange membrane A was here defined as Ai.

The area Ai corresponded to an area in frames of anode side and cathode side gaskets in incorporation of the ion exchange membrane into an electrolyzer.

Thereafter, the resultant was immersed in a 10.8 mol/L NaOH aqueous solution and thus equalized, and it was confirmed that only the ion exchange membrane A was shrunk.

The area of the ion exchange membrane A was here defined as As.

The area As corresponded to the area Ai, and corresponded to an area in frames of anode side and cathode side gaskets in incorporation of the ion exchange membrane into an electrolyzer.

The area of the ion exchange membrane A satisfied As/Ai = 0.918 under the assumption that Ai = 1 was satisfied in equilibration made by immersion in a 0.1 mol/L NaOH aqueous solution.

The evaluation results are shown in Table 2 below.

In fact, the laminate was fitted to an electrolytic cell as mentioned above, and then incorporated into an electrolyzer, and the electrolyzer was operated. Therefore, the laminate was in a state where four sides thereof were fixed by the anode side gasket and the cathode side gasket that were formed from frames opposite to each other. Thus, the shrinkage stress corresponding to the above variation in dimension was in a state of being applied to the ion exchange membrane A.

In the present Example, it was confirmed that the laminate was not split even when assumed to be retained in a state of being fixed to the gaskets.

The ion exchange membrane A having a width of 1250 mm and a length of 2440 mm, which was immersed in a 0.1 mol/L NaOH aqueous solution and equalized, and the above four electrodes (each size was adjusted so as to have a width of 1120 mm and a length of 2400 mm) were integrated with an electrolyzer in a commercially-available size, by the surface tension of the aqueous solution retained in the ion exchange membrane A, to thereby form a laminate, and the laminate was fitted.

Here, electrolyzer operation was regarded as started.

Thereafter, i.e., after electrolyzer operation, a 10.8 mol/L NaOH aqueous solution was stored in an anode chamber and a cathode chamber to thereby perform filling of the aqueous solution, and the ion exchange membrane A was brought into contact therewith. Thereafter, the solution was drained and an electrolytic frame was removed. The ion exchange membrane A was observed, and neither cracking nor splitting was observed.

Even in the case where the electrolytic cell was disassembled, no occurrence of any damages such as bending and wrinkle was confirmed in the laminate, the mattress, and the feed conductor.

[Comparative Example 1]

The ion exchange membrane A produced as mentioned above was immersed in a 10.8 mol/L NaOH aqueous solution, and thus equalized.

The area of the ion exchange membrane was here defined as Ai.

Thereafter, the resultant was immersed in pure water at 50°C and thus equalized, and it was confirmed that the ion exchange membrane A was swollen.

The area of the ion exchange membrane A was here defined as As.

The area of the ion exchange membrane A satisfied As/Ai = 1.104 under the assumption that Ai = 1 was satisfied in equilibration made by immersion in a 10.8 mol/L NaOH aqueous solution.

The evaluation results are shown in Table 3 below.

In fact, a laminate was formed by integrating the ion exchange membrane A and the electrode by the surface tension of the aqueous solution, as mentioned above, fitted to an electrolytic cell, and then incorporated into an electrolyzer, and the electrolyzer was operated. Therefore, the ion exchange membrane A was in a state where four sides thereof were fixed by the anode side gasket and the cathode side gasket that were formed from frames opposite to each other. Thus, the swelling stress corresponding to the above variation in dimension was in a state of being applied to the ion exchange membrane A, the electrode for electrolysis, the mattress, and the feed conductor.

The ion exchange membrane A having a width of 1250 mm and a length of 2440 mm, which was immersed in a 10.8 mol/L NaOH aqueous solution and equalized, and the above four electrodes (each size was adjusted so as to have a width of 1120 mm and a length of 2400 mm) were integrated with an electrolyzer in a commercially-available size, by the surface tension of the aqueous solution retained in the ion exchange membrane A, to thereby form a laminate, and the laminate was fitted.

Here, electrolyzer operation was regarded as started.

Thereafter, i.e., after electrolyzer operation, a 10.8 mol/L NaOH aqueous solution was filled to a cathode chamber and a 3.5 mol/L NaCl aqueous solution was filled to an anode chamber, and common salt electrolysis was performed at 90°C. After the electrolysis was stopped, the anode chamber and the cathode chamber were washed with pure water at 50°C. The ion exchange membrane A washed with pure water was in a state of being equalized by pure water. The solution was drained and an electrolytic frame was removed in the state. In the case where the electrolytic cell was disassembled, damages such as bending and wrinkle occurred in the electrode for electrolysis, the mattress, and the feed conductor which were stacked.

It was confirmed by consideration with the results of Examples 2, 5, 8, 11, 14, 17, 20, 24, and 26 that, in the case where the concentration of the equilibrium liquid before fitting was too high, the electrode for electrolysis, the mattress, and the feed conductor which were stacked were damaged when brought into contact with pure water at 50°C.

[Comparative Example 2]

The ion exchange membrane A produced as mentioned above was immersed in a 14.5 mol/L NaOH aqueous solution, and thus equalized.

The area of the ion exchange membrane was here defined as Ai.

Thereafter, the resultant was immersed in pure water at 50°C and thus equalized, and it was confirmed that the ion exchange membrane A was swollen.

The area of the ion exchange membrane A was here defined as As.

The area of the ion exchange membrane A satisfied As/Ai = 1.150 under the assumption that Ai = 1 was satisfied in equilibration made by immersion in a 14.5 mol/L NaOH aqueous solution.

The evaluation results are shown in Table 3 below.

In fact, a laminate was formed by integrating the ion exchange membrane A and the electrode by the surface tension of the aqueous solution, as mentioned above, fitted to an electrolytic cell, and then incorporated into an electrolyzer, and the electrolyzer was operated. Therefore, the ion exchange membrane A was in a state where four sides thereof were fixed by the anode side gasket and the cathode side gasket that were formed from frames opposite to each other. Thus, the swelling stress corresponding to the above variation in dimension was in a state of being applied to the ion exchange membrane A, the electrode for electrolysis, the mattress, and the feed conductor.

The ion exchange membrane A having a width of 1250 mm and a length of 2440 mm, which was immersed in a 14.5 mol/L NaOH aqueous solution and equalized, and the above four electrodes (each size was adjusted so as to have a width of 1120 mm and a length of 2400 mm) were integrated with an electrolyzer in a commercially-available size, by the surface tension of the aqueous solution retained in the ion exchange membrane A, to thereby form a laminate, and the laminate was fitted

Here, electrolyzer operation was regarded as started.

Thereafter, i.e., after electrolyzer operation, a 10.8 mol/L NaOH aqueous solution was filled to a cathode chamber and a 3.5 mol/L NaCl aqueous solution was filled to an anode chamber, and common salt electrolysis was performed at 90°C. After the electrolysis was stopped, the anode chamber and the cathode chamber were washed with pure water at 50°C. The ion exchange membrane A washed with pure water was in a state of being equalized by pure water. The solution was drained and an electrolytic frame was removed in the state. In the case where the electrolytic cell was disassembled, damages such as bending and wrinkle occurred in the electrode for electrolysis, the mattress, and the feed conductor which were stacked.

It was confirmed by consideration with the results of Examples 2, 5, 8, 11, 14, 17, 20, 24, and 26 that, in the case where the concentration of the equilibrium liquid before fitting was too high, the electrode for electrolysis, the mattress, and the feed conductor which were stacked were damaged when brought into contact with pure water at 50°C.

[Comparative Example 3]

The ion exchange membrane A produced as mentioned above was immersed in a 18.3 mol/L NaOH aqueous solution, and thus equalized.

The area of the ion exchange membrane was here defined as Ai.

Thereafter, the resultant was immersed in pure water at 50°C and thus equalized, and it was confirmed that the ion exchange membrane A was swollen.

The area of the ion exchange membrane A was here defined as As.

The area of the ion exchange membrane A satisfied As/Ai = 1.162 under the assumption that Ai = 1 was satisfied in equilibration made by immersion in a 18.3 mol/L NaOH aqueous solution.

The evaluation results are shown in Table 3 below.

In fact, a laminate was formed by integrating the ion exchange membrane A and the electrode by the surface tension of the aqueous solution, as mentioned above, fitted to an electrolytic cell, and then incorporated into an electrolyzer, and the electrolyzer was operated. Therefore, the ion exchange membrane A was in a state where four sides thereof were fixed by the anode side gasket and the cathode side gasket that were formed from frames opposite to each other. Thus, the swelling stress corresponding to the above variation in dimension was in a state of being applied to the ion exchange membrane A, the electrode for electrolysis, the mattress, and the feed conductor.

The ion exchange membrane A having a width of 1250 mm and a length of 2440 mm, which was immersed in a 18.3 mol/L NaOH aqueous solution and equalized, and the above four electrodes (each size was adjusted so as to have a width of 1120 mm and a length of 2400 mm) were integrated with an electrolyzer in a commercially-available size, by the surface tension of the aqueous solution retained in the ion exchange membrane A, to thereby form a laminate, and the laminate was fitted

Here, electrolyzer operation was regarded as started.

Thereafter, i.e., after electrolyzer operation, a 10.8 mol/L NaOH aqueous solution was filled to a cathode chamber and a 3.5 mol/L NaCl aqueous solution was filled to an anode chamber, and common salt electrolysis was performed at 90°C. After the electrolysis was stopped, the anode chamber and the cathode chamber were washed with pure water at 50°C. The ion exchange membrane A washed with pure water was in a state of being equalized by pure water. The solution was drained and an electrolytic frame was removed in the state. In the case where the electrolytic cell was disassembled, damages such as bending and wrinkle occurred in the electrode for electrolysis, the mattress, and the feed conductor which were stacked.

It was confirmed by consideration with the results of Examples 2, 5, 8, 11, 14, 17, 20, 24, and 26 that, in the case where the concentration of the equilibrium liquid before fitting was too high, the electrode for electrolysis, the mattress, and the feed conductor which were stacked were damaged when brought into contact with pure water at 50°C.

[Comparative Example 4]

The ion exchange membrane A produced as mentioned above was immersed in pure water, and thus equalized.

The area of the ion exchange membrane was here defined as Ai.

Thereafter, the resultant was immersed in a 14.5 mol/L NaOH aqueous solution and thus equalized, and it was confirmed that the ion exchange membrane A was swollen.

The area of the ion exchange membrane A was here defined as As.

The area of the ion exchange membrane A satisfied As/Ai = 0.870 under the assumption that Ai = 1 was satisfied in equilibration made by immersion in pure water.

The evaluation results are shown in Table 3 below.

In fact, a laminate was formed by integrating the ion exchange membrane A and the electrode by the surface tension of the aqueous solution, as mentioned above, fitted to an electrolytic cell, and then incorporated into an electrolyzer, and the electrolyzer was operated. Therefore, the ion exchange membrane A was in a state where four sides thereof were fixed by the anode side gasket and the cathode side gasket that were formed from frames opposite to each other. Thus, the shrinkage stress corresponding to the above variation in dimension was in a state of being applied to the ion exchange membrane A, the electrode for electrolysis, the mattress, and the feed conductor.

In the present Comparative Example, it was concerned that the ion exchange membrane A was partially cracked and thus split when assumed to be retained in a state of being fixed to the gaskets.

The ion exchange membrane A having a width of 1250 mm and a length of 2440 mm, which was equalized by pure water, was fitted to an electrolyzer in a commercially-available size.

Here, electrolyzer operation was regarded as started.

Thereafter, i.e., after electrolyzer operation, a 14.5 mol/L sodium hydroxide aqueous solution was stored in an anode chamber and a cathode chamber to thereby perform filling of the aqueous solution, and the ion exchange membrane A was brought into contact therewith. Thereafter, the solution was drained and an electrolytic frame was removed. The ion exchange membrane A was observed, and cracking was partially observed.

In the case where the electrolytic cell was disassembled, no occurrence of any damages such as bending and wrinkle was observed in the electrode for electrolysis, the mattress, and the feed conductor which were stacked.

It was confirmed by consideration with the results of Example 25 that, in the case where the concentration of the aqueous solution contacted after electrolyzer operation was too high, the occurrence of any damage was caused in the ion exchange membrane A.

[Comparative Example 5]

The ion exchange membrane A produced as mentioned above was immersed in pure water, and thus equalized.

The area of the ion exchange membrane was here defined as Ai.

Thereafter, the resultant was immersed in a 18.3 mol/L NaOH aqueous solution and thus equalized, and it was confirmed that the ion exchange membrane A was swollen.

The area of the ion exchange membrane A was here defined as As.

The area of the ion exchange membrane A satisfied As/Ai = 0.861 under the assumption that Ai = 1 was satisfied in equilibration made by immersion in pure water.

The evaluation results are shown in Table 3 below.

In fact, a laminate was formed by integrating the ion exchange membrane A and the electrode by the surface tension of the aqueous solution, as mentioned above, fitted to an electrolytic cell, and then incorporated into an electrolyzer, and the electrolyzer was operated. Therefore, the ion exchange membrane A was in a state where four sides thereof were fixed by the anode side gasket and the cathode side gasket that were formed from frames opposite to each other. Thus, the shrinkage stress corresponding to the above variation in dimension was in a state of being applied to the ion exchange membrane A, the electrode for electrolysis, the mattress, and the feed conductor.

In the present Comparative Example, it was concerned that the ion exchange membrane A was partially cracked and thus split when assumed to be retained in a state of being fixed to the gaskets.

The ion exchange membrane A having a width of 1250 mm and a length of 2440 mm, which was equalized by pure water, was fitted to an electrolyzer in a commercially-available size.

Here, electrolyzer operation was regarded as started.

Thereafter, i.e., after electrolyzer operation, a 18.3 mol/L sodium hydroxide aqueous solution was stored in an anode chamber and a cathode chamber to thereby perform filling of the aqueous solution, and the ion exchange membrane A was brought into contact therewith. Thereafter, the solution was drained and an electrolytic frame was removed. The ion exchange membrane A was observed, and cracking was partially observed.

In the case where the electrolytic cell was disassembled, no occurrence of any damages such as bending and wrinkle was observed in the electrode for electrolysis, the mattress, and the feed conductor which were stacked.

It was confirmed by consideration with the results of Example 25 that, in the case where the concentration of the aqueous solution contacted after electrolyzer operation was too high, the occurrence of any damage was caused in the ion exchange membrane A.

[Comparative Example 6(laminate)]

A laminate was formed by superposing the electrode for electrolysis on the ion exchange membrane A produced as mentioned above. The laminate was immersed in pure water, and thus equalized. The area of the ion exchange membrane A was here defined as Ai.

The area Ai corresponded to an area in frames of anode side and cathode side gaskets in incorporation of the ion exchange membrane into an electrolyzer.

Thereafter, the resultant was immersed in a 14.5 mol/L NaOH aqueous solution and thus equalized, and it was confirmed that only the ion exchange membrane A was shrunk.

The area of the ion exchange membrane A was here defined as As.

The area As corresponded to the area Ai, and corresponded to an area in frames of anode side and cathode side gaskets in incorporation of the ion exchange membrane into an electrolyzer.

The area of the ion exchange membrane A satisfied As/Ai = 0.870 under the assumption that Ai = 1 was satisfied in equilibration made by immersion in pure water.

The evaluation results are shown in Table 3 below.

In fact, the laminate was fitted to an electrolytic cell as mentioned above, and then incorporated into an electrolyzer, and the electrolyzer was operated. Therefore, the laminate was in a state where four sides thereof were fixed by the anode side gasket and the cathode side gasket that were formed from frames opposite to each other. Thus, the shrinkage stress corresponding to the above variation in dimension was in a state of being applied to the ion exchange membrane A.

In the present Comparative Example, it was concerned that the ion exchange membrane A was partially cracked and thus split when assumed to be retained in a state of being fixed to the gaskets.

The ion exchange membrane A having a width of 1250 mm and a length of 2440 mm, which was immersed in pure water and equalized, and the above four electrodes (each size was adjusted so as to have a width of 1120 mm and a length of 2400 mm) were integrated with an electrolyzer in a commercially-available size, by the surface tension of the aqueous solution retained in the ion exchange membrane A, to thereby form a laminate, and the laminate was fitted.

Here, electrolyzer operation was regarded as started.

Thereafter, i.e., after electrolyzer operation, a 14.5 mol/L NaOH aqueous solution was stored in an anode chamber and a cathode chamber to thereby perform filling of the aqueous solution, and the ion exchange membrane A was brought into contact therewith. Thereafter, the solution was drained and an electrolytic frame was removed. The ion exchange membrane A was observed, and cracking was partially observed.

In the case where the electrolytic cell was disassembled, no damages such as bending and wrinkle were observed in the laminate, the mattress, and the feed conductor.

It was confirmed by consideration with the results of Example 25 that, in the case where the concentration of the aqueous solution contacted after electrolyzer operation was too high, the occurrence of any damage was caused in the ion exchange membrane A.

[Comparative Example 7(laminate)]

A laminate was formed by superposing the electrode for electrolysis on the ion exchange membrane A produced as mentioned above. The laminate was immersed in pure water, and thus equalized. The area of the ion exchange membrane A was here defined as Ai.

The area Ai corresponded to an area in frames of anode side and cathode side gaskets in incorporation of the ion exchange membrane into an electrolyzer.

Thereafter, the resultant was immersed in a 18.3 mol/L NaOH aqueous solution and thus equalized, and it was confirmed that only the ion exchange membrane A was shrunk.

The area of the ion exchange membrane A was here defined as As.

The area As corresponded to the area Ai, and corresponded to an area in frames of anode side and cathode side gaskets in incorporation of the ion exchange membrane into an electrolyzer.

The area of the ion exchange membrane A satisfied As/Ai = 0.860 under the assumption that Ai = 1 was satisfied in equilibration made by immersion in pure water.

The evaluation results are shown in Table 3 below.

In fact, the laminate was fitted to an electrolytic cell as mentioned above, and then incorporated into an electrolyzer, and the electrolyzer was operated. Therefore, the laminate was in a state where four sides thereof were fixed by the anode side gasket and the cathode side gasket that were formed from frames opposite to each other. Thus, the shrinkage stress corresponding to the above variation in dimension was in a state of being applied to the ion exchange membrane A.

In the present Example, it was concerned that the ion exchange membrane A was partially cracked and thus split when assumed to be retained in a state of being fixed to the gaskets.

The ion exchange membrane A having a width of 1250 mm and a length of 2440 mm, which was immersed in pure water and equalized, and the above four electrodes (each size was adjusted so as to have a width of 1120 mm and a length of 2400 mm) were integrated with an electrolyzer in a commercially-available size, by the surface tension of the aqueous solution retained in the ion exchange membrane A, to thereby form a laminate, and the laminate was fitted.

Here, electrolyzer operation was regarded as started.

Thereafter, i.e., after electrolyzer operation, a 18.3 mol/L NaOH aqueous solution was stored in an anode chamber and a cathode chamber to thereby perform filling of the aqueous solution, and the ion exchange membrane A was brought into contact therewith. Thereafter, the solution was drained and an electrolytic frame was removed. The ion exchange membrane A was observed, and cracking was partially observed.

In the case where the electrolytic cell was disassembled, no damages such as bending and wrinkle were observed in the laminate, the mattress, and the feed conductor.

It was confirmed by consideration with the results of Example 25 that, in the case where the concentration of the aqueous solution contacted after electrolyzer operation was too high, the occurrence of any damage was caused in the ion exchange membrane A.

[Table 1]

| | Equilibrium liquid before fitting | Aqueous solution contacted after electrolyzer operation | Water washing liquid | As/Ai |
|---|---|---|---|---|
| Example 1 | 2%NaHCO$_3$ | 10.8mol/l NaOH | - | 0.917 |
| Example 2 | | Anode side: 3.5mol/l, Cathode side NaCl 10.8mol/l NaOH | 50°C Pure water | 1.010 |
| Example 3 | | 3.5mol/l NaCl | - | 0.973 |
| Example 4 | 0.00001 mol/l NaOH | 10.8mol/l NaOH | - | 0.917 |
| Example 5 | | Anode side: 3.5mol/l, Cathode side NaCl 10.8mol/l NaOH | 50°C Pure water | 1.008 |
| Example 6 | | 3.5mol/l NaCl | - | 0.972 |
| Example 7 | 0.0001 mol/l NaOH | 10.8mol/l NaOH | - | 0.915 |
| Example 8 | | Anode side: 3.5mol/l, Cathode side NaCl 10.8mol/l NaOH | 50°C Pure water | 1.008 |
| Example 9 | | 3.5mol/l NaCl | - | 0.970 |
| Example 10 | 0.001 mol/l NaOH | 10.8mol/l NaOH | - | 0.917 |
| Example 11 | | Anode side: 3.5mol/l, Cathode side NaCl 10.8mol/l NaOH | 50°C Pure water | 1.007 |
| Example 12 | | 3.5mol/l NaCl | - | 0.967 |
| Example 13 | 0.01 mol/l NaOH | 10.8mol/l NaOH | - | 0.918 |
| Example 14 | | Anode side: 3.5mol/l, Cathode side NaCl 10.8mol/l NaOH | 50°C Pure water | 1.010 |
| Example 15 | | 3.5mol/l NaCl | - | 0.970 |

[Table 2]

| | Equilibrium liquid before fitting | Aqueous solution contacted after electrolyzer operation | Water washing liquid | As/Ai |
|---|---|---|---|---|
| Example 16 | 0.1 mol/l NaOH | 10.8mol/l NaOH | - | 0.918 |
| Example 17 | | Anode side: 3.5mol/l, Cathode side NaCl 10.8mol/l NaOH | 50°C Pure water | 1.013 |
| Example 18 | | 3.5mol/l NaCl | - | 0.973 |
| Example 19 | 1 mol/l NaOH | 10.8mol/l NaOH | - | 0.923 |
| Example 20 | | Anode side: 3.5mol/l, Cathode side NaCl 10.8mol/l NaOH | 50°C Pure water | 1.021 |
| Example 21 | | 3.5mol/l NaCl | - | 0.978 |
| Example 22 | 5 mol/l NaOH | 10.8mol/l NaOH | - | 0.983 |
| Example 23 | | Anode side: 3.5mol/l, Cathode side NaCl 10.8mol/l NaOH | 50°C Pure water | 1.086 |
| Example 24 | | 3.5mol/l NaCl | - | 1.043 |

(continued)

| | Equilibrium liquid before fitting | Aqueous solution contacted after electrolyzer operation | Water washing liquid | As/Ai |
|---|---|---|---|---|
| Example 25 | Pure water | 10.8mol/l NaOH | - | 0.909 |
| Example 26 | | Anode side: 3.5mol/l, Cathode side NaCl 10.8mol/l NaOH | 50°C Pure water | 1.007 |
| Example 27 | | 3.5mol/l NaCl | - | 0.972 |
| Example 28 | 2%NaHCO3 | 10.8mol/l NaOH | - | 0.918 |
| Example 29 | 0.1 mol/l NaOH | 10.8mol/l NaOH | - | 0.918 |

[Table 3]

| | Equilibrium liquid before fitting | Aqueous solution contacted after electrolyzer operation | Water washing liquid | As/Ai |
|---|---|---|---|---|
| Comparative Example 1 | 10.8 mol/l NaOH | Anode side: 3.5mol/l, Cathode side NaCl 10.8mol/l NaOH | 50°C Pure water | 1.104 |
| Comparative Example 2 | 14.5 mol/l NaOH | Anode side: 3.5mol/l, Cathode side NaCl 10.8mol/l NaOH | 50°C Pure water | 1.150 |
| Comparative Example 3 | 18.3 mol/l NaOH | Anode side: 3.5mol/l, Cathode side NaCl 10.8mol/l NaOH | 50°C Pure water | 1.162 |
| Comparative Example 4 | Pure water | 14.5 mol/l NaOH | - | 0.870 |
| Comparative Example 5 | | 18.3 mol/l NaOH | - | 0.861 |
| Comparative Example 6 | Pure water | 14.5 mol/l NaOH | - | 0.870 |
| Comparative Example 7 | | 18.3 mol/l NaOH | - | 0.861 |

While the variation between the dimension of the membrane during incorporation into the electrolyzer and the dimension of the membrane after electrolyzer operation in each Example was in any acceptable range in terms of the strength of the membrane, and the strengths of the electrode for electrolysis, the mattress and the feed conductor, the variation in dimension in each Comparative Example was out of such any acceptable range.

The present application is based on Japanese Patent Application (Japanese Patent Application No. 2018-177382) filed on September 21, 2018 with JPO, the content of which is herein incorporated by reference.

Industrial Applicability

The present invention relates to a method for renewing an electrode for electrolysis and a membrane in an electrolyzer, and has an industrial applicability.

Reference Signs List

Reference Signs List for Figure 1

10 ... substrate for electrode for electrolysis
20 ... first layer with which the substrate is covered

30 ... second layer
101 ... electrode for electrolysis

Reference Signs List for Figure 2

1 ... ion exchange membrane
1a ... membrane body
2 ... carboxylic acid layer
3 ... sulfonic acid layer
4 ... reinforcement core material
11a, 11b ... coating layer

Reference Signs List for Figure 3

21a, 21b ... reinforcement core material

Reference Signs List for Figures 4(a) and (b)

52 ... reinforcement yarn
504 ... continuous hole
504a ... sacrifice yarn

Reference signs list for Figures 5 to 9

4 ... electrolyzer
5 ... press device
6 ... cathode terminal
7 ... anode terminal
11 ... anode
12 ... anode gasket
13 ... cathode gasket
18 ... reverse current absorber
18a ... substrate
18b ... reverse current absorbing layer
19 ... bottom of anode chamber
21 ... cathode
22 ... metal elastic body
23 ... collector
24 ... support
50 ... electrolytic cell
60 ... anode chamber
51 ... ion exchange membrane (membrane)
70 ... cathode chamber
80 ... partition wall
90 ... cathode structure for electrolysis

**Claims**

1. A method for producing a new electrolyzer by incorporating a laminate comprising an electrode for electrolysis and a new membrane, or only a new membrane, into an existing electrolyzer comprising an anode, a cathode that is opposed to the anode, and a membrane arranged between the anode and the cathode , wherein

the new membrane used satisfies an As/Ai of more than 0.87 and less than 1.1,
wherein, with respect to an area of the new membrane corresponding to an area in frames of an anode side gasket and a cathode side gasket that are formed from frames opposite to each other in an electrolyzer,
Ai represents an area equalized by an equilibrium liquid in incorporation into an electrolyzer and
As represents an area equalized by an aqueous solution after electrolyzer operation.

2. The method for producing the electrolyzer according to claim 1, comprising a step of forming a laminate comprising the electrode for electrolysis and the new membrane, wherein
the step of forming the laminate is performed outside the existing electrolyzer into which the laminate is to be incorporated, and
the laminate is integrally incorporated into the existing electrolyzer.

3. The method for producing the electrolyzer according to claim 1 or 2, comprising a step of allowing the new membrane to be in an equilibrium state by the equilibrium liquid at a stage before incorporation of the laminate or new membrane into the existing electrolyzer, incorporating the laminate or new membrane into the existing electrolyzer, and bringing the resultant into contact with the laminate or new membrane by use of an aqueous solution different from the equilibrium liquid, after electrolyzer operation.

4. The method for producing the electrolyzer according to any one of claims 1 to 3, wherein the equilibrium liquid is a 0.00001 to 25 mol/L NaOH aqueous solution.

5. The method for producing the electrolyzer according to any one of claims 1 to 3, wherein the equilibrium liquid is a 0.04 to 1.5 mol/L NaHCO$_3$ aqueous solution.

6. The method for producing the electrolyzer according to any one of claims 1 to 5, wherein the aqueous solution is pure water and a temperature of the pure water is 15 to 65°C.

7. The method for producing the electrolyzer according to any one of claims 1 to 6, comprising a step of selecting the new membrane that satisfies an As/Ai of more than 0.87 and less than 1.1.

8. A laminate for use in the method for producing an electrolyzer according to any one of claims 1 to 7, comprising an electrode for electrolysis and a new membrane, wherein
the new membrane satisfies an As/Ai of more than 0.87 and less than 1.1,
wherein, with respect to an area of the new membrane corresponding to an area in frames of an anode side gasket and a cathode side gasket that are formed from frames opposite to each other in an electrolyzer,
Ai represents an area equalized by an equilibrium liquid in incorporation into an electrolyzer and
As represents an area equalized by an aqueous solution after electrolyzer operation.

9. An electrolyzer comprising
an anode,
an anode frame that supports the anode,
an anode side gasket that is arranged on the anode frame,
a cathode that is opposed to the anode,
a cathode frame that supports the cathode,
a cathode side gasket that is arranged on the cathode frame and is opposed to the anode side gasket, and
a laminate comprising an electrode for electrolysis and a membrane, wherein
the membrane satisfies an As/Ai of more than 0.87 and less than 1.1,
wherein, with respect to an area of the membrane corresponding to an area in frames of the anode side and cathode side gaskets,
Ai represents an area equalized by an equilibrium liquid in incorporation of the laminate into an electrolyzer and As represents an area equalized by an aqueous solution after electrolyzer operation.

10. A method for operating an electrolyzer comprising an anode,
an anode frame that supports the anode,
an anode side gasket that is arranged on the anode frame,
a cathode that is opposed to the anode,
a cathode frame that supports the cathode,
a cathode side gasket that is arranged on the cathode frame and is opposed to the anode side gasket, and

a laminate comprising an electrode for electrolysis and a membrane, or a membrane arranged between the anode and the cathode, the method comprising

a step of allowing a membrane for renewal to be in an equilibrium state by an equilibrium liquid that is a 0.00001 to 25 mol/L NaOH aqueous solution or a 0.04 to 1.5 mol/L NaHCO$_3$ aqueous solution,

a step of incorporating the membrane or laminate that is allowed to be in an equilibrium state by the equilibrium liquid, into an electrolyzer and sandwiching and fixing the resultant between the anode side gasket and the cathode side gasket, and

a step of operating an electrolyzer and washing the membrane by an aqueous solution different from the equilibrium liquid, after electrolyzer operation, to provide an equilibrium state.

11. A method for operating an electrolyzer comprising an anode,

an anode frame that supports the anode,

an anode side gasket that is arranged on the anode frame,

a cathode that is opposed to the anode,

a cathode frame that supports the cathode,

a cathode side gasket that is arranged on the cathode frame and is opposed to the anode side gasket, and

a membrane arranged between the anode and the cathode, the method comprising

a step of allowing a membrane for renewal to be in an equilibrium state by an equilibrium liquid,

a step of incorporating the membrane or a laminate of the membrane and an electrode for electrolysis stacked, which is allowed in an equilibrium state by the equilibrium liquid, into an electrolyzer and sandwiching and fixing the resultant between the anode side gasket and the cathode side gasket, and

a step of operating an electrolyzer and allowing the membrane to be in an equilibrium state by an aqueous solution, after electrolyzer operation, wherein

As/Ai is more than 0.87 and less than 1.1,

wherein, with respect to an area of the membrane corresponding to an area in frames of the anode side and cathode side gaskets corresponding to each other in the electrolyzer, Ai represents an area equalized by the equilibrium liquid in incorporation into the electrolyzer and As represents an area equalized by the aqueous solution after electrolyzer operation.

Fig.1

Fig.2

Fig.3

Fig.4

Fig.5

Fig.6

Fig.7

Fig.8

(B) = (A) − (C)
(B)/(A) = ((A) − (C))/(A)

Fig.9

(A)

(B)

## INTERNATIONAL SEARCH REPORT

| International application No. |
|---|
| PCT/JP2019/035847 |

| A. CLASSIFICATION OF SUBJECT MATTER |
|---|
| Int.Cl. C25B15/02(2006.01)i, C25B9/08(2006.01)i, C25B13/02(2006.01)i |

According to International Patent Classification (IPC) or to both national classification and IPC

| B. FIELDS SEARCHED |
|---|
| Minimum documentation searched (classification system followed by classification symbols) |
| Int.Cl. C25B15/02, C25B9/08, C25B13/02 |

| Documentation searched other than minimum documentation to the extent that such documents are included in the fields searched | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| Y | WO 2017/154925 A1 (AGC INC.) 14 September 2017, claims 9, 12-14, paragraphs [0066], [0067], [0072]-[0093] & CN 108699712 A | 1-11 |
| Y | WO 2018/168863 A1 (ASAHI KASEI CORPORATION) 20 September 2018, paragraphs [0022], [0086]-[0088], fig. 3-5 & KR 10-2019-0105088 A & TW 201837236 A | 1-11 |
| Y | JP 2014-148709 A (NITTO DENKO CORP.) 21 August 2014, claim 1, paragraphs [0064], [0076] & WO 2014/119208 A1 | 6-8 |

☒ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 November 2019 (26.11.2019) | 10 December 2019 (10.12.2019) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2019/035847

C (Continuation).   DOCUMENTS CONSIDERED TO BE RELEVANT

| Category* | Citation of document, with indication, where appropriate, of the relevant passages | Relevant to claim No. |
|---|---|---|
| A | US 5500104 A (WANG, Guo C.) 19 March 1996, whole document & CN 1091478 A | 1-11 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S58048686 A
- JP S55148775 A
- WO 2013183584 A
- WO 2016203701 A
- JP 2018177382 A